# EUROPEAN PATENT APPLICATION

(11) **EP 4 455 252 A1**
(43) Date of publication of application: **30.10.2024**
(21) Application number: 24171320.5
(22) Date of filing: 19.04.2024
(51) Int. Cl.: C10L 5/04, C10L 9/08

(54) **CARBONIZED UPGRADED COAL, GRAPHITE, AND METHODS OF MAKING THE SAME**

(30) Priority: 28.04.2023 US 202318309339
(71) Applicant: Energy & Environmental Research Center Foundation, Grand Forks, North Dakota 58202-9017 (US)
(72) Inventor: AZENKENG, Alexander, Grand Forks, 58203 (US); LAUMB, Jason D., Grand Forks, 58201 (US)
(74) Representative: Forresters IP LLP

(57) **Abstract**

A method of forming graphite includes carbonizing an upgraded coal, to form a carbonized upgraded coal. The method also includes graphitizing the carbonized upgraded coal, to form the graphite.

## Description

### STATEMENT OF GOVERNMENT SUPPORT

This invention was made with Government support under Contract No. DE-FE0031881 awarded by the U.S. Department of Energy. The U.S. Government has certain rights in this invention.

### CROSS-REFERENCE TO RELATED APPLICATION

This application is a continuation-in-part of, and claims the benefit of priority to, U.S. Patent Application Serial No. 17/931,720 filed 9/13/2022, which is a continuation-in-part of, and claims the benefit of priority to, U.S. Patent Application Serial No. 17/445,870 filed 8/25/2021, which claims the benefit of priority to U.S. Provisional Patent Application Serial No. 62/706,620 filed 8/28/2020, the disclosures of which are incorporated herein in its entirety by reference.

### BACKGROUND

Naturally-sourced coal or coal wastes such as low-rank coal (e.g., lignite and subbituminous coal) or coal wastes thereof, or such as high-rank coal (e.g., bituminous and anthracite coal) or coal wastes thereof, can have undesirable properties such as low fixed carbon concentration, high oxygen concentration, and high ash content. Such properties can make the coal less suitable for energy generation and production of high value materials such as graphene.

Graphene is the name denoted to a single sheet (1 atom thick) of sp²-bonded carbon atoms. Effectively this is a single sheet of graphitic carbon. However, the term graphene has also come to be used to describe in a more general sense thin films (1-40 layers) of sp²-bonded carbon under the auspices of discussions of single layer interactions and electrical behavior. Due to the difficulty of mass-producing graphene, it remains an extremely expensive material.

Graphite is a key material used in the fabrication of lithium-ion battery (LIB) anodes. The properties of graphite, such as high thermal and electrical conductivity, excellent mechanical properties, and lubricating properties, make graphite a good choice of material for a variety of applications. With growing demand for clean energy technologies and a gradual transition away from fossil fuel energy, graphite is at the center of many energy storage applications such as LIB for electric vehicles (EVs), hybrid electric vehicles (HEVs), and plug-in electric vehicles (PEVs). Most of the current commercial graphite production relies mostly on natural graphite resources which are becoming increasingly scarce and are unable to meet the rapidly growing demand for graphite for the electric vehicle industries.

### SUMMARY OF THE INVENTION

The present invention provides a method of carbonizing an upgraded coal. The method includes heating the upgraded coal in an inert environment, to form a carbonized upgraded coal.

The present invention provides a method of carbonizing an upgraded coal. The method includes heating the upgraded coal in an inert environment, to form a carbonized upgraded coal. The heating includes heating to a first temperature for a first duration, wherein the first temperature is in the range of 500 °C to 700 °C, and wherein the first duration is in the range of 15 min to 1 h. The heating includes heating to a second temperature higher than the first temperature for a second duration, wherein the second temperature is in the range of 900 °C to 1100 °C, and wherein the second duration is in the range of 15 min to 1 h. The heating also includes heating to a third temperature higher than the second temperature for a third duration, wherein the third temperature is in the range of 1,500 °C to 1,600 °C, and wherein the third duration is in the range of 1 h to 4 h. The method includes allowing the carbonized upgraded coal to cool to a temperature of 0 °C to 1000 °C over a duration of 1 h to 4 h. The carbonized upgraded coal has an ash content of 1 wt% to 20 wt%. The carbonized upgraded coal has a fixed carbon (FC) content of 80 wt% to 99 wt%.

The present invention provides a carbonized upgraded coal formed by the method of carbonizing an upgraded coal described herein.

The present invention provides a carbonized upgraded coal that includes a fixed carbon (FC) content of 85 wt% to 98 wt%. The carbonized upgraded coal also includes an ash content of 2 wt% to 12 wt%.

The present invention provides a method of forming graphite. The method includes graphitizing carbonized upgraded coal, to form the graphite.

The present invention provides a method of forming graphite. The method includes carbonizing upgraded coal, the carbonizing including heating the upgraded coal in an inert environment, to form a carbonized upgraded coal. The method also includes graphitizing the carbonized upgraded coal, to form the graphite. The graphitizing includes heating the carbonized upgraded coal, the heating including heating to a first graphitization temperature for a first graphitization duration, wherein the first graphitization temperature is in the range of 1000 °C to 1500 °C, and wherein the first graphitization duration is in the range of 0.1 s to 20 min. The heating also includes heating to a second graphitization temperature higher than the first graphitization temperature for a second graphitization duration, wherein the second graphitization temperature is 1250 °C to 2800 °C, and wherein the second graphitization duration is in the range of 0.1 s to 1 g. The heating also includes heating to a third graphitization temperature higher than the second graphitization temperature for a third graphitization duration, wherein the third graphitization temperature is in the range of 2500 °C to 3000 °C, and wherein the third graphitization duration is in the range of 30 min to 3 h. The method includes allowing the graphite to cool to a temperature of 0 °C to 1000 °C at a rate of 1 °C/min to 50 °C/min and/or for a duration of 1 h to 4 h. The formed graphite has a carbon content of 99 wt% to 100 wt%.

The present invention provides a method of forming graphite. The method includes heating upgraded coal in an inert environment, to form a carbonized upgraded coal, wherein the heating includes heating to a first temperature for a first duration, wherein the first temperature is in the range of 500 °C to 700 °C, and wherein the first duration is in the range of 15 min to 1 h. The heating also includes heating to a second temperature higher than the first temperature for a second duration, wherein the second temperature is in the range of 900 °C to 1100 °C, and wherein the second duration is in the range of 15 min to 1 h. The heating also includes heating to a third temperature higher than the second temperature for a third duration, wherein the third temperature is in the range of 1,500 °C to 1,600 °C, and wherein the third duration is in the range of 1 h to 4 h. The method includes allowing the carbonized upgraded coal to cool to a temperature of 0 °C to 1000 °C over a duration of 1 h to 4 h. The carbonized upgraded coal has an ash content of 1 wt% to 20 wt%. The carbonized upgraded coal has a fixed carbon (FC) content of 80 wt% to 99 wt%. The method also includes graphitizing the carbonized upgraded coal, to form the graphite. The graphitizing includes heating the carbonized upgraded coal, the heating including heating to a first graphitization temperature for a first graphitization duration, wherein the first graphitization temperature is in the range of 1000 °C to 1500 °C, and wherein the first graphitization duration is in the range of 0.1 s to 10 min. The heating also includes heating to a second graphitization temperature higher than the first graphitization temperature for a second graphitization duration, wherein the second graphitization temperature is 1250 °C to 2800 °C, and wherein the second graphitization duration is in the range of 0.1 s to 1 h. The heating also includes heating to a third graphitization temperature higher than the second graphitization temperature for a third graphitization duration, wherein the third graphitization temperature is in the range of 2500 °C to 3000 °C, and wherein the third graphitization duration is in the range of 30 min to 3 h. The method includes allowing the graphite to cool to a temperature of 0 °C to 1000 °C at a rate of 1 °C/min to 50 °C/min and/or for a duration of 1 h to 4 h. The graphite has a carbon content of 99 wt% to 100 wt%.

The present invention provides a method of forming graphite. The method includes cleaning coal to form a cleaned coal residue. The method includes at least one of (A) reacting the cleaned coal residue with an oxidizable inorganic metallic agent, and (B) reacting the cleaned coal residue with a reducing agent (i.e., includes (A), (B), or a combination of (A) and (B), to form an upgraded coal. The method includes heating the upgraded coal to a temperature of 500 °C to 2,000 °C in an inert environment, to form a carbonized upgraded coal. The method also includes heating the carbonized upgraded coal to a graphitization temperature in the range of 2500 °C to 3500 °C for a graphitization duration of 10 min to 10 h, to form the graphite.

The present invention provides a method of forming graphite. The method includes cleaning coal having a largest dimension of 25 mm or less using a strong mineral acid at a temperature of 30 °C to 100 °C to form a cleaned coal residue. The method also includes at least one of (A) reacting the cleaned coal residue at 100 °C to 500 °C under an inert gas with an oxidizable inorganic metallic agent including iron (II) sulfate heptahydrate (FeSO₄·7H₂O), iron (II) chloride tetrahydrate (FeCl·4H₂O), or a combination thereof, and (B) reacting the cleaned coal residue at 0 °C to 50 °C in an organic solvent with a reducing agent including lithium aluminum hydride (LAH), sodium borohydride (NAH), or a combination thereof, to form an upgraded coal. The upgraded coal has a lower ash content, as compared to the coal used to form the upgraded coal. The upgraded coal has at least one of a lower oxygen concentration, a lower sulfur concentration, a lower nitrogen concentration, and a higher carbon concentration, as compared to the naturally-sourced coal used to form the upgraded coal. The method includes heating the upgraded coal to a temperature of 500 °C to 2,000 °C in an inert environment, to form a carbonized upgraded coal. The method also includes heating the carbonized upgraded coal to a graphitization temperature in the range of 2500 °C to 3500 °C for a graphitization duration of 10 min to 10 h, to form the graphite.

The present invention provides a method of forming graphite. The method includes cleaning coal having a largest dimension of 25 mm or less using a strong mineral acid at a temperature of 30 °C to 100 °C to form a cleaned coal residue. The method includes at least one of (A) reacting the cleaned coal residue at 100 °C to 500 °C under an inert gas with an oxidizable inorganic metallic agent including iron (II) sulfate heptahydrate (FeSO₄·7H₂O), iron (II) chloride tetrahydrate (FeCl·4H₂O), or a combination thereof, and (B) reacting the cleaned coal residue at 0 °C to 50 °C in an organic solvent with a reducing agent including lithium aluminum hydride (LAH), sodium borohydride (NAH), or a combination thereof, to form an upgraded coal. The method includes heating the upgraded coal in an inert environment, to form a carbonized upgraded coal, wherein the heating includes heating to a first temperature for a first duration, wherein the first temperature is in the range of 500 °C to 700 °C, and wherein the first duration is in the range of 15 min to 1 h. The heating also includes heating to a second temperature higher than the first temperature for a second duration, wherein the second temperature is in the range of 900 °C to 1100 °C, and wherein the second duration is in the range of 15 min to 1 h. The heating also includes heating to a third temperature higher than the second temperature for a third duration, wherein the third temperature is in the range of 1,500 °C to 1,600 °C, and wherein the third duration is in the range of 1 h to 4 h. The method includes allowing the carbonized upgraded coal to cool to a temperature of 0 °C to 1000 °C over a duration of 1 h to 4 h. The carbonized upgraded coal has an ash content of 1 wt% to 20 wt%. The carbonized upgraded coal has a fixed carbon (FC) content of 80 wt% to 99 wt%. The method also includes graphitizing the carbonized upgraded coal, to form the graphite. The graphitizing includes heating the carbonized upgraded coal, the heating including heating to a first graphitization temperature for a first graphitization duration, wherein the first graphitization temperature is in the range of 1000 °C to 1500 °C, and wherein the first graphitization duration is in the range of 0.1 s to 10 min. The heating also includes heating to a second graphitization temperature higher than the first graphitization temperature for a second graphitization duration, wherein the second graphitization temperature is 1250 °C to 2800 °C and wherein the second graphitization duration is in the range of 0.1 s to 1 h. The heating also includes heating to a third graphitization temperature higher than the second graphitization temperature for a third graphitization duration, wherein the third graphitization temperature is in the range of 2500 °C to 3000 °C, and wherein the third graphitization duration is in the range of 30 min to 3 h. The method includes allowing the graphite to cool to a temperature of 0 °C to 1000 °C at a rate of 1 °C/min to 50 °C/min and/or for a duration of 1 h to 4 h. The graphite has a carbon content of 99 wt% to 100 wt%.

The present invention provides a graphite that is formed using the method of forming graphite described herein.

The present invention provides a graphite that includes a carbonized and graphitized upgraded coal.

The present invention provides a graphite including graphulerenite that includes a spherical external geometry, a plurality of approximately flat sides, and comprising a solid fill; croissant graphite that includes a croissant-like texture and shape; 3D graphene stacks that include internal longitudinal hollow channels; or a combination thereof.

The present invention provides a method of forming graphite. The method includes cleaning coal to form a cleaned coal residue. The method includes at least one of reacting the cleaned coal residue with an oxidizable inorganic metallic agent, and reacting the cleaned coal residue with a reducing agent, to form an upgraded coal. The method includes heating the upgraded coal to a temperature of 500 °C to 2,000 °C in an inert environment, to form a carbonized upgraded coal. The method includes controlling the cleaning and/or the reacting of the cleaned coal residue with the oxidizable inorganic metallic agent and/or the reacting of the cleaned coal residue with the reducing agent, such that the ash content of the carbonized upgraded coal is 0 wt% to <7 wt%. The method also includes heating the carbonized upgraded coal to a graphitization temperature in the range of 2500 °C to 3500 °C for a graphitization duration of 10 min to 10 h, to form the graphite, wherein: graphulerenite is 0 wt% to 0.3 wt% of the graphite; in the graphite a weight ratio of croissant graphite and/or 3D graphene stacks comprising internal longitudinal hollow channels to graphulerenite is equal to or greater than 100:1; or a combination thereof.

The present invention provides a method of forming graphite. The method includes cleaning coal to form a cleaned coal residue. The method includes at least one of reacting the cleaned coal residue with an oxidizable inorganic metallic agent, and reacting the cleaned coal residue with a reducing agent, to form an upgraded coal. The method includes heating the upgraded coal to a temperature of 500 °C to 2,000 °C in an inert environment, to form a carbonized upgraded coal. The method includes controlling the cleaning and/or the reacting of the cleaned coal residue with the oxidizable inorganic metallic agent and/or the reacting of the cleaned coal residue with the reducing agent, such that the ash content of the carbonized upgraded coal is 5.6 wt% to 20 wt%. The method also includes heating the carbonized upgraded coal to a graphitization temperature in the range of 2500 °C to 3500 °C for a graphitization duration of 10 min to 10 h, to form the graphite, wherein: croissant graphite and/or 3D graphene stacks comprising internal longitudinal hollow channels are 0 wt% to 0.3 wt% of the graphite; in the graphite a weight ratio of graphulerenite to croissant graphite and/or 3D graphene stacks comprising internal longitudinal hollow channels is equal to or greater than 100:1; or a combination thereof.

The present invention provides an electrochemical cell. The electrochemical cell includes an electrode that includes the graphite of the present invention.

The present invention provides an electrochemical cell. The electrochemical cell includes a cathode. The electrochemical cell also includes an anode that includes the graphite of the present invention.

The present invention provides a lithium-ion battery that includes the electrochemical cell of the present invention.

Various aspects of the carbonization method, carbonized upgraded coal, graphitization method, graphitized carbonized upgraded coal, and graphite of the present invention have advantages over other methods, carbonized coals, and graphite. For example, the carbonized upgraded coal, and/or the graphite formed therefore, can have lower ash content, oxygen content, volatile matter content, heteroatom content (e.g., S, N, O), and/or higher carbon content, as compared to other carbonized upgraded coals and graphites formed therefrom. In various aspects, the graphite of the present invention, such as graphite including "croissant" graphite, graphulerenite, and/or 3D graphene stacks, and the method of making the same, can provide more cost-effective and efficient graphite material for a variety of purposes, such as lithium-ion battery anodes, building materials (e.g., as building mixtures or composites), carbonenhanced lubricants, additive manufacturing, carbon-based inks, coatings for corrosion prevention, nuclear reactor components, or a combination thereof, as compared to other graphite provided from other sources. In various aspects, the method of the present invention of forming graphite from carbonized upgraded coal can form higher quality graphite than graphite formed from non-upgraded coals, such graphite that performs better for one or more of the uses listed in the preceding sentence.

In various aspects, the method of the present invention of forming graphite from carbonized upgraded coal can control ash content of the carbonized upgraded coal to control formation of croissant graphite microstructures and/or formation of 3D graphene stacks, or formation of graphulerenite microstructures, providing convenient control over the type of microstructures formed in the graphite. In various aspects, the method of the present invention of forming graphite from carbonized upgraded coal can form croissant microstructures and/or 3D graphene stacks, or graphulerenite microstructures, from coal of all ranks such as bituminous coal, lignite coal, subbituminous coal, and anthracite coal. In various aspects, the method of the present invention of forming graphite from carbonized upgraded coal can form 3D graphene stacks and associations of croissant graphite microstructures therewith.

### BRIEF DESCRIPTION OF THE FIGURES

The drawings illustrate generally, by way of example, but not by way of limitation, various aspects of the present invention.
FIG. 1 illustrates a schematic of an autoclave reactor system, in accordance with various aspects.
FIG. 2 illustrates FTIR band assignments for North Dakota lignite, in accordance with various aspects.
FIG. 3 illustrates an FTIR spectrum of Center Mine lignite for raw, acid cleaned, and autoclave reacted samples, in accordance with various aspects.
FIG. 4 illustrates an FTIR spectrum of Freedom Mine lignite for raw, acid cleaned, and autoclave reacted samples, in accordance with various aspects.
FIG. 5 illustrates an FTIR spectrum of Falkirk Mine lignite for raw, acid cleaned, and autoclave reacted samples, in accordance with various aspects.
FIG. 6 illustrates an FTIR spectra for Center Mine lignite spectra for raw, acid-cleaned, autoclave-reacted, and LAH-reacted coal residues, in accordance with various aspects.
FIG. 7 illustrates an FTIR spectra for Freedom Mine lignite spectra for raw, acid-cleaned, autoclave-reacted, and LAH-reacted coal residues, in accordance with various aspects.
FIG. 8 illustrates a system for cleaning coal, in accordance with various aspects, in accordance with various aspects.
FIG. 9 illustrates an autoclave reactor system, in accordance with various aspects, in accordance with various aspects.
FIG. 10 illustrates a carbonization system, in accordance with various aspects, in accordance with various aspects.
FIG. 11 illustrates a graphitization system, in accordance with various aspects, in accordance with various aspects.
FIG. 12 illustrates ATR-FTIR spectra with band assignments for raw coal samples, in accordance with various aspects, in accordance with various aspects.
FIG. 13 illustrates raw and chemically-treated coal ash content and corresponding percent ash reductions, in accordance with various aspects.
FIG. 14 illustrates ATR-FTIR spectra of cleaned coal sample with band assignments, in accordance with various aspects.
FIG. 15 illustrates content reduction of various heteroatoms in various autoclave-reacted coals, in accordance with various aspects.
FIG. 16 illustrates the change in volatile matter, fixed carbon, and BTU for various autoclave-reacted coals, in accordance with various aspects.
FIG. 17 illustrates a photograph of carbonized coal reside for lignite coal (left) and subbituminous coal (right), in accordance with various aspects.
FIG. 18 illustrates ATR-FTIR spectra for various carbonized coal residues, in accordance with various aspects.
FIG. 19 illustrates Raman spectra of various carbonized coal residues, in accordance with various aspects.
FIG. 20A illustrates an X-ray diffractogram of a graphite reference and raw, cleaned, carbonized, and autoclaved lignite coal, in accordance with various aspects.
FIG. 20B illustrates an X-ray diffractogram of a graphite reference and raw, cleaned, carbonized, and autoclaved subbituminous coal, in accordance with various aspects.
FIG. 20C illustrates an X-ray diffractogram of a graphite reference and raw, cleaned, carbonized, and autoclaved bituminous coal, in accordance with various aspects.
FIG. 20D illustrates an X-ray diffractogram of a graphite reference and raw, cleaned, carbonized, and autoclaved anthracite coal, in accordance with various aspects.
FIG. 21 illustrates ATR-FTIR spectra of graphitized coal samples compared to reference graphite, in accordance with various aspects.
FIG. 22 illustrates Raman spectra of reference graphite and various coal-derived graphite, in accordance with various aspects.
FIG. 23A illustrates a SEM image of reference flake graphite, in accordance with various aspects.
FIG. 23B illustrates a SEM image of reference flake graphite, in accordance with various aspects.
FIG. 24A illustrates a SEM image of a lignite coal-derived graphite sample that was graphitized for a single 1 h session, in accordance with various aspects.
FIG. 24B illustrates a SEM image of a lignite coal-derived graphite sample that was graphitized for a single 1 h session, in accordance with various aspects.
FIG. 24C illustrates a SEM image of a lignite coal-derived graphite sample that was graphitized for two consecutive 1 h sessions with cooling therebetween, in accordance with various aspects.
FIG. 24D illustrates a SEM image of a lignite coal-derived graphite sample that was graphitized for two consecutive 1 h sessions, in accordance with various aspects.
FIG. 24E illustrates a SEM image of a lignite coal-derived graphite sample that was graphitized for a single 2 h session, in accordance with various aspects.
FIG. 24F illustrates a SEM image of a lignite coal-derived graphite sample that was graphitized for a single 2 h session, in accordance with various aspects.
FIG. 25A illustrates a SEM image of a subbituminous coal-derived graphite sample that was graphitized for a single 1 h session, in accordance with various aspects.
FIG. 25B illustrates a SEM image of a subbituminous coal-derived graphite sample that was graphitized for a single 1 h session, in accordance with various aspects.
FIG. 25C illustrates a SEM image of a subbituminous coal-derived graphite sample that was graphitized for two consecutive 1 h sessions with cooling therebetween, in accordance with various aspects.
FIG. 25D illustrates a SEM image of a subbituminous coal-derived graphite sample that was graphitized for two consecutive 1 h sessions, in accordance with various aspects.
FIG. 25E illustrates a SEM image of a subbituminous coal-derived graphite sample that was graphitized for a single 2 h session, in accordance with various aspects.
FIG. 25F illustrates a SEM image of a subbituminous coal-derived graphite sample that was graphitized for a single 2 h session, in accordance with various aspects.
FIG. 26A illustrates a SEM image of a bituminous coal-derived graphite sample that was graphitized for a single 1 h session, in accordance with various aspects.
FIG. 26B illustrates a SEM image of a bituminous coal-derived graphite sample that was graphitized for a single 1 h session, in accordance with various aspects.
FIG. 26C illustrates a SEM image of a bituminous coal-derived graphite sample that was graphitized for two consecutive 1 h sessions with cooling therebetween, in accordance with various aspects.
FIG. 26D illustrates a SEM image of a bituminous coal-derived graphite sample that was graphitized for two consecutive 1 h sessions, in accordance with various aspects.
FIG. 26E illustrates a SEM image of a bituminous coal-derived graphite sample that was graphitized for a single 2 h session, in accordance with various aspects.
FIG. 26F illustrates a SEM image of a bituminous coal-derived graphite sample that was graphitized for a single 2 h session, in accordance with various aspects.
FIG. 27A illustrates a SEM image of an anthracite coal-derived graphite sample that was graphitized for a single 1 h session, in accordance with various aspects.
FIG. 27B illustrates a SEM image of an anthracite coal-derived graphite sample that was graphitized for a single 1 h session, in accordance with various aspects.
FIG. 27C illustrates a SEM image of an anthracite coal-derived graphite sample that was graphitized for two consecutive 1 h sessions with cooling therebetween, in accordance with various aspects.
FIG. 27D illustrates a SEM image of an anthracite coal-derived graphite sample that was graphitized for two consecutive 1 h sessions, in accordance with various aspects.
FIG. 27E illustrates a SEM image of an anthracite coal-derived graphite sample that was graphitized for a single 2 h session, in accordance with various aspects.
FIG. 27F illustrates a SEM image of an anthracite coal-derived graphite sample that was graphitized for a single 2 h session, in accordance with various aspects.
FIG. 28 illustrates XRD diffractograms of reference graphite and graphite derived from various coal samples, in accordance with various aspects.
FIG. 29A illustrates XRD diffraction spectra of reference flake graphite and lignite-derived graphite that was graphitized for a single 1 h session, for two 1 h sessions with cooling therebetween, and for a single 2 h session, in accordance with various aspects.
FIG. 29B illustrates XRD diffraction spectra of reference flake graphite and subbituminous coal-derived graphite that was graphitized for a single 1 h session, for two 1 h sessions with cooling therebetween, and for a single 2 h session, in accordance with various aspects.
FIG. 29C illustrates XRD diffraction spectra of reference flake graphite and bituminous coal-derived graphite that was graphitized for a single 1 h session, for two 1 h sessions with cooling therebetween, and for a single 2 h session, in accordance with various aspects.
FIG. 29D illustrates XRD diffraction spectra of reference flake graphite and anthracite coal-derived graphite that was graphitized for a single 1 h session, for two 1 h sessions with cooling therebetween, and for a single 2 h session, in accordance with various aspects.
FIG. 30A illustrates a SEM image of synthetic graphite illustrating several croissant graphite microstructures in a layered stem microstructure, in accordance with various aspects.
FIG. 30B illustrates a SEM image of the layered stem from FIG. 30A at higher magnification, in accordance with various aspects.
FIG. 31A illustrates a SEM micrograph of a synthetic graphite, illustrating a ribbon-like croissant structure, in accordance with various aspects.
FIG. 31B illustrates a SEM micrograph of a synthetic graphite, illustrating an internal surface texture view of broken croissant structures, in accordance with various aspects.
FIG. 32 illustrates a SEM micrograph with details of the internal structural morphology of croissant graphite microstructures, in accordance with various aspects.
FIG. 33A illustrates a SEM micrograph of synthetic graphite, showing a layered microstructural network, in accordance with various aspects.
FIG. 33B illustrates a SEM micrograph of the synthetic graphite of FIG. 32A at higher magnification, illustrating a flat, honeycomb-like surface with roughly hexagonal openings into channels, in accordance with various aspects.
FIG. 34 illustrates a SEM micrograph of a graphulerenite microstructure observed in coal- or coal waste-derived synthetic graphite, in accordance with various aspects.
FIG. 35A illustrates a SEM micrograph of a graphulerenite cross-section, in accordance with various aspects.
FIG. 35B illustrates a SEM micrograph of the graphulerenite cross-section shown in FIG. 34A at a higher magnification, illustrating details of graphite flake morphology, in accordance with various aspects.
FIG. 36 illustrates XRD spectra of graphite derived from four inventive coal samples compared to a reference LIB-grade graphite sample, in accordance with various aspects.
FIG. 37 illustrates XRD spectra of an optimized lignite-derived graphite sample compared to LIB-grade graphite reference, in accordance with various aspects.

### DETAILED DESCRIPTION OF THE INVENTION

Reference will now be made in detail to certain aspects of the disclosed subject matter. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in a specific order as recited herein. Alternatively, in any aspect(s) disclosed herein, specific acts may be carried out in any order without departing from the principles of the invention, except when a temporal or operational sequence is explicitly recited. Furthermore, specified acts can be carried out concurrently unless explicit claim language recites that they be carried out separately or the plain meaning of the claims would require it. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

### Method of carbonizing an upgraded coal.

Various aspects of the present invention provide a method of carbonizing an upgraded coal. The method can include heating (e.g., "carbonization heating") the upgraded coal in an inert environment, to form a carbonized upgraded coal. The inert environment can be any suitable inert environment, such as argon, nitrogen, or a combination thereof. The carbonization heating can include applying sufficient heat to the upgraded coal under sufficient conditions to drive off volatile carbon.

The carbonization heating can include heating to a carbonization temperature of 500 °C to 2,000 °C (e.g., 550 °C to 1,650 °C, or less than or equal to 1650 °C and greater than or equal to 550 °C, 600, 650, 700, 750, 800, 850, 900, 950, 1000, 1050, 1100, 1150, 1200, 1250, 1300, 1350, 1400, 1450, 1500, 1550, or 1600 °C) for a duration of 10 min to 6 h (e.g., 20 min to 4 h, or less than or equal to 4 h and greater than or equal to 20 min, 30, 40, 50 min, 1 h, 1.5, 2, 2.5, 3, 3.5, 4, 4.5, 5, or 5.5 h). The carbonization heating can be performed at any suitable pressure, such as about 1 atm, or about 0.5 atm to 2 atm, or about 0.1 atm to 10 atm.

The carbonization heating can include heating to a first temperature for a first duration. The first temperature can be in the range of 400 °C to 1,000 °C, or 500 °C to 700 °C, or less than or equal to 1000 °C and greater than or equal to 400 °C, 450, 500, 550, 600, 650, 700, 750, 800, 850, 900, or 950 °C. The first duration can be in the range of 10 min to 4 h, or 15 min to 1 h, or less than or equal to 4 h and greater than or equal to 10 min, 20, 30, 40, 50 min, 1 h, 1.5, 2, 2.5, 3, or 3.5 h. The heating can include heating to the first temperature at any suitable rate, such as at a rate of 1 °C/min to 30 °C/min, or 5 °C/min to 15 °C/min, or less than or equal to 30 °C/min and greater than or equal to 1 °C/min, 2, 3, 4, 5, 6, 8, 10, 12, 14, 16, 18, 20, 22, 24, 26, or 28 °C/min.

The carbonization heating can further include heating to a second temperature higher than the first temperature for a second duration. The second temperature can be in the range of 600 °C to 1,500 °C, or 900 °C to 1100 °C, or less than or equal to 1500 °C and greater than or equal to 600 °C, 650, 700, 750, 800, 850, 900, 850, 1000, 1050, 1100, 1150, 1200, 1250, 1300, 1350, 1400, or 1450 °C. The second duration can be in the range of 10 min to 4 h, or 15 min to 1 h, or less than or equal to 4 h and greater than or equal to 10 min, 20, 30, 40, 50 min, 1 h, 1.5, 2, 2.5, 3, or 3.5 h. The heating from the first temperature to the second temperature can be performed at any suitable rate, such as a rate of 1 °C/min to 30 °C/min, 5 °C/min to 15 °C/min, or less than or equal to 30 °C/min and greater than or equal to 1 °C/min, 2, 3, 4, 5, 6, 8, 10, 12, 14, 16, 18, 20, 22, 24, 26, or 28 °C/min.

The carbonization heating can further include heating to a third temperature higher than the second temperature for a third duration. The third temperature can be in the range of 1,000 °C to 2,000 °C, or 1,500 °C to 1,600 °C, or less than or equal to 2,000 °C and greater than or equal to 1000 °C, 1050, 1100, 1150, 1200, 1250, 1300, 1350, 1400, 1450, 1500, 1550, 1600, 1650, 1700, 1750, 1800, 1850, 1900, or 1950°C. The third duration can be in the range of 30 min to 4 h, or 1 h to 4 h, or less than or equal to 4 h and greater than or equal to 10 min, 20, 30, 40, 50 min, 1 h, 1.5, 2, 2.5, 3, or 3.5 h. The heating from the second temperature to the third temperature can be performed at any suitable rate, such as a rate of 1 °C/min to 30 °C/min, or 5 °C/min to 15 °C/min, or less than or equal to 30 °C/min and greater than or equal to 1 °C/min, 2, 3, 4, 5, 6, 8, 10, 12, 14, 16, 18, 20, 22, 24, 26, or 28 °C/min.

The carbonizing can further include allowing the temperature of the carbonized upgraded coal to cool to a suitable temperature, such as 0 °C to 1,000 °C, or 0 °C to 40 °C, or less than the carbonization temperature or less than or equal to 1000 °C and greater than or equal to 0 °C, 5, 10, 15, 20, 25, 30, 35, 40, 50, 75, 100, 150, 200, 250, 500, 750, or 900 °C. The cooling can be performed in an inert environment. The carbonized upgraded coal can be cooled or allowed to cool. The cooling can include applying sufficient heating during the cooling such that the cooling occurs at a desired rate. The carbonized upgraded coal can be cooled at any suitable rate, such as at a rate of 1 °C/min to 50 °C/min, or 10 °C/min to 30 °C/min, or less than or equal to 50 °C/min and greater than or equal to 1 °C/min, 2, 3, 4, 5, 10, 15, 20, 25, 30, 35, 40, or 45 °C/min. The rate of cooling can be sufficient such that the upgraded to cools to the suitable temperature for 1 h to 3 h, or 1 h to 4 h. In various aspects, after reaching the suitable temperature, the furnace can be shut down to allow subsequent cooling to room temperature or to another temperature to progress naturally.

The carbonization heating can include raising the temperature to about 600 °C at about 10 °C/min and holding at about 600 °C for about 30 min, ramping the temperature to about 1000 °C at about 10 °C/min and holding for about 30 min, and ramping the temperature to about 1600 °C at about 6 °C/min and holding for about 2 h to 4 h, followed by cooling to a temperature in the range of 0 °C to 1,000 °C in the range of 1 h to 3 h, or 1 h to 4 h, before shutting down the furnace.

The upgraded coal on which the carbonization is performed can be any suitable upgraded coal, such as an upgraded lignite coal, and upgraded subbituminous coal, an upgraded bituminous coal, an upgraded anthracite coal, an upgraded coal waste (e.g., derived from any suitable coal, such as lignite, subbituminous, bituminous, or anthracite coal), or a combination thereof. In various aspects, the upgraded coal is an upgraded lignite coal, an upgraded subbituminous coal, or a combination thereof.

The method can have any suitable yield of the carbonized upgraded coal from the upgraded coal, such as a yield of 30% to 99%, or 40% to 60%, or less than or equal to 99% and greater than or equal to 30%, 35, 40, 45, 50, 55, 60, 65, 70, 75, 80, 85, 90, 95, 96, 97, or 98%.

The carbonized upgraded coal can have any suitable ash content, such as an ash content of 1 wt% to 20 wt%, or 2 wt% to 12 wt%, or less than or equal to 20 wt% and greater than or equal to 1 wt%, 2, 3, 4, 5, 6, 7, 8, 9, 10, 11, 12, 13, 14, 15, 16, 17, 18, or 19 wt%.

The carbonized upgraded coal can have any suitable fixed carbon (FC) content, such as a FC content of 80 wt% to 99 wt%, or 85 wt% to 98 wt%, or less than or equal to 99 wt% and greater than or equal to 80 wt%, 82, 84, 86, 88, 90, 92, 94, 96, or 98 wt%.

The carbonized upgraded coal can include graphitic carbon and non-graphitic carbon. The carbonized upgraded coal can include non-graphitic carbon and can be substantially free of graphitic carbon.

In various aspects, the upgraded coal on which the carbonization is performed can includes an ash content of less than 5 wt%, an oxygen concentration of 10 wt% to 25 wt%, and a carbon concentration of 40 wt% to 75 wt%.

### Method of forming upgraded coal.

In various aspects, the upgraded coal is pre-formed prior to the onset of the method of carbonization or the method of forming graphite. In other aspects, the method of carbonization or the method of forming graphite include preparing the upgraded coal.

The upgraded coal can be prepared in any suitable way. In various aspects, upgrading the coal includes cleaning coal (e.g., starting material coal) to form a cleaned coal residue. The method can also include at least one of (A) reacting the cleaned coal residue with an oxidizable inorganic metallic agent, and (B) reacting the cleaned coal residue with a reducing agent (i.e., (A), (B), or (A) and (B)), to form the upgraded coal.

The coal that is cleaned can be any suitable coal (e.g., starting material coal). For example, the coal that is cleaned can be a crushed coal, a particulate coal, a coal waste (e.g., weathered overburden, underburden, coal fines, and/or coal processing reject materials), or a combination thereof.

The starting material coal can be a crushed coal or a particulate coal. The starting material coal can have any suitable size, such as having a largest dimension of 25 mm or less, or 1 micron to 25 mm, or 1 micron to 10 mm, or less than or equal to 25 mm but greater than or equal to 1 micron, 2, 3, 4, 5, 6, 8, 10, 12, 14, 15, 20, 25, 30, 40, 50, 75, 100, 150, 200, 250, 300, 400, 500, 750, 1 mm, 2, 3, 4, 5, 6, 7, 8, 9, 10, 11, 12, 13, 14, 15, 16, 17, 18, 19, 20, 21, 22, 23, or 24 mm.

The cleaning of the coal to form the cleaned coal residue can be any suitable cleaning, such as cleaning the coal with a mineral acid, cleaning the coal with a base, physically cleaning the coal, or a combination thereof.

The cleaning of the coal to form the cleaned coal residue can include cleaning the coal with a base (e.g., an aqueous solution of a base). The base cleaning can be followed by washing with water to remove residual base therefrom and drying of the coal to remove some or all of the water.

The cleaning of the coal to form the cleaned coal residue can include physically cleaning the coal. The physical cleaning can include placing the coal in an aqueous solution of suitable density, as controlled by dissolution of a salt therein, and removing one or more desired fractions of the coal from the surface, bottom, or middle sections of the aqueous solution. For example, the physical cleaning can include suspending the coal in an aqueous solution comprising a salt such as cesium chloride. The aqueous solution can have any suitable specific gravity, such as a specific gravity of 1 to 2, or 1.4 to 1.6, or less than or equal to 2 but greater than or equal to 1, 1.1, 1.2, 1.3, 1.4, 1.5, 1.6, 1.7, 1.8, or 1.9.

The cleaning of the coal to form the cleaned coal residue can include cleaning the coal with a mineral acid, such as a strong mineral acid. The cleaning of the coal with the mineral acid can remove one or more inorganic elements from the coal, thereby reducing the ash content of the coal. The mineral acid can be any suitable mineral acid, such as phosphoric acid, sulfuric acid, boric acid, hydrofluoric acid, hydrobromic acid, perchloric acid, hydrochloric acid, nitric acid, or a combination thereof. The mineral acid can include hydrochloric acid, nitric acid, or a combination thereof. The mineral acid can include hydrochloric acid. The mineral acid can include nitric acid. The mineral acid can be of any suitable strength, such as 0.1 M to 10 M, 1 M to 5 M, 1 M to 1.5 M, or equal to or less than 10 M but greater than or equal to 0.1 M, 0.2, 0.4, 0.6, 0.8, 1, 1.1, 1.2, 1.3, 1.4, 1.5, 1.6, 1.8, 2, 2.5, 3, 3.5, 4, 4.5, 5, 6, 7, 8, or 9 M. During the acid cleaning, a ratio of a volume of the mineral acid to a weight of the coal can be 1:10 to 10:1, or 2:1 to 4:1, or less than or equal to 10:1 but greater than or equal to 1:10, 1:9, 1:8, 1:7. 1:6. 1:5, 1:4, 1:3, 1:2, 1:1, 2:1, 3:1, 4:1, 5:1, 6:1, 7:1, 8:1, or 9:1. The cleaning of the coal with the mineral acid can be conducted at any suitable temperature, such as a temperature of 30 °C to 100 °C, 60 °C to 80 °C, or less than or equal to 100 °C but greater than or equal to 30 °C, 35, 40, 45, 50, 55, 60, 65, 70, 75, 80, 85, 90, or 95 °C. The coal can be cleaned with the mineral acid, and the temperature can be maintained, for any suitable duration, such as 1 h to 72 h, 12 h to 36 h, or greater than or equal to 1 h, 2, 4, 6, 8, 10, 12, 14, 16, 18, 20, 22 h, 1 d, 1.5, 2, 2.5, or 3 d or more. The cleaning of the coal with the mineral acid can be conducted at any suitable pressure, such as atmospheric pressure.

The method can further include washing the cleaned coal residue with an aqueous liquid. For example, the washing can be performed after the physical cleaning to remove residual acid or base from the coal, or residual salts left on the coal from an aqueous solution used for physical cleaning. The method can further include drying the coal to remove water therefrom prior to subsequent steps of the method.

The method can optionally include a size reduction step after the cleaning. The size reducing step can include crushing or grinding the coal residue to reduce the particle size thereof, to a size that is smaller than the coal prior to the cleaning. The smaller size can include a largest dimension of 500 microns or less, such as 1 micron to 100 microns, such as less than or equal to 500 microns but greater than or equal to 1 micron, 2, 3, 4, 5, 6, 8, 10, 12, 14, 15, 20, 25, 30, 40, 50, 75, 100, 200, 300, or 400 microns.

The method can include reacting the cleaned coal residue with an oxidizable inorganic metallic agent. The reacting of the cleaned coal residue with the oxidizable inorganic metallic agent can remove one or more heteroatoms from the cleaned coal residue, such as oxygen, sulfur, or a combination thereof. The oxidizable inorganic metallic agent can be any suitable material that removes one or more heteroatoms from the cleaned coal residue, such as a salt including iron(II), cerium(III), manganese(II), cobalt(II), chromium(III), copper(I), tin(II), or a combination thereof. The oxidizable inorganic metallic acid can include iron sulfate or a hydrate thereof. The oxidizable inorganic metallic agent can include iron (II) sulfate heptahydrate (FeSO₄·7H₂O). The oxidizable inorganic metallic agent can include iron chloride or a hydrate thereof. The oxidizable inorganic metallic agent can include iron (II) chloride tetrahydrate (FeCl·4H₂O). The oxidizable inorganic metallic can be reacted with the cleaned coal residue in a suitable solvent, such as an aqueous solvent.

The reacting of the cleaned coal residue with the oxidizable inorganic metallic agent can be performed in a reactor, such as an autoclave. The reacting of the cleaned coal residue with the oxidizable inorganic metallic agent can be performed at any suitable reaction temperature, such as 100 °C to 500 °C, 250 °C to 350 °C, or less than or equal to 500 °C but greater than or equal to 100 °C, 120, 140, 160, 180, 200, 220, 240, 250, 260, 270, 280, 290, 300, 310, 320, 330, 340, 350, 360, 380, 400, 420, 440, 460, or 480 °C. The reacting of the cleaned coal residue with the oxidizable inorganic metallic agent can be performed under any suitable gas environment, such as under air, or under an inert gas such as argon, nitrogen, or a combination thereof. The reaction of the cleaned coal residue with the oxidizable inorganic metallic agent can be performed in an environment that has been evacuated and flushed with an inert gas (e.g., argon, nitrogen, or a combination thereof) one or more times. The reaction of the cleaned coal residue with the oxidizable inorganic metallic agent can be performed in the substantial absence of oxygen (e.g., less than 0.01 vol%, or less than 0.0001 vol%). The reaction of the cleaned coal residue with the oxidizable inorganic metallic agent can be performed for any suitable duration, during which the reaction temperature is maintained, such as 30 min to 5 h, 1 h to 4 h, 1 h to 3 h, or at least 30 min, 1 h, 2, 3, 4, or 5 h, or less than or equal to 5 h but greater than or equal to 30 min, 1 h, 1.5, 2, 2.5, 3, 3.5, 4, or 4.5 h.

After the reaction of the cleaned coal residue with the oxidizable inorganic metallic agent, the reaction mixture can be actively or passively cooled, such as to room temperature. After the reaction of the cleaned coal residue with the oxidizable inorganic metallic agent, the cleaned coal residue can be washed with water one or more times to remove residual oxidizable inorganic metallic agent or other undesired material from the coal. After the reaction of the cleaned coal residue with the oxidizable inorganic metallic agent, the cleaned coal residue can be dried to remove water therefrom.

The method can include reacting of the cleaned coal residue with the reducing agent. The reacting of the cleaned coal residue with the reducing agent can remove organic functional groups from the cleaned coal residue, such as carboxylic acids, carbonyl groups, ethers, aliphatic groups, or a combination thereof. The reacting of the cleaned coal residue with the reducing agent can reduce C=O groups in the cleaned coal residue (e.g., to alcohols, and/or with complete removal of the oxygen atom). The reducing agent can be any suitable reducing agent, such as lithium aluminum hydride, sodium borohydride, diborane, 9-BBN, aluminum hydride, lithium borohydride, diisobutylaluminum hydride, or a combination thereof. The reducing agent can include lithium aluminum hydride (LAH).

The reacting of the cleaned coal residue with the oxidizable inorganic metallic agent can be performed in a reactor. The reaction temperature of the reaction of the cleaned coal residue with the reducing agent can be at any suitable temperature, such as 0 °C to 50 °C, or room temperature, or less than or equal to 50 °C but greater than or equal to 0 °C, 5, 10, 15, 20, 25, 30, 35, 40, or 45 °C. The reacting of the cleaned coal residue with the reducing agent can be conducted for any suitable duration, during which the reaction temperature is maintained, such as 1 min to 24 h, 10 min to 30 min, or at least 1 min, or less than or equal to 24 h but greater than or equal to 1 min, 2, 4, 6, 8, 10, 15, 20, 25, 30, 35, 40, 45, 50, 55 min, 1 h, 1.5, 2, 2.5, 3, 4, 5, 6, 8, 10, 12, 14, 16, 18, 20, or 22 h. The reacting of the cleaned coal residue with the reducing agent can be performed in a suitable solvent, such as an organic solvent, such as an ether (e.g., diethylether).

Reacting the cleaned coal residue with the reducing agent can further include working up the product of the reacting of the cleaned coal residue with the reducing agent, such as working up the product with water. The method can further include drying the cleaned coal residue after performing the reacting of the cleaned coal residue with the reducing agent, to remove water therefrom.

In some embodiments of the method, reacting of the cleaned coal residue with the oxidizable inorganic metallic agent is performed and the reacting of the cleaned coal residue with the reducing agent is not performed. In some embodiments, reacting of the cleaned coal residue with the reducing agent is performed and the reacting of the cleaned coal residue with the oxidizable inorganic metallic agent is not performed. In some embodiments, both the reacting of the cleaned coal residue with the oxidizable inorganic metallic agent is performed and the reacting of the cleaned coal residue with the reducing agent is performed, as sequential reactions. For example, the method can include first reacting the cleaned coal residue with the oxidizable inorganic metallic agent and then reacting the product thereof with the reducing agent. In another example, the method can include first reacting the cleaned coal residue with the reducing agent, and then reacting the product thereof with the oxidizable inorganic metallic agent. In embodiments that include both reactions in sequence, it is to be understood that for the second reaction, references herein to the starting material of the reaction being the cleaned coal residue can be replaced with the product of the prior reaction.

The upgraded coal can include any suitable ash content. Ash content can be determined via ASTM D7582. The upgraded coal can include an ash content of less than 5 wt%, or 0.5 to 2 wt%, or less than or equal to 5 wt% but greater than or equal to 0.1 wt%, 0.2, 0.3, 0.4, 0.5, 0.6, 0.7, 0.8, 0.9, 1, 1.2, 1.4, 1.6, 1.8, 2, 2.2, 2.4, 2.6, 2.8, 3, 3.5, 4, or 4.5 wt%. The upgraded coal can include an ash content that is lower than an ash content of the coal prior to the cleaning, such as 4 wt% to 15 wt% lower, or lower by less than or equal to 15 wt% but greater than or equal to 4 wt%, 5, 6, 7, 8, 9, 10, 11, 12, 13, or 14 wt%. The ash content can be 0 wt% to <5.6 wt%, or less than 5.8 wt% and greater than or equal to 0 wt% and less than, equal to, or greater than 0.5 wt%, 1, 1.5, 2, 2.5, 3, 3.5, 4, 4.5, 5, 5.1, 5.2, 5.3, 5.4, 5.5, 5.55, 5.6, 5.65, 5.7, or 5.75 wt%, or 5.6 wt% to 20 wt%, or 5.6 wt% to 12 wt%, or less than or equal to 20 wt% and greater than or equal to 5.5 wt% and less than, equal to, or greater than 5.55 wt%, 5.6, 5.65, 5.7, 5.75, 5.8, 5.85, 5.9, 6, 6.1, 6.2, 6.3, 6.4, 6.5, 7, 7.5, 8, 8.5, 9, 9.5, 10, 10.5, 11, 11.5, 12, 13, 14, 15, 16, 17, 18, or 19 wt%.

The upgraded coal can include any suitable oxygen content. The upgraded coal can include an oxygen concentration of 10 wt% to 25 wt%, or less than or equal to 25 wt% but greater than or equal to 10 wt%, 11, 12, 13, 14, 15, 16, 17, 18, 19, 20, 21, 22, 23, or 24 wt%. The upgraded coal can include an oxygen content that is lower than an oxygen content of the coal prior to the cleaning, such as 1% to 50% lower, 15% to 25% lower, 17% to 21% lower, or less than or equal to 50% lower but greater than or equal to 1% lower, 2, 3, 4, 5, 6, 8, 10, 11, 12, 13, 14, 15, 16, 17, 18, 19, 20, 21, 22, 23, 24, 25, 26, 28, 30, 35, 40, or 45% lower.

The upgraded coal can have any suitable carbon concentration. The upgraded coal can include a carbon concentration of 40 wt% to 75 wt%, or less than or equal to 75 wt% but greater than or equal to 40 wt%, 42, 44, 46, 48, 50, 52, 54, 56, 58, 60, 62, 64, 66, 68, 70, 72, or 74 wt%. The upgraded coal can include a higher carbon concentration than the coal prior to the cleaning, such as 1% to 30% higher, or 5% to 15% higher, or less than or equal to 30% higher but greater than or equal to 1% higher, 2, 3, 4, 5, 6, 7, 8, 9, 10, 11, 12, 13, 14, 15, 16, 17, 18, 19, 20, 22, 24, 26, or 28% higher.

The upgraded coal can have any suitable sulfur concentration. The upgraded coal can include a sulfur concentration of 0.1 wt% to 5 wt%, or 0.7 wt% to 1.05 wt%, or less than or equal to 5 wt% but greater than or equal to 0.1 wt%, 0.2, 0.4, 0.6, 0.7, 0.8, 0.85, 0.9, 0.95, 1, 1.05, 1.1, 1.15, 1.2, 1.25, 1.3, 1.35, 1.4, 1.45, 1.5, 1.6, 1.8, 2, 3, or wt%. The upgraded coal can include a lower sulfur concentration than the coal prior to the cleaning, such as 10% to 30% lower, or 15% to 25% lower, or less than or equal to 30% lower but greater than or equal to 10% lower, 11, 12, 13, 14, 15, 16, 17, 18, 19, 20, 21, 22, 23, 24, 25, 26, 27, 28, or 29% lower.

### Carbonized upgraded coal.

In various aspects, the present invention provides a carbonized upgraded coal formed by the method of carbonizing an upgraded coal described herein. The carbonized upgraded coal can be any suitable carbonized upgraded coal that can be formed using the method.

In various aspects, the present invention provides a carbonized upgraded coal that includes a fixed carbon (FC) content of 85 wt% to 98 wt%, or equal to or less than 98 wt% and greater than or equal to 85 wt%, 86, 87, 88, 89, 90, 91, 92, 93, 94, 95, 96, or 97 wt%. The carbonized upgraded coal can include an ash content of 2 wt% to 12 wt%, or less than or equal to 12 wt% and greater than or equal to 2 wt%, 3, 4, 5, 6, 7, 8, 9, 10, or 11 wt%.

### Method of forming graphite.

In various aspects, the method of carbonizing an upgraded coal is a method of forming graphite, and the method includes graphitizing the carbonized upgraded coal to form the graphite. In various aspects, the present invention provides a method of forming graphite from a carbonized upgraded coal that is formed prior to the onset of the method, wherein the method includes graphitizing the carbonized upgraded coal to form the graphite. The graphitizing can include applying sufficient energy to the carbonized upgraded coal under sufficient conditions to induce a change of crystal structure and form graphite.

The upgraded carbonized coal on which the graphitization is performed can be any suitable upgraded coal, such as an upgraded carbonized lignite coal, and upgraded carbonized subbituminous coal, an upgraded carbonized bituminous coal, an upgraded carbonized anthracite coal, an upgraded carbonized coal waste (e.g., derived from any suitable coal, such as lignite, subbituminous, bituminous, or anthracite coal), or a combination thereof. In various aspects, the upgraded carbonized coal is an upgraded carbonized lignite coal, an upgraded carbonized subbituminous coal, or a combination thereof.

The graphitizing can include heating the carbonized upgraded coal in an inert environment, to form the graphite. The inert environment can be any suitable inert environment, such as argon, nitrogen, or a combination thereof. The heating can include heating to a graphitization temperature in the range of 2500 °C to 3500 °C (e.g., 2700 °C to 3000 °C, or less than or equal to 3500 °C and greater than or equal to 2500, 2550, 2600, 2650, 2700, 2750, 2800, 2850, 2900, 2950, 3000, 3050, 3100, 3150, 3200, 3250, 3300, 3350, 3400, or 3450 °C) for a graphitization duration of 10 min to 10 h (e.g., 30 min to 3 h, or less than or equal to 10 h and greater than or equal to 10 min, 20, 30, 40, 50 min, 1 h, 1.5, 2, 2.5, 3, 4, 5, 6, 7, 8, or 9 h). The graphitization heating can be performed at any suitable pressure, such as about 1 atm, or about 0.5 atm to 2 atm, or about 0.1 atm to 10 atm.

The graphitization heating can include heating to the graphitization temperature for the graphitization duration a first time, allowing the temperature to cool to a temperature below the graphitization temperature, and heating to the graphitization temperature for the graphitization duration a second time. The temperature to which the material is allowed to cool between multiple heating steps (the temperature below the graphitization temperature) can be 0 °C to 50 °C, or 0 °C to 1000 °C, or less than the graphitization temperature or less than or equal to 1000 °C and greater than or equal to 0 °C, 5, 10, 15, 20, 25, 30, 35, 40, 50, 75, 100, 150, 200, 500, 750, or 900 °C.

The graphitization heating can include heating to a first graphitization temperature for a first graphitization duration. The first graphitization temperature can be in the range of 700 °C to 1700 °C, or 1000 °C to 1500 °C, or less than or equal to 1700 °C and greater than or equal to 700 °C, 750, 800, 850, 900, 950, 1000, 1050, 1100, 1150, 1200, 1250, 1300, 1350, 1400, or 1450 °C. The first graphitization duration can be in the range of 0.01 s to 4 h, or 0.1 s to 20 min, or 0.1 s to 10 min, or less than or equal to 4 h and greater than or equal to 0.01 s, 0.05, 0.1, 0.5, 1, 2, 5, 10, 20, 30, 40, 50 s, 1 min, 2, 3, 4, 5, 10, 20, 30, 40, 50 min, 1 h, 1.5, 2, 2.5, 3, or 3.5 h. The heating can include heating to the first graphitization temperature at a rate of 5 °C/min to 100 °C/min, 40 °C/min to 80 °C/min, or less than or equal to 100 °C/min and greater than or equal to 5 °C/min, 10, 15, 20, 25, 30, 35, 40, 45, 50, 55, 60, 65, 70, 75, 80, 85, 90, or 95 °C/min.

The graphitization heating can further include heating to a second graphitization temperature higher than the first graphitization temperature for a second graphitization duration. The second graphitization temperature can be in the range of 1250 °C to 2800 °C, or 1500 °C to 2500 °C, or less than or equal to 3000 °C and greater than or equal to 1300 °C, 1350, 1400, 1450, 1500, 1550, 1600, 1650, 1700, 1750, 1800, 1850, 1900, 1950, 2000, 2050, 2100, 2150, 2200, 2250, 2300, 2350, 2400, 2450, 2500, 2550, 2600, 2650, 2700, or 2750 °C. The second graphitization duration can be in the range of 0.01 s to 4 h, or 0.1 s to 1 h, or 0.1 s to 23 min, or less than or equal to 4 h and greater than or equal to 0.01 s, 0.05, 0.1, 0.5, 1, 2, 5, 10, 20, 30, 40, 50 s, 1 min, 2, 3, 4, 5, 10, 20, 30, 40, 50 min, 1 h, 1.5, 2, 2.5, 3, or 3.5 h. The graphitization heating can include heating from the first graphitization temperature to the second graphitization temperature at a lower rate than heating to the first graphitization temperature. The graphitization heating can include heating from the first graphitization temperature to the second graphitization temperature at a rate of 1 °C/min to 50 °C/min, 10 °C/min to 30 °C/min, or less than or equal to 50 °C/min and greater than or equal to 1 °C/min, 2, 3, 4, 5, 6, 8, 10, 12, 14, 16, 18, 20, 22, 24, 26, 28, 30, 35, 40, or 45 °C/min.

The graphitization heating can further include heating to a third graphitization temperature higher than the second graphitization temperature for a third graphitization duration. The third graphitization temperature can be in the range of 2500 °C to 3500 °C, or 2700 °C to 3000 °C, or less than or equal to 3500 °C and greater than or equal to 2500 °C, 2550, 2600, 2650, 2700, 2750, 2800, 2850, 2900, 2950, 3000, 3050, 3100, 3150, 3200, 3250, 3300, 3350, 3400, or 3450 °C. The third graphitization duration can be in the range of 0.01 s to 4 h, or 30 min to 3 h, or less than or equal to 4 h and greater than or equal to 0.01 s, 0.05, 0.1, 0.5, 1, 2, 5, 10, 20, 30, 40, 50 s, 1 min, 2, 3, 4, 5, 10, 20, 30, 40, 50 min, 1 h, 1.5, 2, 2.5, 3, or 3.5 h. The graphitization heating can include heating from the second graphitization temperature to the third graphitization temperature at a lower rate than heating from the first graphitization temperature to the second graphitization temperature. The heating can include heating from the second graphitization temperature to the third graphitization temperature at a rate of 1 °C/min to 30 °C/min, or 2 °C/min to 20 °C/min, or less than or equal to 30 °C/min and greater than or equal to 1 °C/min, 2, 3, 4, 5, 6, 8, 10, 12, 14, 16, 18, 20, 22, 24, 26, or 28 °C/min.

In various aspects, the method can further including heating to a fourth graphitization temperature lower than the third graphitization temperature for a fourth graphitization duration. The heating to the fourth graphitization temperature can include applying less heat than was applied during the heating to the third graphitization temperature. The fourth graphitization temperature can be in the range of 1600 °C to 3000 °C, or less than or equal to 3000 °C and greater than or equal to 1600 °C and less than, equal to, or greater than 1650, 1700, 1750, 1800, 1900, 2000, 2100, 2200, 2300, 2400, 2500, 2600, 2700, 2800, 2850, 2900, or 2950 °C. The fourth graphitization duration can be 20 min to 10 h, or less than or equal to 10 h and greater than or equal to 20 min and less than, equal to, or greater than 30 min, 40, 50 min, 1 h, 1.5, 2, 2.5, 3, 3.5, 4, 5, 6, 7, 8, or 9 h.

The method can further include allowing the graphite to cool. The cooling can be performed under an inert atmosphere. The graphite can be cooled or allowed to cool to any suitable temperature below the graphitization temperature. For example, the method can include allowing the graphite to cool to 0 °C to 1,000 °C, 0 °C to 40 °C, or less than the graphitization temperature or less than or equal to 1000 °C and greater than or equal to 0 °C, 5, 10, 15, 20, 25, 30, 35, 40, 50, 100, 150, 200, 250, 500, 750, or 900 °C. The cooling can include applying sufficient heating during the cooling such that the cooling occurs at a desired rate. The graphite can be cooled or allowed to cool at any suitable rate, such as a rate of 1 °C/min to 50 °C/min, or 10 °C/min to 30 °C/min, or less than or equal to 50 °C/min and greater than or equal to 1 °C/min, 2, 3, 4, 5, 6, 8, 10, 15, 20, 25, 30, 35, 40, or 45 °C/min. The cooling can occur at a rate such that the cooling occurs for a duration of 1 h to 4 h, or 1 h to 3 h. In various aspects, after reaching the suitable temperature, the furnace can be shut down to allow subsequent cooling to room temperature or another temperature to progress naturally.

The graphitization heating can include heating at about 60 °C/min to about 1250 °C, and then heating at about 20 °C/min to about 2500 °C, and then heating at about 8 °C/min to about 2800 °C.

The graphite formed by the method can have any suitable moisture content, such as a moisture content of about 0 wt%, or 0 wt% to 0.03 wt%, or less than or equal to 0.03 wt% and greater than or equal to 0 wt%, 0.0001 wt%, 0.0005 wt%, 0.001 wt%, 0.005 wt%, 0.01 wt%, or 0.02 wt%, 0.03 wt%

The graphite formed by the method can have any suitable ash content, such as an ash content of 0 wt% to 2 wt%, or 0.0001 wt% to 0.03 wt%, or less than or equal to 2 wt% and greater than or equal to 0 wt%, 0.0001 wt%, 0.0005 wt%, 0.001 wt%, 0.005 wt%, 0.01 wt%, or 0.02 wt%.

The graphite formed by the method can have any suitable carbon content, such as a carbon content of 98 wt% to 100 wt%, 99 wt% to 99.9999 wt%, or less than or equal to 100 wt% and greater than or equal to 98 wt%, 98.5 wt%, 99 wt%, 99.2, 99.4, 99.6, 99.7, 99.8, 99.9, 99.99, or 99.999 wt%.

The graphite formed by the method can have any suitable volatile matter (VM) content, such as a VM content of 0.01 wt% to 2 wt%, 0.1 wt% to 1.2 wt%, or less than or equal to 2 wt% and greater than or equal to 0.01 wt%, 0.05, 0.1, 0.2, 0.4, 0.6, 0.8, 1, 1.2, 1.4, 1.6, or 1.8 wt%.

The graphite formed by the method can have any suitable oxygen concentration, such as an oxygen concentration of 0 wt% to 2 wt%, 0.001 wt% to 0.5 wt%, or less than or equal to 2 wt% and greater than or equal to 0 wt%, 0.0001 wt%, 0.0005, 0.001, 0.005, 0.01, 0.05, .1, 0.2, 0.3, 0.4, 0.5, 0.6, 0.8, 1, 1.2, 1.4, 1.6, or 1.8 wt%.

The graphite formed by the method can have any suitable nitrogen concentration, such as a nitrogen concentration of 0 wt% to 2 wt%, 0.001 wt% to 0.5 wt%, or less than or equal to 2 wt% and greater than or equal to 0 wt%, 0.0001 wt%, 0.0005, 0.001, 0.005, 0.01, 0.05, .1, 0.2, 0.3, 0.4, 0.5, 0.6, 0.8, 1, 1.2, 1.4, 1.6, or 1.8 wt%.

The graphite formed by the method can have any suitable sulfur concentration, such as a sulfur concentration of 0 wt% to 2 wt%, 0.001 wt% to 0.5 wt%, or less than or equal to 2 wt% and greater than or equal to 0 wt%, 0.0001 wt%, 0.0005, 0.001, 0.005, 0.01, 0.05, .1, 0.2, 0.3, 0.4, 0.5, 0.6, 0.8, 1, 1.2, 1.4, 1.6, or 1.8 wt%.

The graphite formed by the method can have any suitable heteroatom content, such as a heteroatom content of 0 wt% to 2 wt%, or 0.001 wt% to 0.5 wt%, or less than or equal to 2 wt% and greater than or equal to 0 wt%, 0.0001 wt%, 0.0005, 0.001, 0.005, 0.01, 0.05, .1, 0.2, 0.3, 0.4, 0.5, 0.6, 0.8, 1, 1.2, 1.4, 1.6, or 1.8 wt%.

The graphite can include croissant graphite, needle-like graphite, isotropic blocky graphite, flake graphite, graphulerenite, 3D graphene stacks, or a combination thereof. The graphite can include croissant graphite; e.g., the graphite can include particles that have a croissant-like texture and shape, and/or the graphite includes particles that are or that include 2D-graphene sheets spiral-wound or folded into ribbon-like structures. The croissant graphite can have a crystallinity that is comparable to (e.g., substantially the same as) that of natural flake graphite, as determined by XRD. The graphite can include graphulerenite that includes an approximately spherical external geometry, a plurality of approximately flat sides, and including a solid fill. The solid fill can include packed graphite flake layers. The graphite can include 3D graphene stacks that include a stacked structure of graphene layers. The 3D graphene stacks can include hollow channels that run through the 3D graphene stack longitudinally and that are open on one or both ends of the 3D graphene stack. The channels can have a honeycomb arrangement when viewed from an end of the 3D graphene stack (e.g., the channels can be hexagonallyarranged). The graphite can include 3D graphene stacks that are directly connected to croissant graphite, such as via an end-to-end connection between the 3D graphite stack and the croissant graphite.

The method can include controlling an ash content of the formed carbonized upgraded coal such that the ash content is within a first ash content range or a second content range. Controlling the ash content can include controlling the cleaning of the coal, controlling the reacting of the cleaned coal residue with an oxidizable inorganic metallic agent, controlling the reacting of the cleaned coal residue with the reducing agent, or a combination thereof, such as by controlling the type of reagent used, the concentration of the reagent used, the temperature of the treatment, the duration of the treatment, or a combination thereof. For example, controlling the ash content can include controlling the cleaning of the coal by acid, such as including selecting a particular type of acid, using a particular concentration of the acid (e.g., wherein higher concentrations of acid result in lower ash content more quickly and at lower temperature), adjusting the duration of acid treatment of the coal (e.g., wherein a longer duration of treatment results in a lower ash content), adjusting the temperature of the acid treatment of the coal (e.g., wherein a higher temperature of treatment results in a lower ash content), or a combination thereof.

The method can include controlling an ash content of the formed carbonized upgraded coal such that the ash content is within a first ash content range, such as a range of 0 wt% to <7 wt%, or 0 wt% to <6.7 wt%, or 0 wt% to <5.6 wt%, or less than 7 wt% and greater than or equal to 0 wt% and less than, equal to, or greater than 0.5 wt%, 1, 1.5, 2, 2.5, 3, 3.5, 4, 4.5, 5, 5.1, 5.2, 5.3, 5.4, 5.5, 5.55, 5.6, 5.65, 5.7, 5.75, 5.8, 5.85, 5.9, 5.95, 6, 6.05, 6.1, 6.15, 6.2, 6.25, 6.3, 6.35, 6.4, 6.45, 6.5, 6.55, 6.6, 6.65, 6.7, 6.75, 6.8, 6.85, 6.9, or 6.95 wt%. The graphite formed can include croissant graphite and/or 3D graphene stacks including internal longitudinal hollow channels, and can be substantially free of graphulerenite. For example, graphulerenite can be 0 wt% to 5 wt% of the graphite, or 0 wt% to 0.3 wt% of the graphite, or less than or equal to 5 wt% and greater than or equal to 0 wt% and less than, equal to, or greater than 0.001 wt%, 0.005, 0.01, 0.05, 0.1, 0.2, 0.3, 0.4, 0.5, 1, 1.5, 2, 2.5, 3, 3.5, 4, or 4.5 wt%. The weight ratio of croissant graphite and/or 3D graphite stacks to graphulerenite can be equal to or greater than 10:1, 100:1, 1,000:1, 10,000:1, 100,000:1, or 1,000,000:1. The weight ratio of croissant graphite to graphulerenite can be equal to or greater than 10:1, 100:1, 1,000:1, 10,000:1, 100,000:1, or 1,000,000:1. The weight ratio of 3D graphite stacks to graphulerenite can be equal to or greater than 10:1, 100:1, 1,000:1, 10,000:1, 100,000:1, or 1,000,000:1.

The first ash content range can be dependent, at least in part, on the particle size distribution of the carbonized upgraded coal. For example, if the carbonized upgraded coal has a particle size distribution that does not exceed 30 microns (e.g., a particle size distribution of about 0 microns to less than 30 microns), then the first ash content range can be 0 wt% to <7 wt% or 0 wt% to <6.7 wt%, or greater than or equal to 0 wt% and less than or equal to 5.55 wt%, 5.6, 5.65, 5.7, 5.75, 5.8, 5.85, 5.9, 5.95, 6, 6.05, 6.1, 6.15, 6.2, 6.25, 6.3, 6.35, 6.4, 6.45, 6.5, 6.55, 6.6, 6.65, 6.7, 6.75, 6.8, 6.85, 6.9, 6.95, or 7 wt%. If the carbonized upgraded coal has a particle size distribution that exceeds 30 microns (e.g., 0 microns to 44 microns or less), then the first ash content range can be 0 wt% to <5.6 wt%, or greater than or equal to 0 wt% and less than or equal to 5.55 wt%, 5.6, 5.65, 5.7, 5.75, 5.8, 5.85, 5.9, 5.95, 6, 6.05, 6.1, 6.15, 6.2, 6.25, 6.3, 6.35, 6.4, 6.45, 6.5, 6.55, 6.6, 6.65, 6.7, 6.75, 6.8, 6.85, 6.9, 6.95, or 7 wt%. In various aspects, the method can include controlling the particle size distribution of the carbonized upgraded coal, or a carbonized upgraded coal having a particular particle size distribution, such that a particular first ash content range is achieved. In other aspects, the first ash content range is not dependent on the particle size distribution of the carbonized upgraded coal.

The method can include controlling an ash content of the formed carbonized upgraded coal such that the ash content is within a second ash content range, such as a range of 5.6 wt% to 20 wt%, or 5.6 wt% to 12 wt%, or less than or equal to 20 wt% and greater than or equal to 5.5 wt% and less than, equal to, or greater than 5.55 wt%, 5.6, 5.65, 5.7, 5.75, 5.8, 5.85, 5.9, 5.95, 6, 6.05, 6.1, 6.15, 6.2, 6.25, 6.3, 6.35, 6.4, 6.45, 6.5, 6.55, 6.6, 6.65, 6.7, 6.75, 6.8, 6.85, 6.9, 6.95, 7, 7.5, 8, 8.5, 9, 9.5, 10, 10.5, 11, 11.5, 12, 13, 14, 15, 16, 17, 18, or 19 wt%. The graphite formed can include graphulerenite, and can be substantially free of croissant graphite and/or 3D graphene stacks including internal longitudinal hollow channels. For example, croissant graphite and/or 3D graphene stacks can be 0 wt% to 5 wt% of the graphite, or 0 wt% to 0.3 wt% of the graphite, or less than or equal to 5 wt% and greater than or equal to 0 wt% and less than, equal to, or greater than 0.001 wt%, 0.005, 0.01, 0.05, 0.1, 0.2, 0.3, 0.4, 0.5, 1, 1.5, 2, 2.5, 3, 3.5, 4, or 4.5 wt%. For example, croissant graphite can be 0 wt% to 5 wt% of the graphite, or 0 wt% to 0.3 wt% of the graphite, or less than or equal to 5 wt% and greater than or equal to 0 wt% and less than, equal to, or greater than 0.001 wt%, 0.005, 0.01, 0.05, 0.1, 0.2, 0.3, 0.4, 0.5, 1, 1.5, 2, 2.5, 3, 3.5, 4, or 4.5 wt%. For example, 3D graphene stacks can be 0 wt% to 5 wt% of the graphite, or 0 wt% to 0.3 wt% of the graphite, or less than or equal to 5 wt% and greater than or equal to 0 wt% and less than, equal to, or greater than 0.001 wt%, 0.005, 0.01, 0.05, 0.1, 0.2, 0.3, 0.4, 0.5, 1, 1.5, 2, 2.5, 3, 3.5, 4, 4.5, 5, 5.05, 5.1, 5.15, 5.2, 5.25, 5.3, 5.35, 5.4, 5.45, 5.5, 5.55 wt%, 5.6, 5.65, 5.7, 5.75, 5.8, 5.85, 5.9, 5.95, 6, 6.05, 6.1, 6.15, 6.2, 6.25, 6.3, 6.35, 6.4, 6.45, 6.5, 6.55, 6.6, 6.65, 6.7, 6.75, 6.8, 6.85, 6.9, or 6.95 wt%. The weight ratio of graphulerenite to croissant graphite and/or 3D graphene stacks can be equal to or greater than 10:1, 100:1, 1,000:1, 10,000:1, 100,000:1, or 1,000,000:1. The weight ratio of graphulerenite to croissant graphite can be equal to or greater than 10:1, 100:1, 1,000:1, 10,000:1, 100,000:1, or 1,000,000:1. The weight ratio of graphulerenite to 3D graphite stacks can be equal to or greater than 10:1, 100:1, 1,000:1, 10,000:1, 100,000:1, or 1,000,000:1.

The graphite can have any suitable degree of graphitization, such as 15% to 100%, or 70% to 95%, or less than or equal to 100% and greater than or equal to 15% and less than, equal to, or greater than 20%, 25, 30, 35, 40, 45, 50, 55, 60, 65, 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99%.

The second ash content range can be dependent, at least in part, on the particle size distribution of the carbonized upgraded coal. For example, if the carbonized upgraded coal has a particle size distribution that is equal to or greater than 30 microns (e.g., a particle size distribution of about 0 microns to 44 microns or less), then the second ash content range can be 7 wt% to 20 wt%, or 6.7 wt% to 20 wt%, or 5.6 wt% to 20 wt%, or less than or equal to 20 wt% and greater than or equal to 5.55 wt%, 5.6, 5.65, 5.7, 5.75, 5.8, 5.85, 5.9, 5.95, 6, 6.05, 6.1, 6.15, 6.2, 6.25, 6.3, 6.35, 6.4, 6.45, 6.5, 6.55, 6.6, 6.65, 6.7, 6.75, 6.8, 6.85, 6.9, 6.95, or 7 wt%. If the carbonized upgraded coal has a particle size distribution that does not exceed 30 microns (e.g., 0 microns to <30 microns), then the second ash content range can be 5.6 wt% to 20 wt%, or 6.7 wt% to 20 wt%, or 7 wt% to 20 wt% to <5.6 wt%, or less than or equal to 20 wt% and greater than or equal to 5.55 wt%, 5.6, 5.65, 5.7, 5.75, 5.8, 5.85, 5.9, 5.95, 6, 6.05, 6.1, 6.15, 6.2, 6.25, 6.3, 6.35, 6.4, 6.45, 6.5, 6.55, 6.6, 6.65, 6.7, 6.75, 6.8, 6.85, 6.9, 6.95, or 7 wt%. In various aspects, the method can include controlling the particle size distribution of the carbonized upgraded coal, or a carbonized upgraded coal having a particular particle size distribution, such that a particular second ash content range is achieved. In other aspects, the second ash content range is not dependent on the particle size distribution of the carbonized upgraded coal.

### Graphite.

Various aspects of the present invention provide a graphite made by the method of the present invention or having identical properties to a graphite made by the method of the present invention. The graphite can be any graphite made by a method of the present invention, such as a graphite including croissant graphite, graphulerenite, 3D graphene stacks, or a combination thereof. The graphite can include a carbonized graphitized upgraded coal.

### Electrochemical cell.

In various aspects, the present invention provides an electrochemical cell. The electrochemical cell includes at least one electrode that includes the graphite of the present invention (e.g., including croissant-shaped graphite). The electrochemical cell can include an anode and a cathode, and the anode can include the graphite of the present invention.

### Lithium-ion battery.

In various aspects, the present invention provides a lithium-ion battery. The lithium-ion battery includes the electrochemical cell of the present invention, including an electrode (e.g., an anode) that includes the graphite of the present invention (e.g., including croissant-shaped graphite, graphulerenite, 3D graphene stacks, or a combination thereof).

X-ray diffraction (XRD) analysis shows that croissant graphite particles possess a high degree of crystallinity that is comparable to that of natural flake graphite. Although the mechanisms of formation of the croissant graphite structures are still under investigation, initial examination of several particle morphologies suggests the mode of formation might involve spiral-winding or folding of 2D graphene sheets into ribbon-like structures and to croissant graphite structures. Because of the texture and spheroidal shapes of croissant graphite particles and graphulerenite, it is expected that these types of particles will be useful for the fabrication of efficient lithium-ion batteries for electric vehicle (EV) and energy storage applications as well as preparation of high-value solid carbon products such as graphene.

### Examples

Various aspects of the present invention can be better understood by reference to the following Examples which are offered by way of illustration. The present invention is not limited to the Examples given herein.

### Part I. Upgraded coal.

The coal samples were obtained from Center Mine, Freedom Mine, and Falkirk Mine in North Dakota, USA and crushed to ¼-inch-size particles and subjected to physical and chemical cleaning procedures. The coals were crushed to ¼-inch size particles and subsamples were analyzed to determine the coal properties by proximate analysis (ASTM D7582), ultimate analysis (ASTM D5373, D5016), heating value (ASTM D5865), and x-ray fluorescence (XRF) spectroscopy. The results presented in Table 1 are as expected for ND lignite.

**Table 1. Proximate, ultimate, and XRF analysis of raw coals.**

| | **Prox-Ult-Btu Analysis** | | | **XRF Analysis** | | | |
|---|---|---|---|---|---|---|---|
| ***Proximate Analysis*** | **Center** | **Falkirk** | **Freedom** | **Component** | **Center** | **Falkirk** | **Freedom** |
| Moisture | 21.51 | 32.74 | 32.69 | **SiO₂** | 26.64 | 31.92 | 15.96 |
| Volatile Matter | 44.52 | 42.56 | 44.57 | **Al₂O₃** | 13.37 | 11.29 | 11.07 |
| Fixed Carbon* | 47.42 | 46.63 | 49.27 | **Fe₂O₃** | 11.44 | 7.76 | 5.42 |
| Ash | 8.06 | 10.81 | 6.16 | **TiO₂** | 0.53 | 0.38 | 0.35 |
| Hydrogen | 4.31 | 4.29 | 4.58 | **P₂O₅** | 0.09 | 0.08 | 0.34 |
| Carbon | 62.96 | 62.68 | 66.22 | **CaO** | 16.82 | 22.16 | 30.14 |
| Nitrogen | 0.99 | 1.07 | 0.93 | **MgO** | 6.20 | 6.06 | 7.84 |
| Sulfur | 1.10 | 0.81 | 0.89 | **Na₂O** | 3.12 | 2.10 | 2.31 |
| Oxygen* | 22.57 | 20.34 | 21.21 | **K₂O** | 0.90 | 1.28 | 0.25 |
| Heating Value | 10,387 | 10,431 | 11,176 | **SO₃** | 20.36 | 15.96 | 25.20 |

| | | | | | | | |
|---|---|---|---|---|---|---|---|
| *Calculated by difference. Note: all concentrations in this table are in wt%, except the heating value that was measured in British Thermal Units (BTU). | | | | | | | |

### Example 1. Preparation of clean coal residue.

The goal of cleaning the raw coal is to reduce the ash content so that the resultant product can be a better precursor for making graphene, other materials and/or utilized as feedstock to other processes. The cleaning process involved three steps presented below, together with the results obtained.

Step 1A. Physical cleaning. Physical cleaning was performed on Center Mine and Freedom Mine coals using the float-sink method in an aqueous solution of CsCl with varying specific gravities. The principle of physical cleaning is that inorganic minerals in coals that produce ash are heavier than coal and should sink in an aqueous salt solution with higher specific gravity than water. Thus, the float fraction at an optimal specific gravity is the clean fraction. Two specific gravities of CsCl solutions or 1.4 and 1.5 were investigated using the +20-mesh size fraction of the coals. The ash content of the physically cleaned residue was determined by ASTM D7582. The results presented in Table 2 show that better cleaning was achieved by a higher specific gravity solution of CsCl. However, the ash content of the "cleaned" coals were higher than those of the raw coals primarily because of the difficulty of removing residual Cs from the clean coal residue. Thus, the resulting residue was subjected to a further cleaning step with mineral acid.

**Table 2. Ash content of raw and physically cleaned coals.**

| **Coal Source** | **Specific Gravity** | **Raw Coal Ash, wt%** | **Cleaned Coal Ash, wt%** | **% Reduction** |
|---|---|---|---|---|
| Freedom Mine (+20 mesh, float) | 1.4 | 7 | 9 | -40 |
| Freedom Mine (+20 mesh, sink) | 1.4 | 7 | 17 | -159 |
| Freedom Mine (+20 mesh, float) | 1.5 | 7 | 13 | -92 |
| Freedom Mine (+20 mesh, sink) | 1.5 | 7 | 28 | -320 |
| Center Mine (+20 mesh, float) | 1.4 | 9 | 7 | 23 |
| Center Mine (+20 mesh, sink) | 1.4 | 9 | 19 | -103 |
| Center Mine (+20 mesh, float) | 1.5 | 9 | 13 | -43 |
| Center Mine (+20 mesh, sink) | 1.5 | 9 | 64 | -605 |

Step 1B. Chemical cleaning after physical cleaning. The +20-mesh float fraction of Center Mine and Freedom Mine lignite after physical cleaning were subjected to chemical cleaning using nitric and hydrochloric acids. DI water was used as the control, while 1.4 M and 1.5 M concentrations of HNO₃ and HCl were tested to determine their performance, using a 3:1 ratio of acid to coal (volume:weight). The acid cleaned residues were analyzed to determine the ash content. The results presented in Table 3 indicate that physical cleaning, followed by chemical cleaning yielded percent reductions of 79% to 85%, with actual residual ash in the cleaned product of 1-2 wt%. This residual ash content is well below the 5-wt% target set at the beginning of the project.

**Table 3. Ash content of coals before and after physical and chemical cleaning.**

| **Coal Source** | **Solvent (conc.)** | **Raw Coal Ash, wt%** | **Cleaned Coal Ash, wt%** | **% Reduction** |
|---|---|---|---|---|
| Freedom Mine | DI water | 6.62 | 10.10* | -52.56 |
| Freedom Mine | HNO₃ (1.5 M) | 6.62 | 1.01 | 84.74 |
| Freedom Mine | HCl (1.5 M) | 6.62 | 1.32 | 80.09 |
| Center Mine | DI water | 9.12 | 7.38 | 19.11 |
| Center Mine | HNO₃ (1.5 M) | 9.12 | 1.95 | 78.60 |
| Center Mine | HCl (1.5 M) | 9.12 | 1.53 | 83.23 |

| | | | | |
|---|---|---|---|---|
| *Low loss on injection (LOI) determination impacted the results. | | | | |

Step 2. Chemical cleaning only. A chemical cleaning only step was investigated to evaluate the possibility to use only chemical acids for the cleaning without an initial physical cleaning step to avoid unnecessary steps, which enhances the process economic feasibility. The chemical cleaning step involved using mineral acids such as hydrochloric acid to clean the +20-mesh coal samples. For comparison, a -200-mesh particle-size sample of Falkirk lignite was also cleaned to determine any potential particle-size effects on the cleaning process. The ash content of the cleaned residues was determined by proximate analysis (ASTM D7582). The results shown in Table 4 indicate percent ash reductions in the range 43% to 66%, with no major particle-size effects observed in the Falkirk coal results. While these results are good, they represent a slightly lower ash reduction performance by only conducting chemical cleaning compared to physical and chemical cleaning combined (see Table 4).

**Table 4. Ash content of raw coal and product from chemical fractionation cleaning.**

| **Coal Mine** | **Raw Coal Ash, wt%** | **Acid Cleaned Ash, %** | **% Reduction** |
|---|---|---|---|
| Freedom | 6.16 | 2.08 | 66 |
| Center | 8.06 | 4.08 | 49 |
| Falkirk | 10.81 | 5.83 | 46 |
| Falkirk, -200 mesh | 10.81 | 6.19 | 43 |

### Example 2. Reacting clean coal residue with oxidizable inorganic metallic agent.

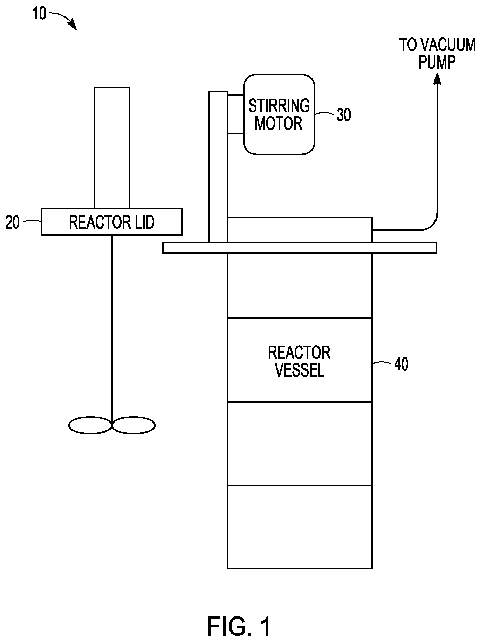

The clean coal residue obtained by acid cleaning of the raw coal was treated in an autoclave reactor, with the aim to reduce the content of heteroatoms such as oxygen or sulfur. Heteroatoms, particularly oxygen, can promote cross-linking reactions that produce isotropic char during heat treatment in the production of synthetic graphite. Cross-linking reduces the quality (low crystallinity) of the resulting graphitic material, thus, rendering it unsuitable for making graphene or for other applications that require high quality graphite. The autoclave reactor used in these experiments is rated at maximum temperature and pressure limits of 600°C and about 5000 psi, respectively. A schematic of the autoclave reactor system 10 is shown in FIG. 1, which includes reactor vessel 40, reactor lid and stirrer assembly 20, and stirring motor 30.

The coal sample was prepared as a slurry of the coal in an aqueous solution of the oxidizable inorganic metallic agent. Center lignite was reacted with an aqueous solution of hydrated ferrous chloride, while Falkirk and Freedom lignite were reacted with an aqueous solution of hydrated ferrous sulfate. The coal slurry sample was placed in the autoclave reactor sleeve, and the system was sealed off. The reactor was evacuated to about -28 inHg vacuum to remove any trapped air/oxygen and then backfilled and flushed with argon. After five cycles of evacuation, backfilling and flushing, the system was placed at atmospheric pressure using argon. The reactor was heated to the target temperature of 300 °C (572 °F). The target temperature was maintained for about 1 hr 30 min, and then the heaters were turned off to allow gradual cooling to room temperature overnight. Ideally, the reactor is cooled rapidly to room temperature to quench the reaction by installing cooling coils in the autoclave reactor. The coal residue was recovered and rinsed three times with DI water or until a clear solution filtrate was obtained. The filtered residue was placed in aluminum trays and dried in an oven at 70 °C for 24 hrs and then stored in an air-tight container.

Samples of the vapors generated during reaction in the autoclave were collected using chromatographic gas bags, which were subsequently analyzed by gas chromatography (GC). The results are presented in Table 5 and include all gas components with available calibrations. The results show that a significant fraction of the gases evolved was CO₂ for all three coals. Alongside CO₂ were H₂, CO, N₂, and H₂S, with small detections of light hydrocarbons (C1-CS) at less than 0.1%, except for methane that was detected at 0.4%, 0.8%, and 1.8% for Center lignite, Falkirk lignite, and Freedom lignite, respectively. The closures for the gas analyses were 99.5%, 105.6%, and 110.6% for Center, Falkirk, and Freedom lignite, respectively. These closures indicate that the amount of undetected species (due to no calibration standard) was about 10% or less, which suggest that the results in Table 5 give a good representation of the major components of the gas stream evolved during autoclave coal reactions for each lignite. The results further indicate that loss of oxygen and sulfur likely occur as CO₂, CO, and H₂S.

**Table 5. Composition of Gases Evolved During Autoclave Reactions in mol%.**

| **Component** | **Center** | **Falkirk** | **Freedom** |
|---|---|---|---|
| Hydrogen | 7.208 | 2.254 | 6.554 |
| Hydrogen Sulfide | 0.426 | 1.882 | 0.000 |
| Carbon Dioxide | 83.051 | 91.383 | 84.375 |
| Carbon Monoxide | 2.096 | 1.079 | 1.541 |
| Nitrogen | 6.429 | 2.153 | 4.888 |
| Methane | 0.411 | 0.783 | 1.826 |
| Ethane | 0.060 | 0.092 | 0.258 |
| Ethylene | 0.082 | 0.089 | 0.119 |
| Propane | 0.059 | 0.086 | 0.156 |
| Propylene | 0.095 | 0.102 | 0.129 |
| n-Butane | 0.005 | 0.010 | 0.025 |
| Iso-Butane | 0.009 | 0.011 | 0.021 |
| 1-Butene | 0.012 | 0.010 | 0.016 |
| Iso-Butylene | 0.041 | 0.052 | 0.064 |
| trans-2-Butene | 0.006 | 0.005 | 0.007 |
| cis-2-Butene | 0.008 | 0.007 | 0.010 |
| n-Pentane | 0.003 | 0.004 | 0.009 |

The results of proximate and ultimate analyses of the autoclave-reacted coal residues are presented in Table 6 together with the raw coal analysis for comparison. The proximate analysis data indicate that the volatile matter (VM) in the coals reduced by 13%-19%, with a corresponding increase in fixed carbon (FC) by 16%-19%. Ultimate analysis results show a 17%-21% reduction in oxygen, 9%-10% increase in Btu, 8%-10% decrease in H₂, and 9%-11% increase in carbon, which corroborate the reduced VM and increased FC observed in proximate analysis. There is a small sulfur reduction of 4% for reacted Center lignite, but a 13% and 29% increase in sulfur for Freedom and Falkirk lignite, respectively. The observed differences in sulfur contents is attributed to the use of ferrous sulfate for treating Falkirk and Freedom lignite as opposed to ferrous chloride used for Center lignite. Because the chemical reagent used in these tests was primarily aimed at reducing the oxygen content in the coals, the reduction of sulfur by 4% in Center lignite provides additional benefit and ability to reduce the heteroatom content of coals. The decrease in VM, increase in FC, and reduction in oxygen content of the reacted coals relative to the raw coals are all good characteristics that enable the reacted coals to be better graphene precursors.

**Table 6. Proximate and Ultimate Analysis of the Raw and Autoclave-Reacted Coals.**

| | **Before Autoclave Reaction** | | | **After Autoclave Reaction** | | | **% Change**** | | |
|---|---|---|---|---|---|---|---|---|---|
| ***Proximate Analysis*** | **Center** | **Falkirk** | **Freedom** | **Center** | **Falkirk** | **Freedom** | **Center** | **Falkirk** | **Freedom** |
| Moisture | 21.51 | 32.74 | 32.69 | 1.94 | 18.35 | 1.39 | | | |
| Volatile Matter | 44.52 | 42.56 | 44.57 | 36.05 | 36.69 | 38.70 | -19 | -14 | -13 |
| Fixed Carbon* | 47.42 | 46.63 | 49.27 | 56.55 | 54.29 | 58.42 | 19 | 16 | 19 |

| *Ultimate Analysis* | | | | | | | | | |
|---|---|---|---|---|---|---|---|---|---|
| Hydrogen | 4.31 | 4.29 | 4.58 | 3.90 | 3.95 | 4.23 | -10 | -8 | -8 |
| Carbon | 62.96 | 62.68 | 66.22 | 68.65 | 68.54 | 73.39 | 9 | 9 | 11 |
| Nitrogen | 0.99 | 1.07 | 0.93 | 1.08 | 1.09 | 0.94 | 9 | 2 | 1 |
| Sulfur | 1.10 | 0.81 | 0.89 | 1.06 | 1.05 | 1.00 | -4 | 29 | 13 |
| Oxygen* | 22.57 | 20.34 | 21.21 | 17.91 | 16.35 | 17.55 | -21 | -20 | -17 |
| Btu | 10387 | 10431 | 11176 | 11425 | 11394 | 12242 | 10 | 9 | 10 |

| | | | | | | | | | |
|---|---|---|---|---|---|---|---|---|---|
| *Calculated by difference. **Positive value means increase in parameter, and negative value means a decrease in parameter. | | | | | | | | | |

The XRF analysis results of the autoclave-reacted coals, including data for the raw coals for comparison, are presented in Table 7. The results show an increase in some of the components and a decrease in others; these findings are consistent with the nature of the reactions. Sulfur represented in oxide form shows a significant reduction, which is different from what was observed in ultimate analysis and can be attributed to differences in the analytical techniques.

**Table 7. XRF Analysis of Raw and Autoclave-Reacted Coals.**

| | **Before Autoclave Reaction** | | | **After Autoclave Reaction** | | | **% Change*** | | |
|---|---|---|---|---|---|---|---|---|---|
| ***Component*** | **Center** | **Falkirk** | **Freedom** | **Center** | **Falkirk** | **Freedom** | **Center** | **Falkirk** | **Freedom** |
| SiO₂ | 26.64 | 31.92 | 15.96 | 48.96 | 47.17 | 63.24 | 84 | 48 | 296 |
| Al₂O₃ | 13.37 | 11.29 | 11.07 | 14.32 | 15.42 | 16.61 | 7 | 37 | 50 |
| Fe₂O₃ | 11.44 | 7.76 | 5.42 | 32.76 | 34.50 | 13.52 | 186 | 344 | 149 |
| TiO₂ | 0.53 | 0.38 | 0.35 | 0.86 | 1.30 | 0.75 | 61 | 239 | 112 |
| P₂O₅ | 0.09 | 0.08 | 0.34 | 0.03 | 0.04 | 0.02 | -62 | -50 | -93 |
| CaO | 16.82 | 22.16 | 30.14 | 0.01 | 0.09 | 0.07 | -100 | -100 | -100 |
| MgO | 6.20 | 6.06 | 7.84 | 0.71 | 0.24 | 0.69 | -88 | -96 | -91 |
| Na₂O | 3.12 | 2.10 | 2.31 | 0.28 | 0.18 | 0.47 | -91 | -91 | -80 |
| K₂O | 0.90 | 1.28 | 0.25 | 1.30 | 0.21 | 2.42 | 45 | -84 | 867 |
| SO₃ | 20.36 | 15.96 | 25.20 | 0.23 | 0.37 | 0.71 | -99 | -98 | -97 |

| | | | | | | | | | |
|---|---|---|---|---|---|---|---|---|---|
| *Positive value means increase in parameter and negative value means decrease in parameter. | | | | | | | | | |

### Example 3, Reacting the coal residue with a reducing agent.

The residue obtained from the acid cleaning process or from the autoclave experiments was treated with lithium aluminum tetrahydride (LAH) primarily to reduce multiple bonds of oxygen functional groups such as carbonyl or carboxylic acid or multiple bonds in any nitrogen functional groups. The LAH experiments were conducted on separate portions of the coal residue obtained from the acid cleaning step or from the autoclave reaction. In each experiment, 20 g of coal residue was mixed with 50 mL of LAH solution in diethylether (DEE) and stirred for 20 minutes. DI water was used for reaction work-up. The resultant mixture was rinsed several times with additional DI water until a clear filtrate solution was obtained. The final residue was dried in an oven at 70 °C overnight and then stored in air-tight containers prior to analysis.

Elemental analysis results shown in Table 8 indicate a reduction in sulfur content by 24 wt% and 22 wt% for Center lignite and Freedom lignite, respectively. The nitrogen content was reduced by 15 wt% (Center coal) and 5 wt% (Freedom coal), while the oxygen content increased by 19 wt% for Center coal and 21 wt% for Freedom coal. The increase in oxygen, rather than a decrease, is because of residual oxygen content in the leftover LAH products of the reactions. Since the ultimate analysis determines oxygen content by difference, it is impossible to distinguish oxygen present in LAH products versus oxygen in coal residue. As discussed later in the FTIR analysis section, the LAH reactions were successful in reducing the C=O multiple bond groups to alcohols, as well as demonstrate efficacy in reducing the heteroatom content. Removal of the LAH reaction byproducts would further improve the quality of the residue as a graphene precursor or for other applications.

**Table 8. Proximate and Ultimate Analysis of Coals Before and after LAH Reactions.**

| | **Before LAH Reaction** | | **After LAH Reaction** | | **% Change, moisture-free** | |
|---|---|---|---|---|---|---|
| ***Proximate Analysis*** | **Center** | **Freedom** | **Center** | **Freedom** | **Center** | **Freedom** |
| Moisture | 1.94 | 1.39 | 1.47 | 1.31 | N/A | N/A |
| Volatile Matter | 36.05 | 38.70 | 39.03 | 39.97 | 8 | 3 |
| Fixed Carbon* | 56.55 | 58.42 | 40.39 | 44.21 | -29 | -24 |
| Ash | 7.40 | 2.88 | 20.58 | 15.82 | 178 | 449 |

| *Ultimate Analysis* | | | | | | |
|---|---|---|---|---|---|---|
| Hydrogen | 3.90 | 4.23 | 3.72 | 3.97 | -5 | -6 |
| Carbon | 68.65 | 73.39 | 52.62 | 57.39 | -23 | -22 |
| Nitrogen | 1.08 | 0.94 | 0.91 | 0.89 | -15 | -5 |
| Sulfur | 1.06 | 1.00 | 0.80 | 0.78 | -24 | -22 |
| Oxygen* | 17.91 | 17.55 | 21.36 | 21.15 | 19 | 21 |

| | | | | | | |
|---|---|---|---|---|---|---|
| *Calculated by difference. | | | | | | |

### Example 4, Fourier transform infrared (FTIR) spectroscopy characterization of ND lignite coals and upgraded residues.

FTIR spectroscopy is an effective, quick, nondestructive technique for obtaining chemical information from a sample, especially regarding the different organic functional groups. An attenuated total reflection (ATR) FTIR spectrometer was used for these analyses. In each case, a finely ground powder sample sieved through a -325 mesh (≤ 44 µm) was used for the analysis.

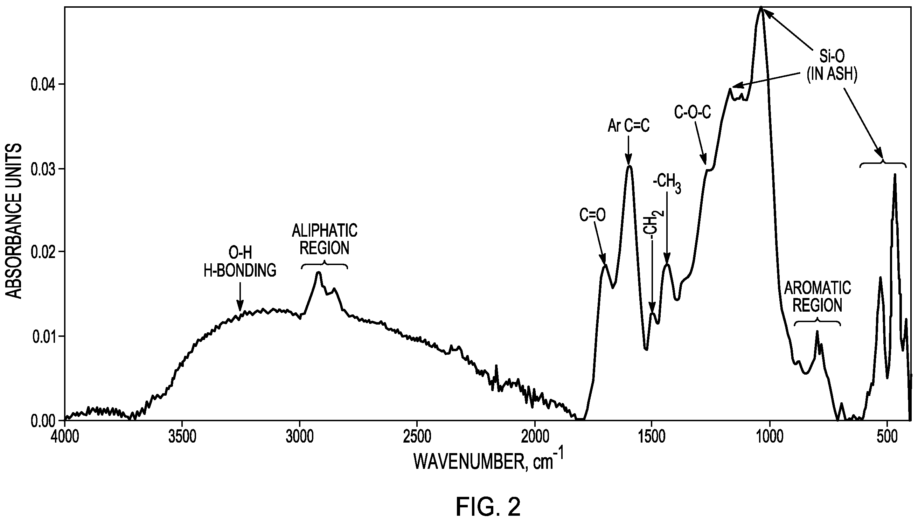

FIG. 2 shows an example of an FTIR spectrum obtained from a ND lignite sample. The various functional groups are marked on the spectrum and the specific absorption band assignments are as follows. The broad hump from around 3050-3750 cm⁻¹ is assigned to the hydrogen bonding (H-bonding) in the coal from carboxylic acids and alcohols. The peaks at 2853 cm⁻¹ and 2924 cm⁻¹ are the symmetric CH₃ and asymmetric CH₂ groups in the aliphatic chains. The carbonyl group bands occur at 1700 cm⁻¹ and the aromatic C=C bond stretch occurs at around 1598 cm⁻¹. The peaks at about 1501 cm⁻¹ and 1439 are due to CH₂ and CH₃ deformations, respectively. The broad, shoulder peak at 1262 cm⁻¹ is assigned to the ether functional group, while the peaks around 1169 cm⁻¹ and 1039 cm⁻¹ as well as 530 cm⁻¹, 424 cm⁻¹, and 468 cm⁻¹ are attributed to SiO₂ in the ash. The aromatic ring bands occur in the region from 700 to 900 cm⁻¹, with the center location marked in the spectrum at about 798 cm⁻¹.

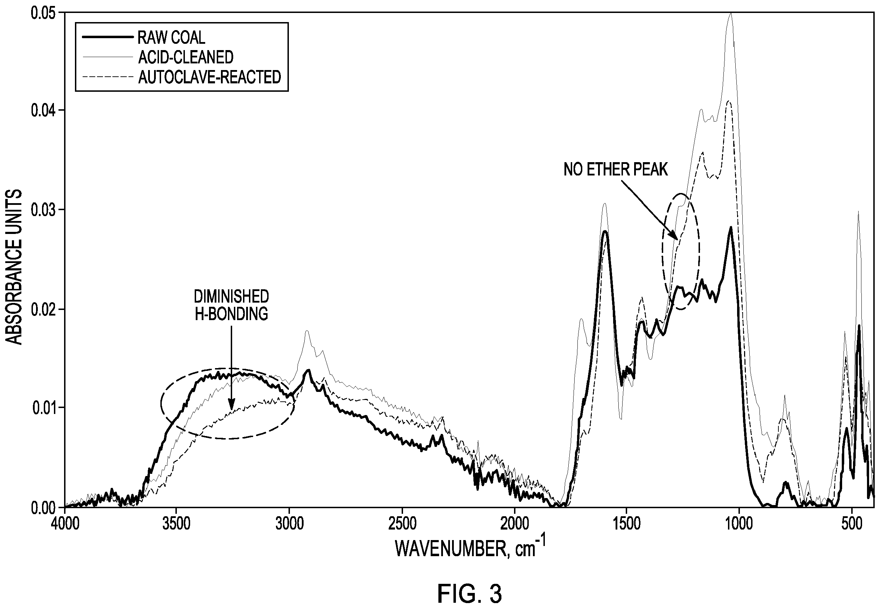

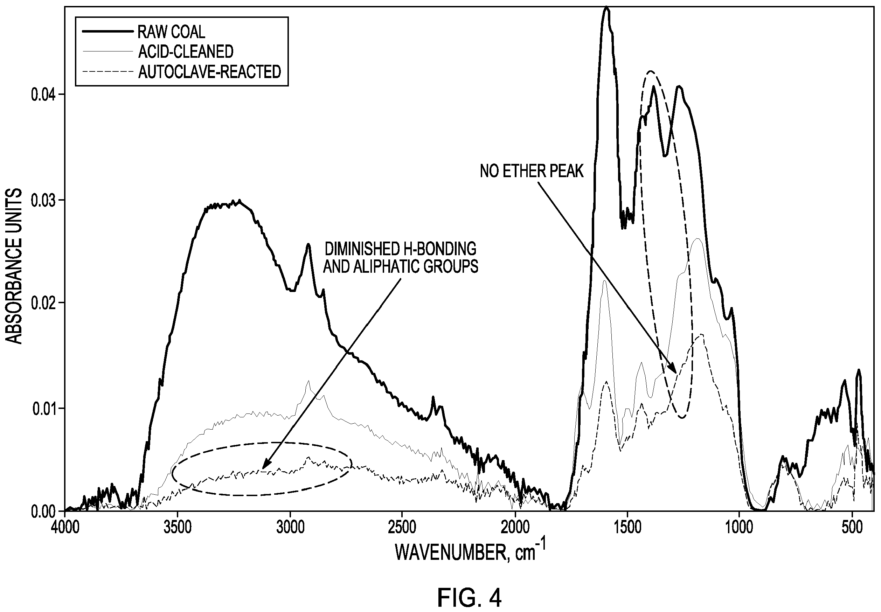

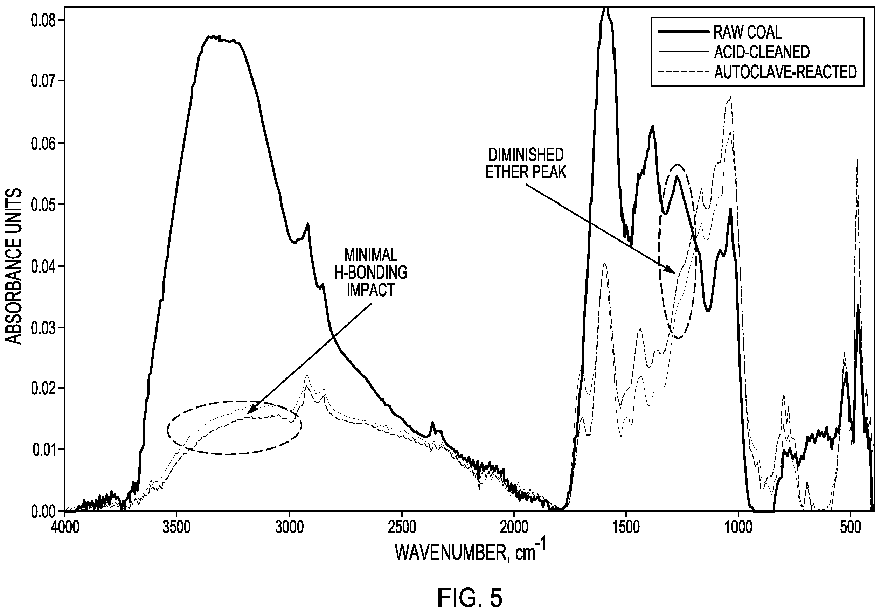

FIG. 3 shows the FTIR spectrum of Center Mine lignite for raw, acid cleaned, and autoclave reacted samples to demonstrate the effectiveness of the autoclave reactions. The goal of this reaction was to reduce the oxygen content in coals, thus, enhancing the graphitizability of the coal and improving its quality as a better graphene precursor. The raw (black) and acid cleaned (red) spectra clearly show the ether functional groups present, but the autoclave-reacted residue shows no ether. This suggests that the oxygen associated with the ether groups was removed; this finding is consistent with the observed oxygen reductions in the elemental analysis of the autoclave-reacted coal residues. The extent of H-bonding is also diminished as a result of the autoclave reactions, but the carbonyl groups around 1698 cm⁻¹ are unaffected. The aromatic content of the coals appears to be enhanced, as observed by the higher intensities of the aromatic peaks in the region 700-900 cm⁻¹. Similar observations were made for Freedom Mine and Falkirk Mine coals as displayed in FIGS. 4 and 5. However, the ether groups in the Falkirk coal were not completely removed as a result of challenges during the autoclave reactions, which suggest the optimal conditions were not met. In addition, the content of the aliphatic groups in Freedom coal was also diminished.

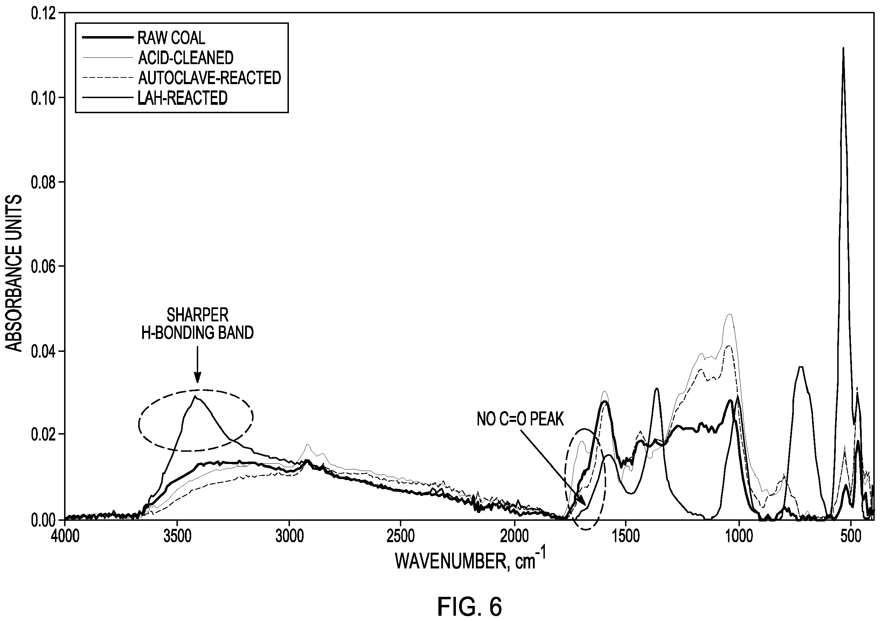

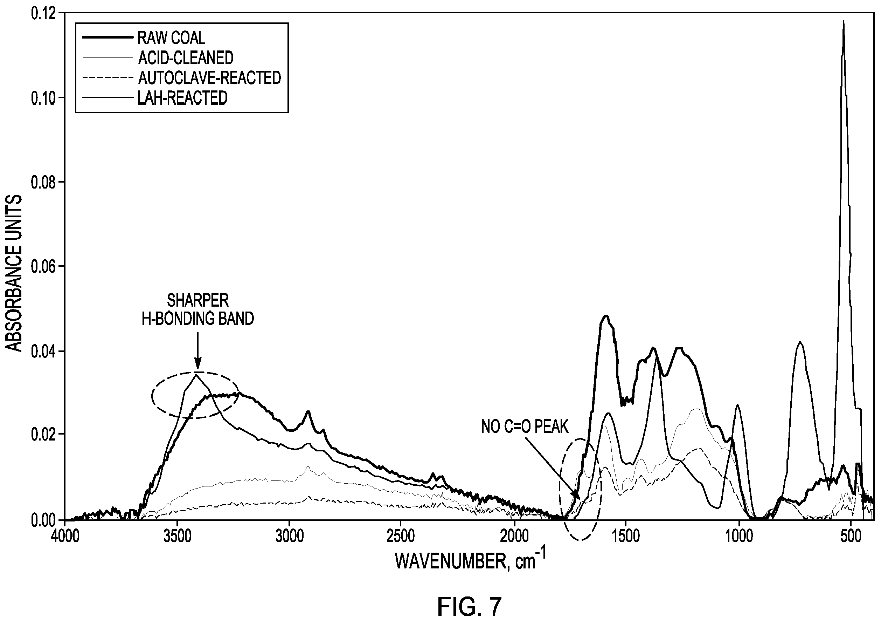

To demonstrate the effectiveness of the LAH reaction and its ability to reduce C=O multiple bonds in the coals to their corresponding single bonds as in alcohols, this reaction was carried out on Center Mine and Freedom lignite autoclave-reacted residues. In FIGS. 6 and 7, the spectra for raw, acid-cleaned, autoclave-reacted, and LAH-reacted coal residues are displayed for Center Mine coal and Freedom Mine coal, respectively. In both cases, the absence of the C=O peak in the LAH-reacted residue is an indication of effective reduction of carbonyl groups in the coals. Additionally, the broad hump in the 3050-3750 cm⁻¹ region becomes sharper compared to the raw coal, acid-cleaned, and autoclave-reacted residues. This observation further suggests that the carbonyl in the carboxylic acid groups was also reduced to alcohols. Carboxylic acid groups often exhibit electron delocalization which could cause broader FTIR peaks, but alcohols do not experience this electron phenomenon and so exhibit sharper H-bonding bands than the carboxylic acid bands.

### Part II. Upgraded coal, and carbonization and graphitization thereof.

The method developed in this Part includes four steps, including physical and chemical cleaning, heteroatom reduction reaction (HRR), carbonization, and graphitization.

### Physical and Chemical Cleaning.

Subsamples of coal were crushed to -30-mesh (0.57 mm) or -60-mesh (0.26 mm) or ¼-inch (6.35 mm) particle sizes. About 500 g was subjected to physical and chemical cleaning procedures. Physical cleaning involved a flotation approach based on specific gravity separation where the crushed coal sample was mixed with a cesium chloride (CsCl) solution prepared to have a specific gravity of about 1.5, 1.8 or 2.0 or higher in a large separatory funnel or similar device. The mixture was allowed to separate freely under gravity for about 5 to 10 minutes and the float fraction was recovered for further cleaning with mineral acids. Multiple physical separations can be utilized depending on the feedstock material and its starting ash content, with higher ash content requiring multiple physical separations.

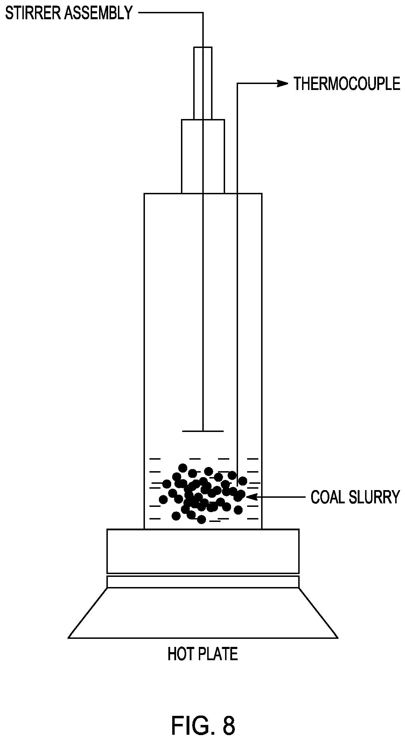

Chemical cleaning was performed with aqueous hydrochloric acid solution. The coal sample from the physical cleaning step was mixed with a 1.5 M or 1.8 M or 2.0 M or 2.5 M or 3.0 M HCl solution in the ratio of 3 parts acid by volume to 1 part coal by mass. The mixture was stirred gently overnight at 50 °C to 70 °C using the apparatus with the schematic shown in FIG. 8. The coal sample was recovered the next day, rinsed with deionized (DI) water, and dried in an oven at 70-105°C for 1-2 hrs before analysis.

### Heteroatom Reduction Reaction.

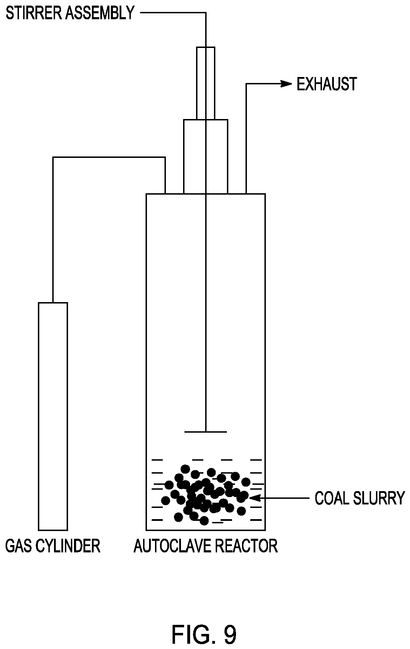

Heteroatoms in the starting carbon ore materials or feedstocks refer to nitrogen (N), sulfur (S), and oxygen (O) which are collectively referred to as NSO. The clean coal residue was further upgraded by reacting with a 0.5 M or suitable concentration of ferrous chloride solution in an autoclave reactor (as illustrated in FIG. 9) to reduce the heteroatom content. The reactor is rated at a maximum temperature and pressure of 600 °C and 5000 psi, respectively. The sample was prepared as a slurry mixture of coal and aqueous solution of 0.5 M ferrous chloride and placed in the reactor. The reactor was sealed off and evacuated to about -28-inHg vacuum, then backfilled and flushed with argon for three cycles to remove any traces of air. The system was placed at atmospheric pressure using argon as inert gas, heated to a target temperature of 572 °F (300 °C), and maintained at 300 °C for about 90 min or a suitable length of time based on NSO content of starting material; with higher NSO run for longer time. The heaters were turned off, and cooling water was circulated through coils to facilitate cooling to room temperature while the system was sealed under inert conditions, with intermittent purging to release the evolved gases containing the released NSO compounds. The coal residue was recovered and rinsed multiple times with DI water or until a clear solution filtrate was obtained. A better and more efficient approach to remove the released inorganic ions in the coal residue would be to use a diafiltration system, an osmosis process, or a similar system where there is exchange of ions between the coal residue and a DI water reservoir buffer across a semipermeable membrane. The filtered upgraded coal residue was dried in an oven at 70 °C overnight, then stored in an airtight container prior to analysis.

### Carbonization.

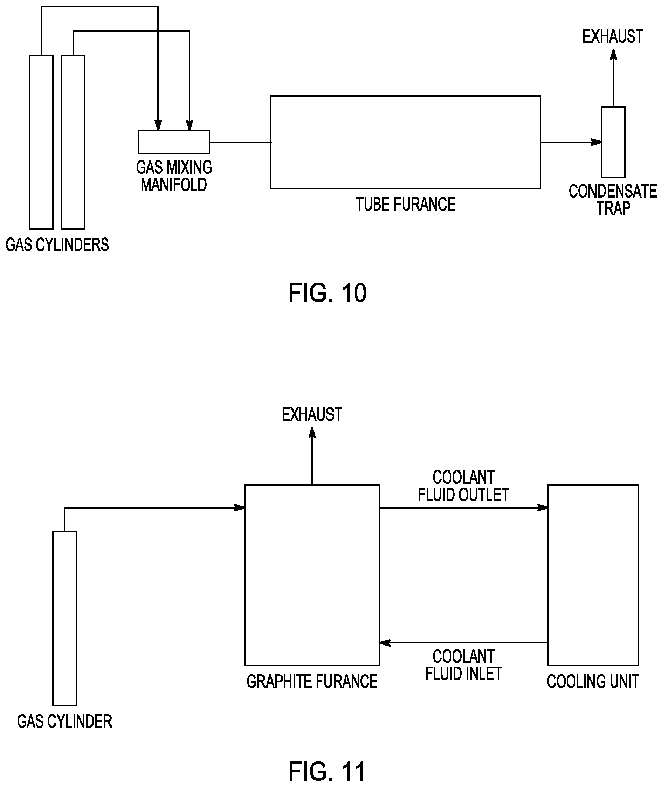

Carbonization of the upgraded coal samples was conducted using a system illustrated in FIG. 10, which consists of an inert gas source, tube furnace, and a condensate trap. An optional analytical instrument can be connected for continuous real-time analysis of the gases coming from the system after the condensate trap. The process involved placing 90 g or any suitable amount of each coal sample in the tube furnace and evacuating the system to about -25-inHg pressure and backfilling with argon three times before heating begins. The temperature was then ramped up under inert atmosphere in stages. First, the temperature was raised to 600 °C at 10 °C/min and held at 600 °C for 30 min. Second, it was further ramped to 1000 °C at 10 °C/min and held for another 30 min. The final stage involved ramping to 1600 °C at 6 °C/min and holding for 2 hr. The temperature program was ramped down to 0 °C at 20 °C/min, and the furnace was left to cool down to room temperature or overnight under inert conditions prior to retrieving the carbonized coal residue and condensation products.

### Graphitization.

Graphitization of the coal samples was performed using the graphite furnace shown schematically in FIG. 11. About 25 g or any suitable amount of a carbonized coal sample was placed in graphite crucibles with lids, and the crucibles were placed in the furnace. The furnace chamber was sealed and evacuated by a vacuum pump to 1-mbar vacuum and then backfilled with argon. The cycle of evacuation and backfilling was repeated three times to ensure complete removal of any air/oxygen traces in the chamber. A final evacuation/backfilling cycle was performed prior to starting the heating program. The furnace was heated under flowing argon at about 60 °C/min to 1250 °C, 20 °C/min to 2500 °C and, finally, 8 °C/min to 2800 °C. The samples were maintained at 2800 °C for 1 hr or a suitable time duration, and the furnace heat was shut down and allowed to cool overnight under flowing argon. The samples were recovered and stored in an airtight container for subsequent analysis.

Two sets of samples that underwent different preprocessing conditions were graphitized. The first set was cleaned, carbonized, and graphitized (prefix C-), while the second set was cleaned, HRR in an autoclave, carbonized, and graphitized (prefix CA-). The coal-derived graphite samples are abbreviated as LDG, SDG, BDG, and ADG for lignite-, subbituminous-, bituminous-, and anthracite-derived graphite, respectively. For example, the first set is named C-LDG, C-SDG, C-BDG, and C-ADG. The graphitization conditions were varied from 1 hr (1H), 2 hrs total time heated 1 hr in succession (1H1H), and 2 hrs direct heating (2H). The sample identifications based on graphitization conditions is provided in Table 9.

**Table 9. Graphitization Conditions and Sample Designations for Each Coal Type**

| Condition | Lignite | Subbituminous | Bituminous | Anthracite |
|---|---|---|---|---|
| Heat carbonized sample for 1 hr at 2800 °C | LDG-1H | SDG-1H | BDG-1H | ADG-1H |
| Heat a carbonized Sample for 1 hr, cool to room temp, and heat again for another 1 hr (2 hrs total in succession) | LDG-1H1H | SDG-1H1H | BDG-1H1H | ADG-1H1H |
| Heat a Carbonized Sample for 2 hrs Straight | LDG-2H | SDG-2H | BDG-2H | ADG-2H |

### RESULTS

### Raw Feedstock Characterization.

In this Part, the carbon ore feedstock used was primarily coal. The raw coal samples were analyzed to determine the coal characteristics by proximate and ultimate analysis, x-ray fluorescence (XRF) spectroscopy, and solid-state attenuated total reflectance-Fourier transform infrared (ATR-FTIR) spectroscopy. XRF results in Table 10 indicate that the bituminous and anthracite samples are high in silica and alumina, while lignite and subbituminous samples are high in calcium and sulfur. All other chemical species across all four coals are moderate to low in concentration. The proximate and ultimate analysis results (Table 11) show high moisture for lignite and subbituminous coals and relatively low moisture for bituminous and anthracite coals. The ash content of bituminous coal sample was high. The heating values of lignite and subbituminous coals are higher than typical and indicate relatively good quality coal samples. These results were helpful in developing methods to effectively remove inorganic constituents that produce ash in coals.

**Table 10. XRF Analysis of Raw Coal Chemical Composition**

| Component, wt% | Lignite | Subbituminous | Bituminous | Anthracite |
|---|---|---|---|---|
| SiO₂ | 11.04 | 16.95 | 70.14 | 52.61 |
| Al₂O₃ | 9.07 | 14.57 | 11.78 | 30.71 |
| Fe₂O₃ | 14.27 | 5.95 | 2.65 | 5.88 |
| TiO₂ | 0.16 | 0.49 | 0.59 | 2.01 |
| P₂O₅ | 0.05 | 2.28 | 0.15 | 0.32 |
| CaO | 24.90 | 23.09 | 5.19 | 2.03 |
| MgO | 7.25 | 6.04 | 1.86 | 0.93 |
| Na₂O | 1.90 | 1.51 | 1.26 | 0.59 |
| K₂O | 0.17 | 0.22 | 1.17 | 2.34 |
| SO₃ | 30.50 | 27.41 | 5.12 | 2.26 |
| SrO | 0.46 | 0.49 | 0.05 | 0.08 |
| BaO | 0.15 | 0.99 | 0.04 | 0.18 |
| MnO | 0.09 | 0.02 | 0.01 | 0.05 |

**Table 11. Proximate and Ultimate Analysis of Raw Coal Samples (as-received basis)**

| Component, wt% | Lignite | Subbituminous | Bituminous | Anthracite |
|---|---|---|---|---|
| *Proximate Analysis* | | | | |
| Moisture | 38.11 | 18.81 | 7.76 | 4.59 |
| Volatile Matter | 42.09 | 39.89 | 36.42 | 8.10 |
| Fixed Carbon* | 51.24 | 56.39 | 44.98 | 78.82 |
| Ash | 6.67 | 3.72 | 18.60 | 13.08 |

| *Ultimate Analysis* | | | | |
|---|---|---|---|---|
| Hydrogen | 4.70 | 4.77 | 4.44 | 2.24 |
| Carbon | 65.46 | 71.66 | 64.42 | 79.85 |
| Nitrogen | 1.11 | 1.04 | 1.12 | 0.91 |
| Sulfur | 1.18 | 0.20 | 0.42 | 0.69 |
| Oxygen* | 20.88 | 18.60 | 11.00 | 3.23 |
| Heating Value, Btu | 11,121 | 12,234 | 11,293 | 12,733 |

| | | | | |
|---|---|---|---|---|
| * Determined by difference. | | | | |

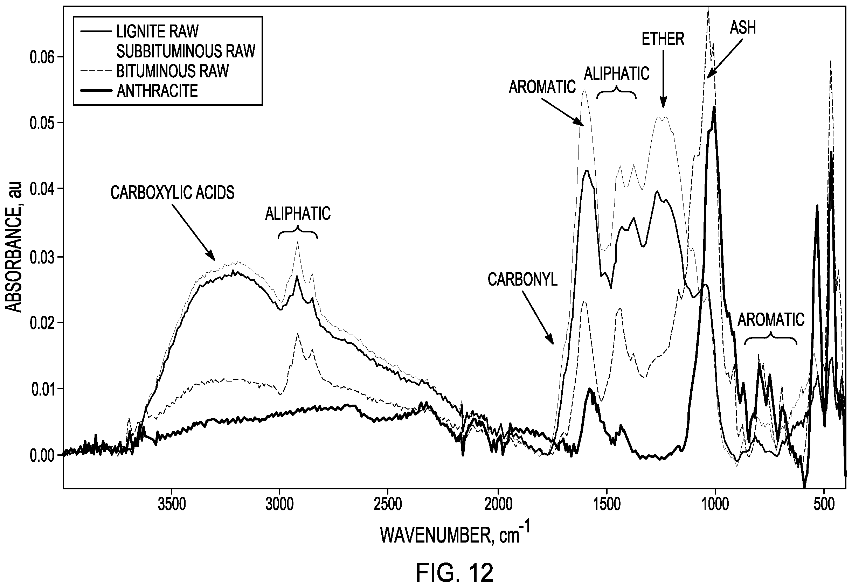

FTIR spectroscopy provides information about the key functional groups in the coals and was used to qualitatively evaluate the coal samples for ash content, volatile (aliphatic) content, aromatic content, and oxygen-containing functional groups. The ATR-FTIR spectra of the raw coal samples (FIG. 12) show similar characteristics, but the functional groups and peak intensities vary by coal type to reflect the presence, or lack thereof, and relative amounts of the groups. The results further indicate a higher aliphatic and lower aromatic content in lignite and subbituminous coals, while bituminous and anthracite have higher aromatic content. The level of aliphatic content in bituminous coals is higher than in anthracite. Ash content, as depicted by the ATR-FTIR spectra peak around 1000-1100 cm⁻¹, is highest in bituminous coal, followed by anthracite, and lignite and subbituminous coals have similar ash content. This qualitative trend is consistent with the quantitative results obtained by proximate analysis (Table 11).

### Results of Physical and Chemical Cleaning.

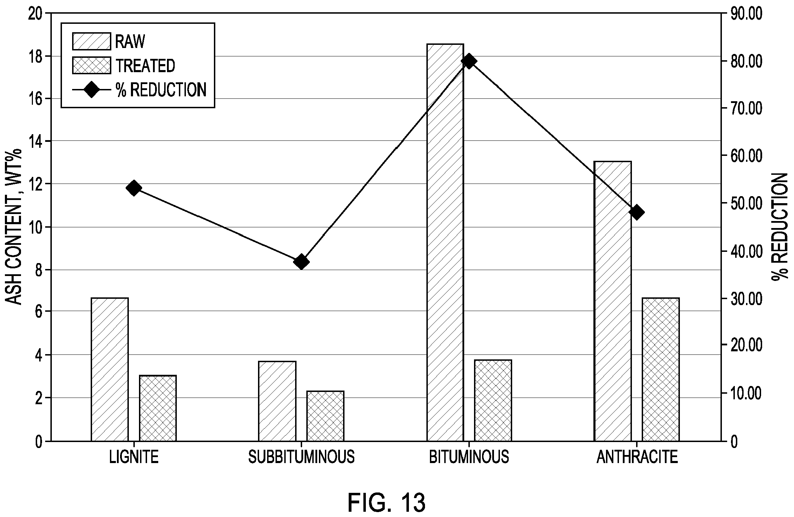

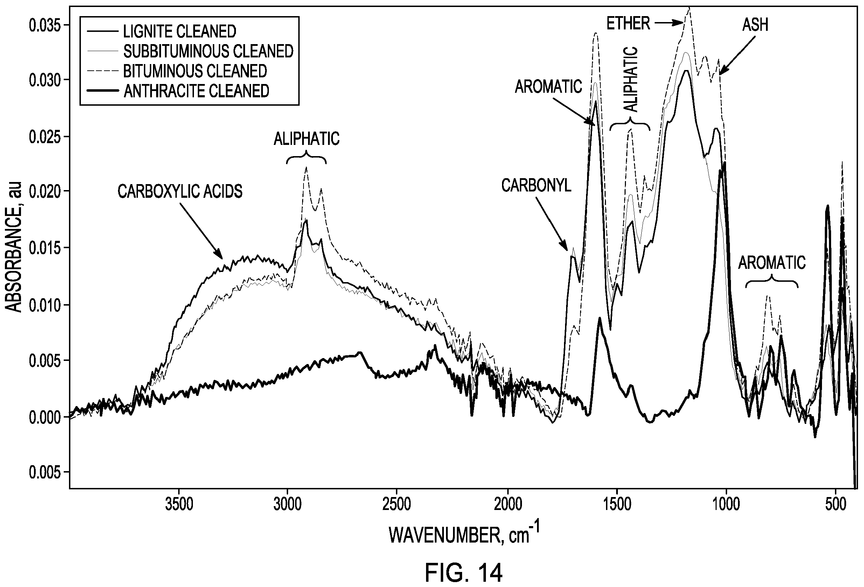

Proximate and ultimate analysis (Table 12) of the clean coal samples shows that the ash impurity reductions ranged from 37% to 80% (FIG. 13), with residual ash content of 3.1 wt% for lignite, 2.3 wt% for subbituminous, 3.7 wt% for bituminous, and 6.8 wt% for anthracite. The ATR-FTIR results of cleaned coal samples in FIG. 14 show greatly diminished ash peaks, near 1050 cm⁻¹ compared to the raw coal spectra in FIG. 12. The ATR-FTIR ash trend predictions are consistent with the ash reductions determined by proximate analysis. These results are good and can be improved to further improve the quality of the coal-derived graphite to be used for high-end applications such as for lithium-ion batteries.

**Table 12. Proximate and Ultimate Analysis of Clean Coal Samples (as-received basis)**

| Component, wt% | Lignite | Subbituminous | Bituminous | Anthracite |
|---|---|---|---|---|
| *Proximate Analysis* | | | | |
| Moisture | 8.72 | 1.60 | 1.25 | 0.3 |
| Volatile Matter | 45.14 | 45.00 | 42.42 | 8.92 |
| Fixed Carbon* | 51.75 | 52.68 | 53.87 | 84.25 |
| Ash | 3.11 | 2.32 | 3.71 | 6.83 |

| *Ultimate Analysis* | | | | |
|---|---|---|---|---|
| Hydrogen | 4.50 | 4.64 | 5.12 | 2.53 |
| Carbon | 66.79 | 71.70 | 75.40 | 73.21 |
| Nitrogen | 1.07 | 1.12 | 1.36 | 0.96 |
| Sulfur | 1.73 | 0.2541 | 0.49 | 0.64 |
| Oxygen* | 22.79 | 19.98 | 13.92 | 15.82 |
| Heating Value, Btu | 11,110 | 12,082 | 13,194 | 13,713 |

| | | | | |
|---|---|---|---|---|
| *Determined by difference. | | | | |

### Results of Heteroatom Reduction Reactions.

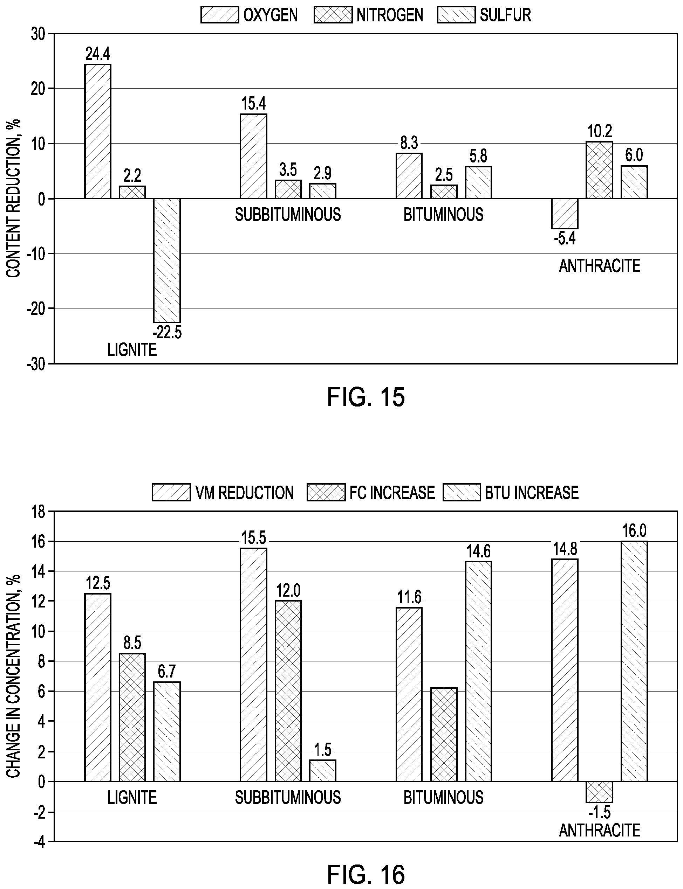

Proximate and ultimate analysis of the autoclave-reacted samples (Table 13) indicates that the oxygen content reductions of the autoclave-reacted coal residues relative to raw coals were 24%, 15%, and 8% for lignite, subbituminous, and bituminous coals, respectively (FIG. 15). In the case of anthracite, there was a marginal increase in oxygen content of about 5%, which can be attributed to the cleaning process and instrument variability. The N concentration reductions ranged from 2% to 10%. The S content reductions ranged from 3% to 6%, except for the lignite sample that showed an increase of about 22%. The increase in S for autoclave-reacted lignite coal is associated with reactor operational challenges that were encountered during the experiment, which were fixed prior to running for the other coals. The volatile matter (VM) and fixed carbon (FC) relative changes (FIG. 16) indicate reductions ranging from 12% to 15% in VM and an increase in FC ranging from 6% to 12%, except for a marginal drop in FC for anthracite of 1.5%. Further analysis of the Btu data showed that there was a net Btu increase relative to the raw coal samples ranging from about 1.5% to 16% (FIG. 15). ATR-FTIR analysis of the autoclave-reacted coal samples yielded spectra that are like those in FIG. 14 which were obtained from clean coal samples.

**Table 13. Proximate and Ultimate Analysis of Autoclave-Reacted Coal Samples (as-received basis)**

| Component, wt% | Lignite | Subbituminous | Bituminous | Anthracite |
|---|---|---|---|---|
| *Proximate Analysis* | | | | |
| Moisture | 1.9 | 2.71 | 1.76 | 0.55 |
| Volatile Matter | 39.51 | 38.03 | 37.50 | 7.60 |
| Fixed Carbon* | 56.14 | 59.00 | 57.23 | 83.02 |
| Ash | 4.35 | 2.97 | 5.27 | 9.38 |

| *Ultimate Analysis* | | | | |
|---|---|---|---|---|
| Hydrogen | 4.21 | 4.23 | 4.74 | 2.35 |
| Carbon | 71.04 | 74.58 | 75.45 | 70.13 |
| Nitrogen | 1.05 | 1.08 | 1.32 | 0.86 |
| Sulfur | 2.12 | 0.2467 | 0.46 | 0.60 |
| Oxygen* | 17.23 | 16.89 | 12.76 | 16.67 |
| Heating Value, Btu | 11,861 | 12,414 | 12,947 | 14,767 |

| | | | | |
|---|---|---|---|---|
| * Determined by difference. | | | | |

### Results of Upgraded Coal Carbonization.

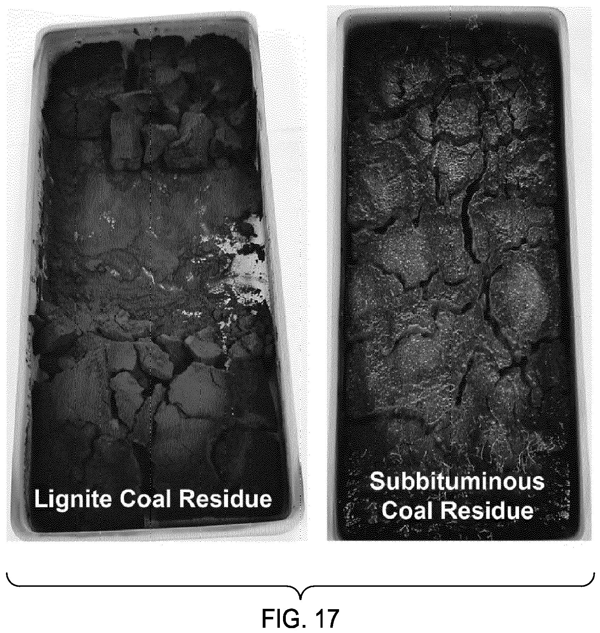

Of the 90 g of starting coal sample placed in the furnace, the recovered carbonized residues obtained for each coal were 44 g for lignite, 49 g for subbituminous coal, 50 g for bituminous coal, and 74 g for anthracite. Thus, the yield of carbonized residue was 49% for lignite, 54% for subbituminous, 56% for bituminous, and 82% for anthracite coals, respectively. Representative photos of the carbonized residues are shown in FIG. 17 for lignite and subbituminous coals, respectively. Photos of carbonized residues from the other coals are similar.

Proximate analysis of the carbonized residues (Table 14) shows that the residual VM content was in the range 0.7-1.5 wt% and the corresponding FC content ranged from 89 wt% to 95 wt%, which is a significant improvement over the corresponding raw coal samples (Table 10). The ash content ranges from about 3 to 10 wt%. Ultimate analysis results show trace to minor amounts of N and S. Because of incomplete combustion of the sample in the elemental analysis instrument, the carbon content from ultimate analysis is lower than expected. Based on the proximate analysis, the carbon content should be greater than 90-95 wt%, and a more accurate oxygen content should be in the range of 0-4 wt% instead of 6-19 wt%, as shown in Table 14. The limitation of the ASTM method for doing proximate and ultimate analysis for graphite samples is being pursued as a separate investigation.

**Table 14. Proximate and Ultimate Analysis of Carbonized Coal Residues (as-received basis)**

| Component, wt% | Lignite | Subbituminous | Bituminous | Anthracite |
|---|---|---|---|---|
| *Proximate Analysis* | | | | |
| Moisture | 0.02 | 0.0 | 0.0 | 0.0 |
| Volatile Matter | 0.66 | 1.46 | 1.37 | 0.87 |
| Fixed Carbon* | 95.63 | 95.46 | 92.80 | 89.28 |
| Ash | 3.69 | 3.08 | 5.83 | 9.85 |

| *Ultimate Analysis* | | | | |
|---|---|---|---|---|
| Hydrogen | 0.33 | 0.14 | 0.56 | 0.19 |
| Carbon | 85.22 | 77.36 | 87.44 | 75.26 |
| Nitrogen | 0.05 | 0.05 | 0.29 | 0.05 |
| Sulfur | 0.38 | 0.07 | 0.20 | 0.48 |
| Oxygen* | 10.33 | 19.30 | 5.68 | 14.17 |

| | | | | |
|---|---|---|---|---|
| * Calculated by difference. | | | | |

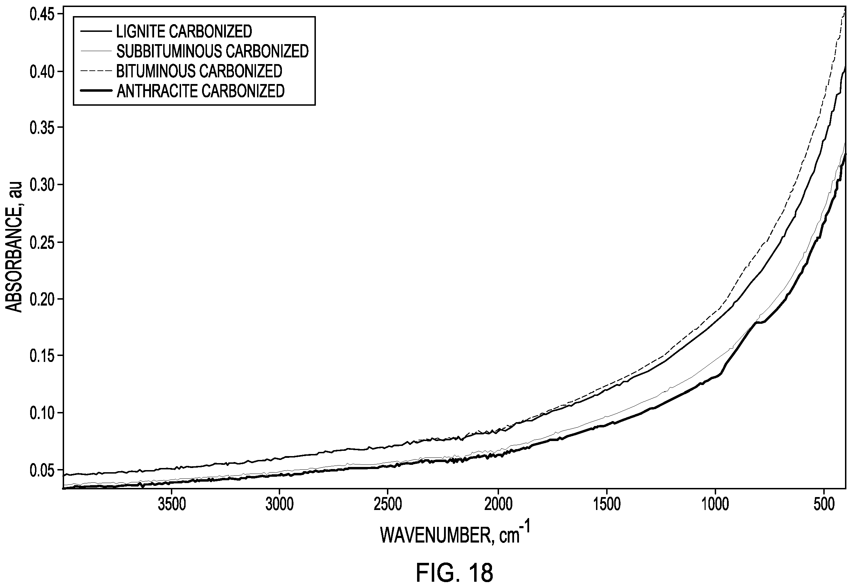

ATR-FTIR spectra of the carbonized residues (FIG. 18) reveal no aliphatic and heteroatom functional groups, which is in agreement with the proximate and ultimate analysis results. Furthermore, lack of aliphatic and heteroatom functions also suggests that the remaining carbonized residue has been strengthened and enriched with graphitic domains.

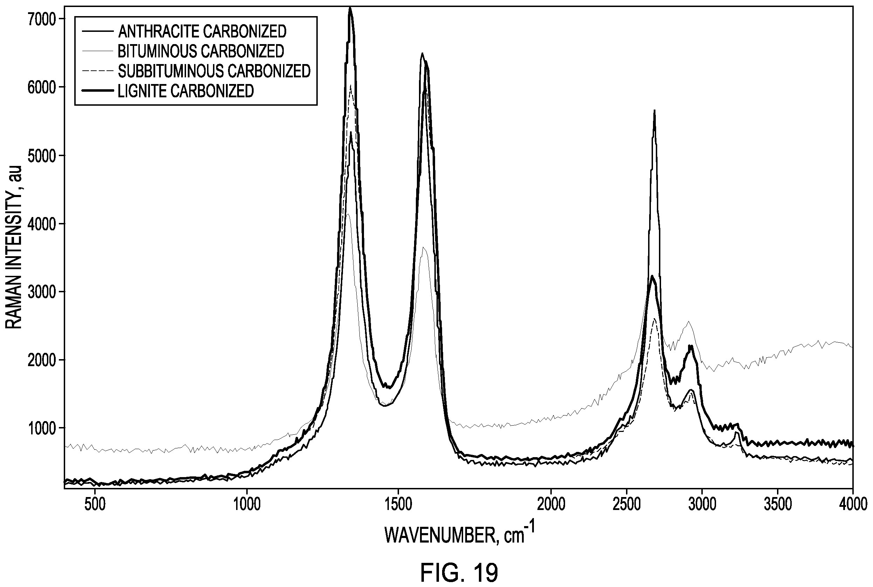

The Raman spectra (FIG. 19) show that the carbonized residue for each coal contains roughly equal proportions of ordered and disordered graphitic domains, especially for subbituminous coal where the peak heights for ordered domains, or G-band (~1580 cm⁻¹), are roughly the same as the height for disordered domains, or D-band (~1340 cm⁻¹). The peak heights for the G-band are slightly smaller than those of the D-band for lignite and bituminous carbonized residues, while the G-band for carbonized anthracite is slightly taller than the D-band. These results are helpful in determining the relative proportions of ordered and disordered graphitic carbon content that eventually produce ordered graphite layers. The second-order Raman shift peaks around 2750 cm⁻¹ show that the carbonized anthracite residue has more graphitic content than that of the other coal samples.

### Evolution of Graphitic Domain Crystallinity in Raw, Upgraded, and Carbonized Coals.

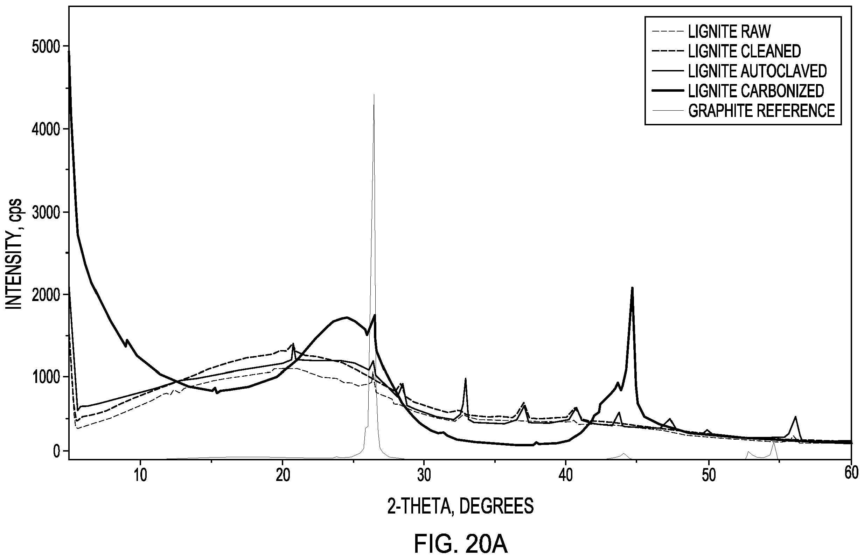

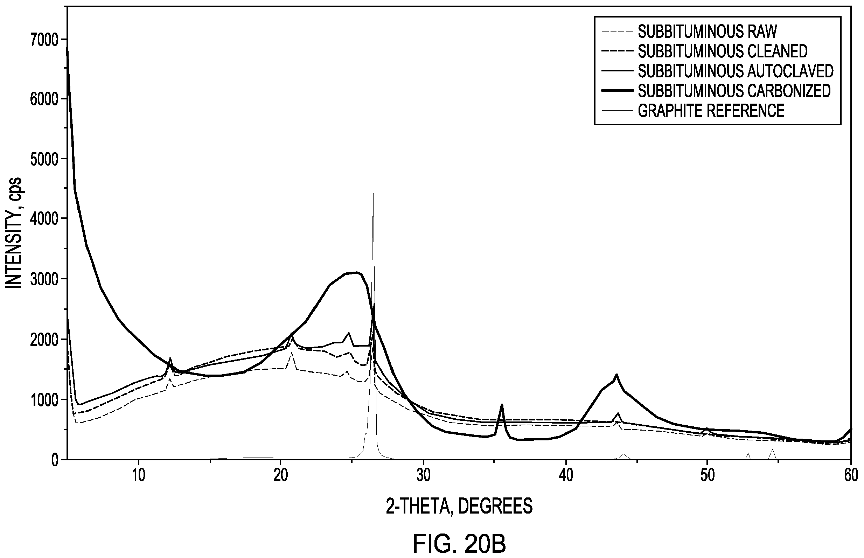

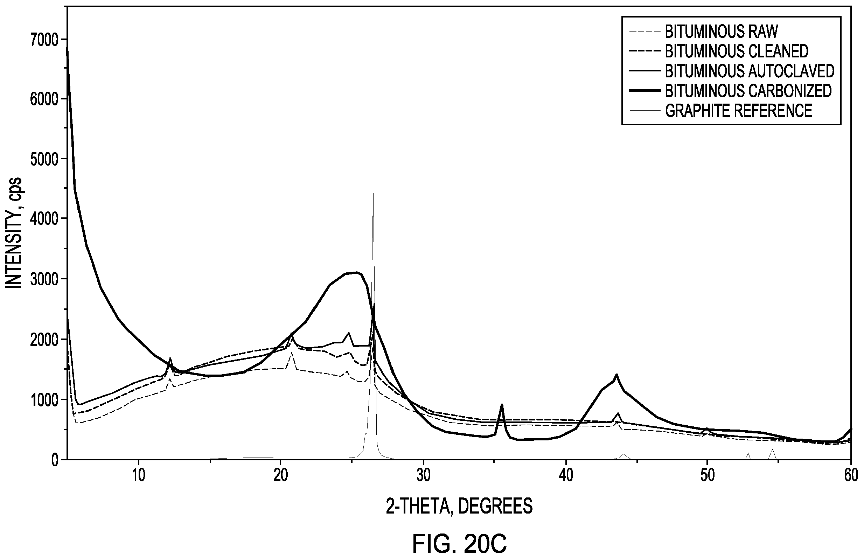

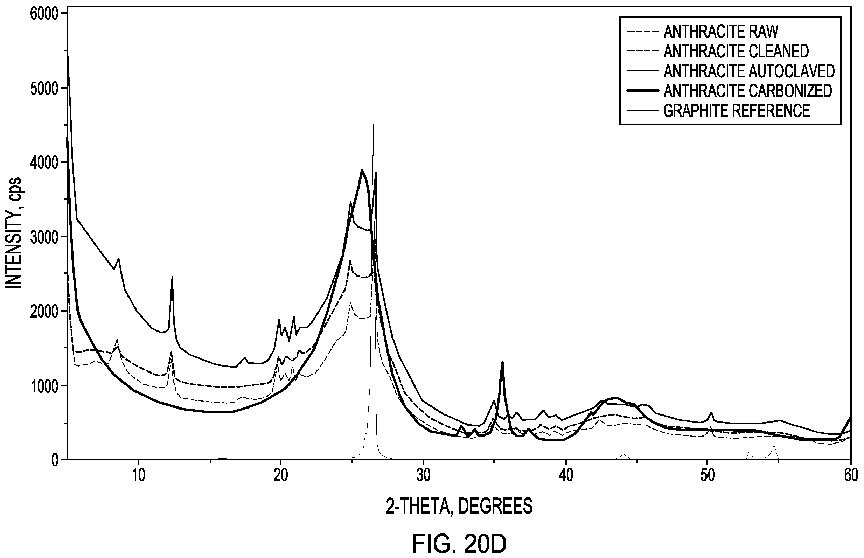

X-ray diffraction (XRD) analysis was performed on the raw, cleaned, autoclaved, and carbonized coal samples and compared to a graphite reference. The peak intensity/height of the graphite reference is scaled to 15% of the original height for the purpose of comparison with the diffractograms derived from the coal samples. The XRD diffractograms (FIGS. 20A-D) show a progressive improvement of the graphitic content with various treatments (cleaning, autoclave heteroatom reduction reactions, and carbonization). In FIGS. 20A-D, the peak intensity for the graphite reference is scaled to 15% of its original height for comparison with diffractograms from coal samples. The increasing height and sharpness of the 002 peak near 28° 2-theta is indicative of the improving quality of the crystallinity or order in the sample and consistent with increasing aromatic condensation and alignment of graphene layers in the residue. Similarly, the degree of aromatic condensation and size of the graphene sheets are determined by the height and sharpness of the 100/101 peak, around 44.5° 2-theta which, in this case, is also observed to improve with incremental improvements to the coal precursor. The largest improvement in aromatic ring condensation was observed in carbonized lignite, followed by subbituminous and bituminous, with similar ring condensation extent, and little change in ring condensation in carbonized anthracite. These trends are consistent with coal rank maturity, where lignite, which has the smallest condensed aromatic content, becomes significantly condensed or concentrated during carbonization treatment.

### Proximate and Ultimate Analysis of Coal-Derived Graphite.

Proximate analysis of the graphitized samples (Table 15) shows 99+ wt% FC, ~0.8 wt% VM, and residual ash content that was BDL or zero, except for the subbituminous coal-derived graphite sample that had 0.02 wt% ash. Ultimate analysis results show negligible to trace amounts of N and S. Because of incomplete combustion of the sample in the elemental analysis instrument, the carbon content from ultimate analysis is lower than expected. Based on the proximate analysis, the content should be 99+ wt%, and a more accurate oxygen content should be in the range 0-0.5 wt%, instead of 10-18 wt%, as shown in Table 15. The limitation of the ASTM method for proximate and ultimate analysis of graphite samples is under development as a separate study.

**Table 15. Proximate and Ultimate Analysis of Coal-Derived Graphitized Samples (as-received basis)**

| Component, wt% | Lignite | Subbituminous | Bituminous | Anthracite |
|---|---|---|---|---|
| *Proximate Analysis* | | | | |
| Moisture | 0 | 0.0 | 0.0 | 0.0 |
| Volatile Matter | 0.68 | 0.70 | 0.75 | 0.83 |
| Fixed Carbon* | 99.32 | 99.28 | 99.25 | 99.17 |
| Ash | BDL | 0.02 | BDL | BDL |

| *Ultimate Analysis* | | | | |
|---|---|---|---|---|
| Hydrogen | 0.24 | 0.20 | 0.16 | 0.14 |
| Carbon | 82.13 | 86.54 | 85.49 | 88.98 |
| Nitrogen | 0.03 | 0.03 | 0.03 | 0.06 |
| Sulfur | 0.0 | 0.0 | 0.0 | 0.0 |
| Oxygen* | 17.60 | 13.21 | 14.32 | 10.82 |

| | | | | |
|---|---|---|---|---|
| * Determined by difference. BDL stands for Below Detection Limit. | | | | |

### ATR-FTIR Analysis of Coal-Derived Graphite.

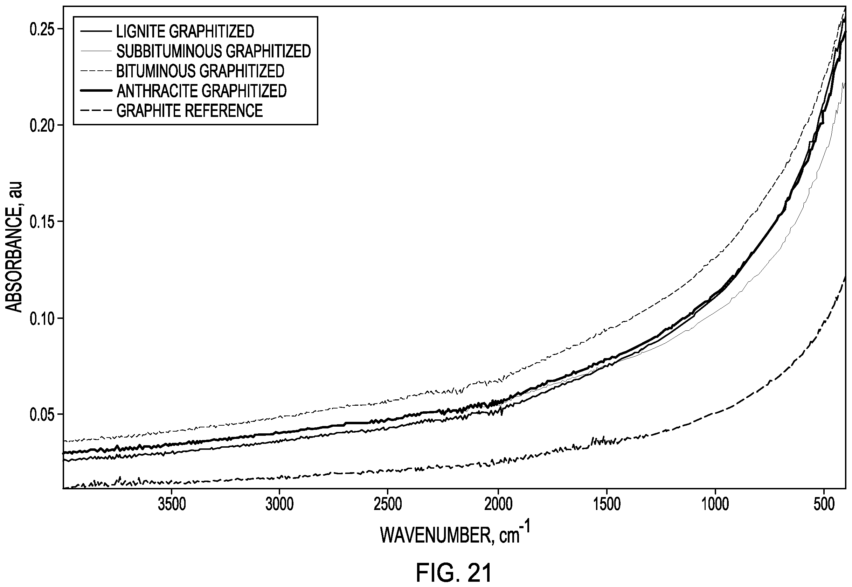

The ATR-FTIR spectra (FIG. 21) show good comparison with the reference graphite sample. These spectra are very similar to the spectra obtained for the carbonized samples (FIG. 18) but show significant improvement. The absorbance of the low-frequency region ranges from about 0.22 to 0.25, compared to 0.32 to 0.45 for the carbonized samples. The low-frequency absorbance for the reference graphite is about 0.12.

### Raman Spectroscopy Analysis of Coal-Derived Graphite.

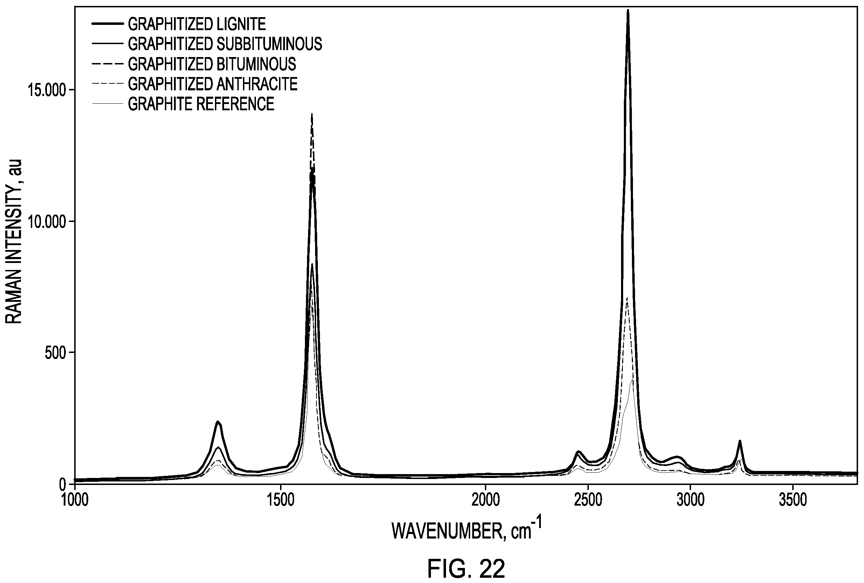

Raman spectra of the coal-derived graphite samples are shown in FIG. 22, based on samples prepared by the first graphitization condition (i.e., heating sample at 2800 °C for 1 hr). The spectra in FIG. 22 show that significant progress has been made in producing goodquality graphite from the coal samples. The D-band peak for disordered graphitic carbon, around 1350 cm⁻¹, is significantly diminished in the coal-derived graphite samples compared to the carbonized samples. Based on the D-band, the quality of anthracite-derived graphite is closer to that of the reference graphite than the graphite from the other coals. Raman spectra obtained on the samples that were cleaned and autoclave-reacted were similar to those shown in FIG. 22, with only minor differences.

### SEM Analysis of Coal-Derived Graphite.

SEM was performed on the coal-derived graphite samples as well as on reference flake graphite to gain insights into the morphological features and potential heterogeneity of the graphitized samples. The big finding from SEM morphology is the observation of a potential new graphite structure from lignite and subbituminous coals, which we call "croissant graphite." Needle-like graphite structures are also observed. These needle and croissant graphite structures were not seen in the carbonized coal samples. Thus, we believe these are formed under graphitization conditions and so are graphite structures. The observations described below were made on samples with both the first set of preprocessing conditions designated by prefix C- and the second set with prefix CA- designation.

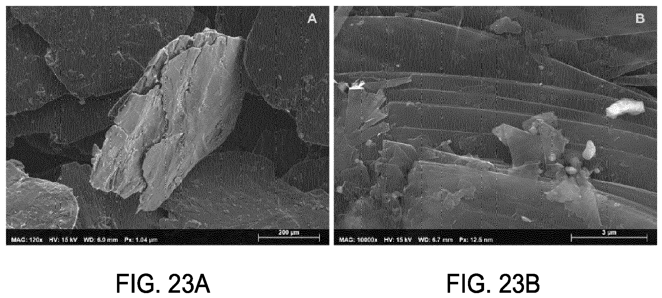

Representative images of the reference flake graphite are shown in FIGS. 23A and 23B, which indicate that there was a small fraction of partially oxidized flakes exemplified by the bright gray particle in the middle of FIG. 23A. An energy-dispersive spectroscopy analysis confirmed the presence of oxygen and minor amounts of silicon, aluminum, and iron. FIG. 23B shows laminations that correspond to the graphene layers in flake graphite. Because of the hard and flat nature of the flakes, XRD analysis of the reference graphite subsample was challenging because of preferred orientation effects.

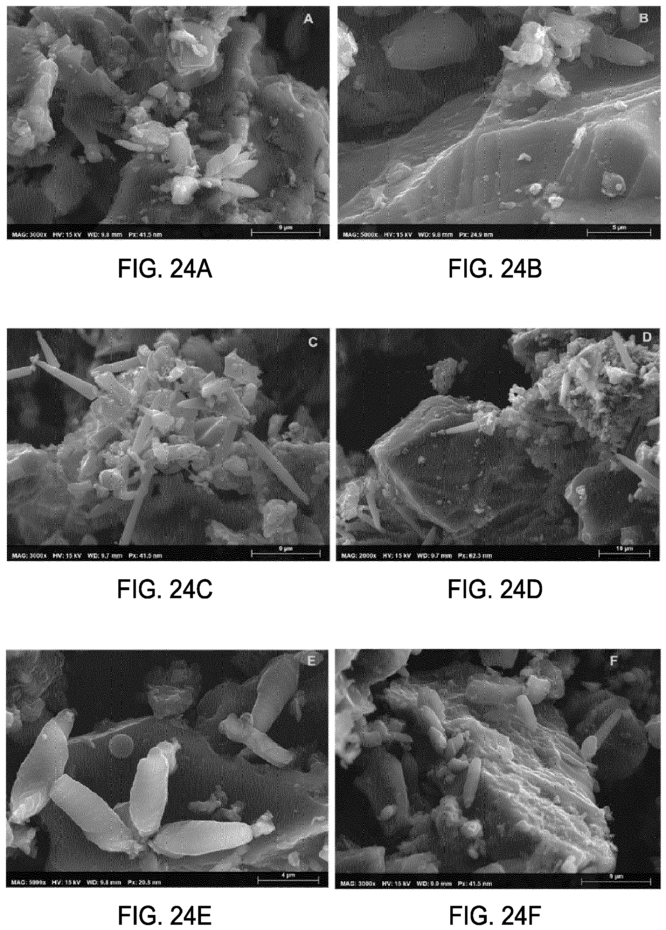

The morphological features of lignite-derived graphite samples are shown in FIGS. 24A-F for LDG-1H (A and B), LDG-1H1H (C and D), and LDG-2H (E and F). All images show three types of features exist. The LDG-1H (A and B) and LDG-2H (E and F) samples have isotropic blocky particles that resemble the original coal particle morphologies and a new phase with croissant-like texture and shape. In a repeated experiment under the same graphitization conditions, the same croissant features were observed. Based on these results, we ascribe the nickname croissant graphite to graphite with these morphologies. The LDG-1H1H sample shows similar features and/or a needlelike phase in the matrix of isotropic blocky particles. Examination of several particles suggests not all the coal particles are fully graphitized yet at any of the conditions applied in this study, which is consistent with the observed phases with varying degrees of graphitization in XRD analysis.

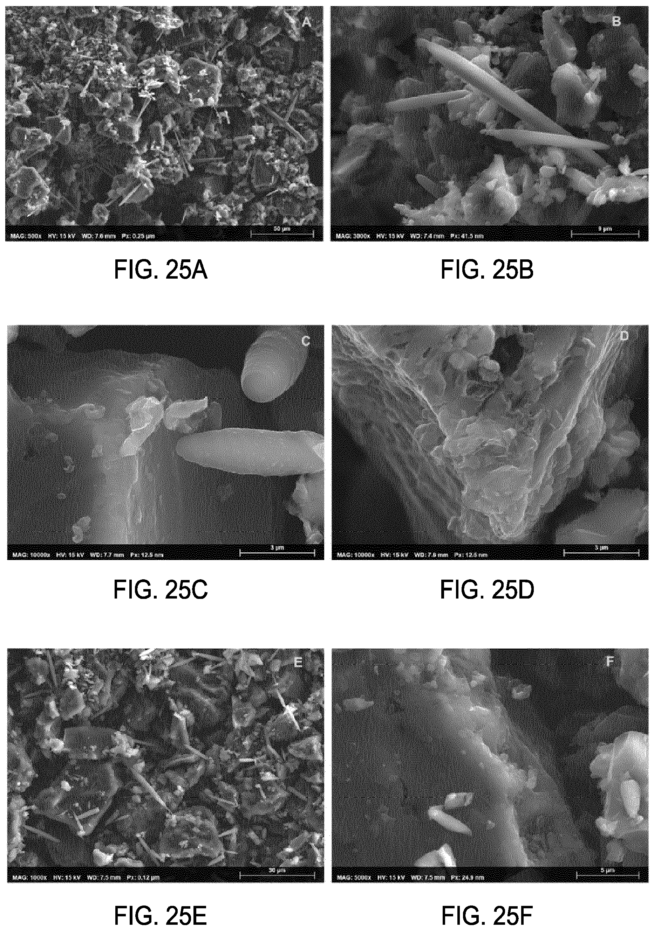

The images from subbituminous-derived graphite are displayed in FIGS. 25A-F for SDG-1H (A, B), SDG-1H1H (C, D), and SDG-2H (E, F). Like in the case of lignite-derived graphite samples, the images of subbituminous coal-derived graphite show the same three phases: croissant graphite, needle-like graphite, and blocky graphite particles. The needle particles were more prevalent in the SDG-1H sample than in the SDG-2H sample. The croissant graphite particles were only observed in the SDG-1H1H sample. Examination of several particles indicated that not all the coal particles in the matrix appeared to be fully graphitized, which is also consistent with the two phases with varying degrees of graphitization found in XRD analysis.

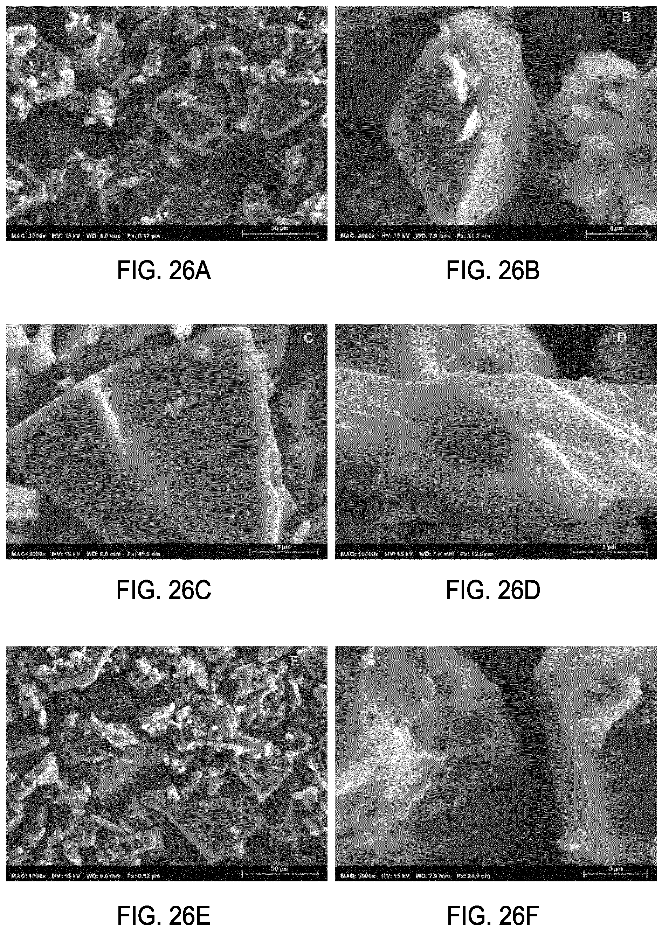

Bituminous coal-derived graphite SEM morphologies are presented in FIGS. 26A-F for BDG-1H (A and B), BDG-1H1H (C and D), and BDG-2H (E and F). Unlike lignite and subbituminous coal-derived graphite samples, there were only two possible phases observed in the bituminous coal-derived graphite samples. The BDG-1H and BDG-1H1H samples only have isotropic blocky graphite particles, while the BDG-2H samples have a few needle graphite particles. In the higher-magnification images (B, D, and F), there is a clear indication of layered structures.

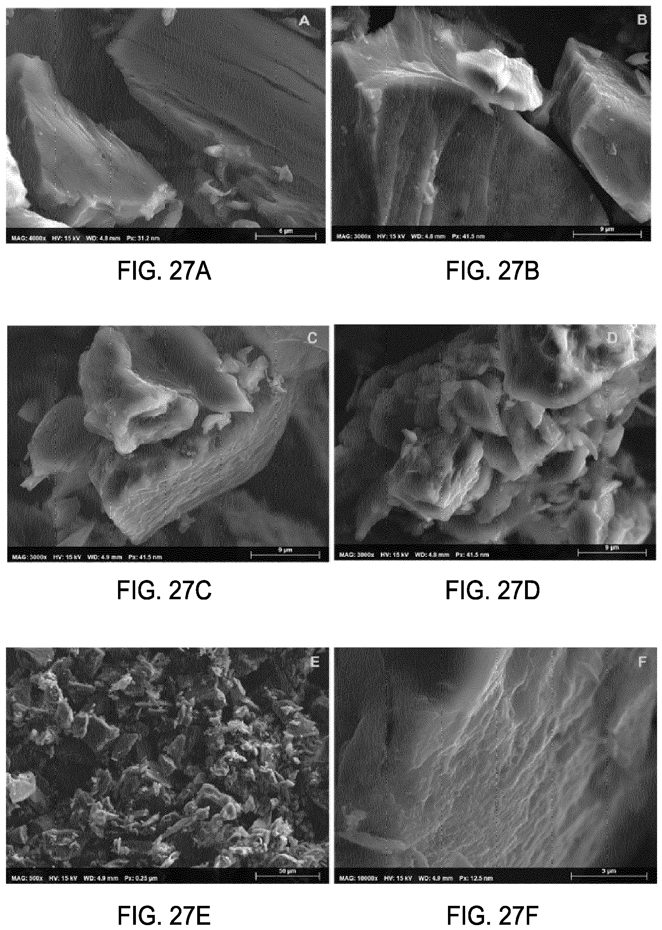

Anthracite-derived graphite morphologies are shown in FIGS. 27A-F for ADG-1H (A and B), ADG-1H1H (C and D), and ADG-2H (E and F). All particles appear to be isotropic at the conditions applied and resemble the original macroscopic coal particles morphology. Higher-magnification images show the appearance of layer structures, which can be hard to see in some particles.

### XRD Analysis of Coal-Derived Graphite.

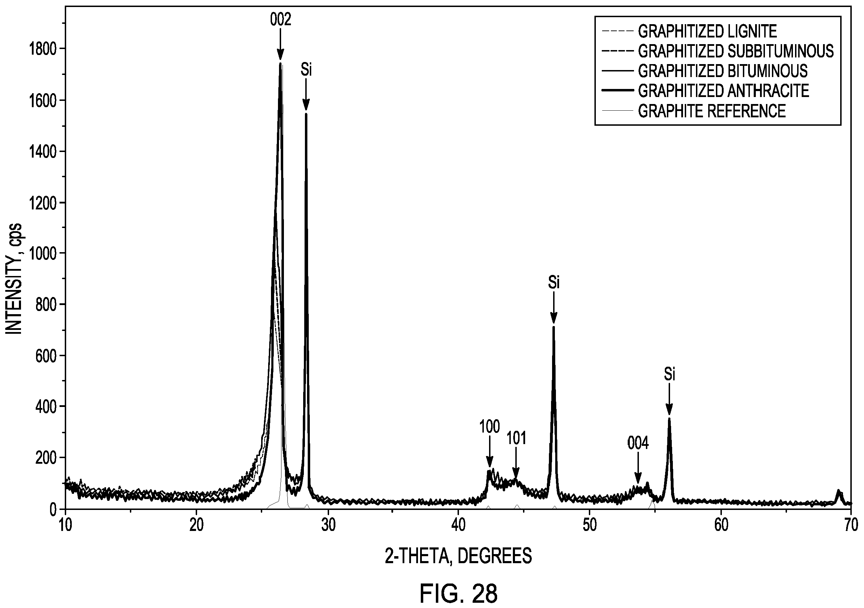

XRD analysis of graphite made from the C-set of samples was compared to the results obtained on a reference flake graphite sample. A silicon internal standard was used to correct for potential instrument-induced shifts on the peaks in the diffractograms. To facilitate comparison of peak positions, the diffractogram for the reference graphite was scaled to match the tallest coal-derived graphite peak observed for anthracite-derived graphite. Two major observations can be made from the diffractograms in FIG. 28: A) the anthracite-derived graphite sample has the highest 002 peak intensity, followed by bituminous-, subbituminous-, and lignite-derived graphite samples and B) the base of the 002 peaks is broader for coal-derived graphite samples than that of the reference graphite. In FIG. 28, the intensity of the reference graphite has been scaled to match the tallest coal-derived graphite peak for easy comparison of the peak positions. Anthracite-derived graphite has a slightly narrower base than the graphite samples from the other coals. The broad base of the coal-derived graphite 002 peaks is an indication of residual disordered graphene sheets in the 3D stack. The broad 004 peaks also support the potential presence of disordered graphitic layers. The 100 and 101 peaks are also broad, which indicates the potential for relatively smaller sizes of the condensed aromatic layers in the samples compared to the reference graphite.

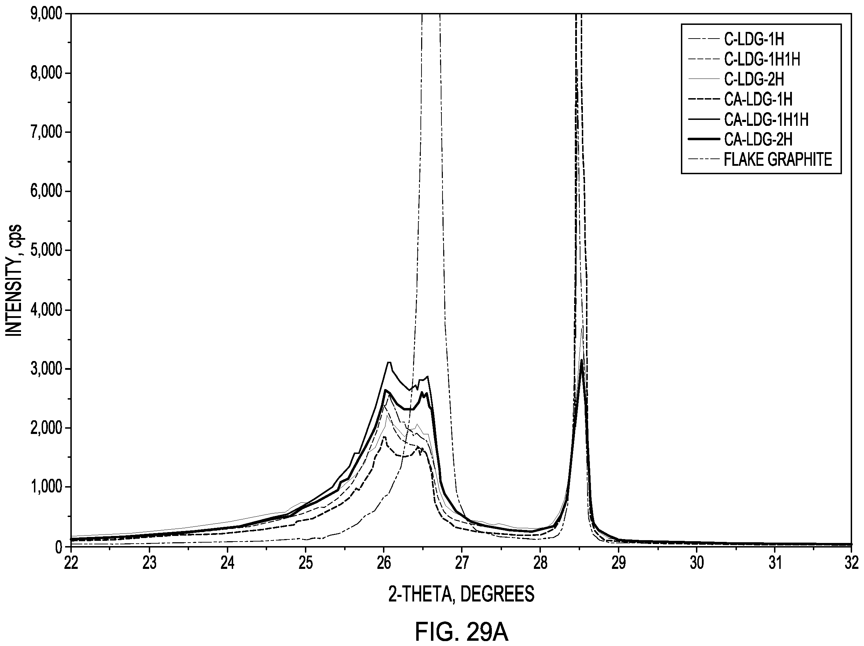

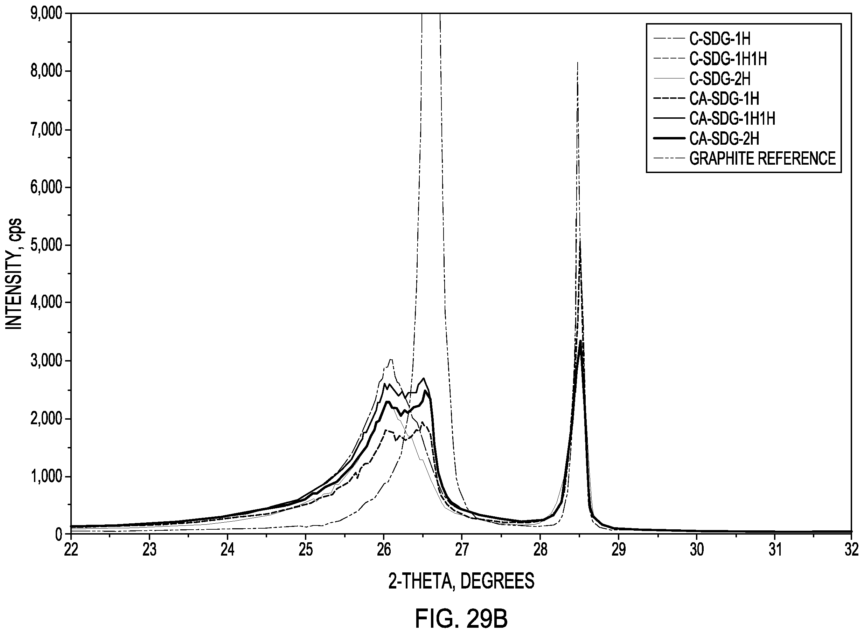

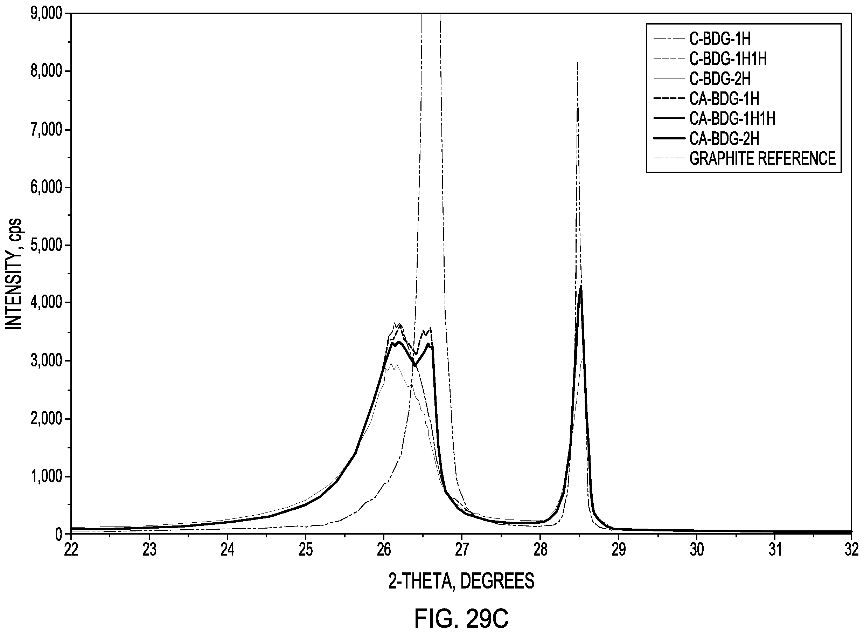

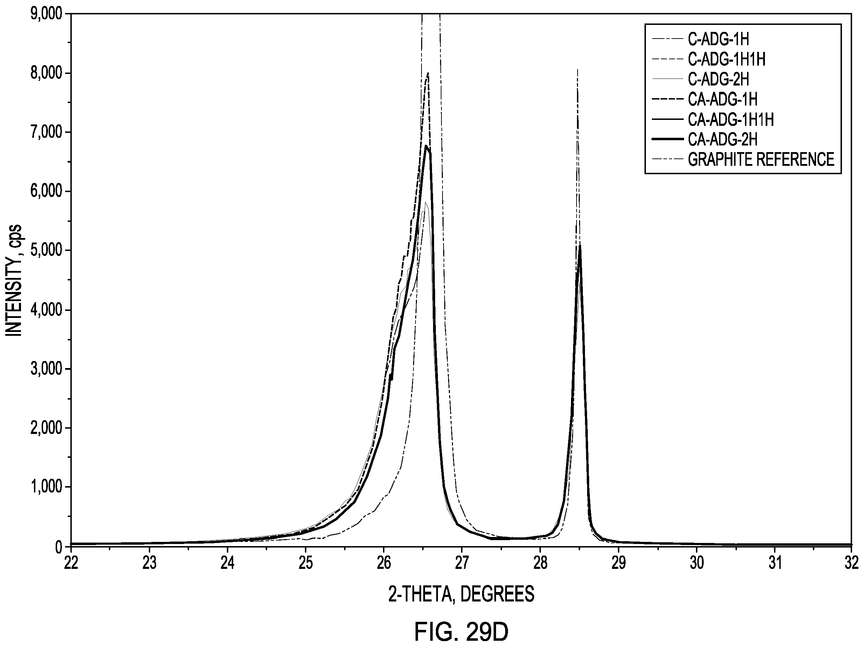

To evaluate the improvements on coal graphitizability and quality of coal-derived graphite, XRD analysis was performed on graphite made from the CA-set of samples and compared to results from the C-set of samples. In general, the results (FIGS. 29A-D) show higher 002 peak intensities for the CA-set samples than the C-set. In addition, the CA-set of samples shows a larger splitting of the 002 peak into two peaks representing two potential graphite phases. The peak on the right falls within the 002-peak window for graphite reference, which indicates a high-quality graphite phase formed from the coals. The peak on the left represents a graphite phase that still has some disordered graphitic domains. These results are very promising and point to the real possibility to optimize the methods developed in this study to make high-quality graphite from coals.

Quantitative graphitization parameters are presented in Table 16 for the C-set and CA-set of samples. The graphite reference (flake graphite) was determined to be highly crystalline, with essentially 100% DoG, while the coal-derived graphite samples contain two possible graphite-1 and graphite-2 phases. In general, the error margin for the DoGs reported in Table 16 is ±3%. The results of the coal-derived graphite samples are very promising especially for a process that has not been fully optimized. As illustrated by the peak intensities in FIGS. 29A-D, the calculated DoGs are also higher for the CA-set than the C-set of samples, especially for the lower-rank coals. Thus, the coal preprocessing step to reduce heteroatoms content during autoclave reactions results in improved graphitizability of the coals. The graphite-1 phase is believed to still contain some disordered graphitic domains, while graphite-2 is a highly ordered crystalline phase with high quality like the flake graphite reference sample.

The needle-like and croissant-shaped graphite particles observed in SEM analysis are most likely among the particle population that makes up the higher-crystalline graphite-2 phase, while the larger isotropic particles are lower-order or disordered graphite particles (graphite-1) at varying stages of graphitization. The presence of the two phases in the coal-derived graphite samples also illustrates the varying degrees of graphitization achieved in each case. These results further indicate that additional optimization of graphitization conditions is needed to improve the crystallinity and long-range order in bulk coal-derived graphite samples. However, for the purpose of making graphene from coal-derived graphite by exfoliation, it may not be necessary to achieve perfect long-range ordered crystals because the turbostratic graphene layers would be easier to exfoliate. These results demonstrate an exciting possibility and opportunity to be able to make high-quality graphite from coals of all ranks.

**Table 16. Coal-Derived Graphite Parameters for the C- and CA-Set of Samples**

| Sample | Graphite-1 d-spacing, Å | Graphite-2 d-spacing, Å | Graphite-1 DoG¹, % | Graphite-2 DoG, % |
|---|---|---|---|---|
| Graphite Reference | 3.401 | 3.353 | 44 | 100.7 |
| CA-Set | | | | |

| *ADG Samples* | | | | |
|---|---|---|---|---|
| CA-ADG-1H | 3.401 | 3.363 | 46 | 90 |
| CA-ADG-1H1H | 3.402 | 3.362 | 44 | 90 |
| CA-ADG-2H | 3.401 | 3.362 | 45 | 91 |

| *BDG Samples* | | | | |
|---|---|---|---|---|
| CA-BDG-1H | 3.416 | 3.361 | 28 | 92 |
| CA-BDG-1H1H | 3.416 | 3.360 | 28 | 92 |
| CA-BDG-2H | 3.417 | 3.360 | 27 | 93 |

| *SDG Samples* | | | | |
|---|---|---|---|---|
| CA-SDG-1H | 3.425 | 3.366 | 17 | 86 |
| CA-SDG-1H1H | 3.424 | 3.364 | 18 | 88 |
| CA-SDG-2H | 3.425 | 3.367 | 18 | 85 |

| *LDG Samples* | | | | |
|---|---|---|---|---|
| CA-LDG-1H | 3.426 | 3.368 | 17 | 83 |
| CA-LDG-1H1H | 3.423 | 3.365 | 20 | 87 |
| CA-LDG-2H | 3.425 | 3.367 | 17 | 85 |
| C-Treated Set | | | | |

| *ADG Samples* | | | | |
|---|---|---|---|---|
| C-ADG-1H | 3.406 | 3.363 | 39 | 89 |
| C-ADG-1H1H | 3.406 | 3.364 | 40 | 89 |
| C-ADG-2H | 3.405 | 3.363 | 41 | 89 |

| *BDG Samples* | | | | |
|---|---|---|---|---|
| C-BDG-1H | 3.421 | 3.375 | 22 | 75 |
| C-BDG-1H1H | 3.419 | 3.376 | 25 | 75 |
| C-BDG-2H | 3.425 | 3.378 | 18 | 73 |

| *SDG Samples* | | | | |
|---|---|---|---|---|
| C-SDG-1H | 3.427 | 3.378 | 15 | 73 |
| C-SDG-1H1H | 3.426 | 3.378 | 16 | 73 |
| C-SDG-2H | 3.428 | 3.378 | 14 | 73 |

| *LDG Samples* | | | | |
|---|---|---|---|---|
| C-LDG-1H | 3.427 | 3.370 | 16 | 81 |
| C-LDG-1H1H | 3.426 | 3.371 | 16 | 81 |
| C-LDG-2H | 3.425 | 3.371 | 17 | 81 |

| | | | | |
|---|---|---|---|---|
| ¹ Degree of graphitization. | | | | |

### DISCUSSION

The four-step process that constitutes the proposed method for preparing high-quality graphite from carbon ores is based on scientifically sound chemical principles. Removal of ash and other impurities greatly reduces the chances of imperfections in the graphite crystal lattices due to the presence of inorganic species. Heteroatoms such as oxygen, sulfur, and nitrogen tend to form bridges that promote polymerization and/or formation isotropic char which renders the material nongraphitizable or significantly reduces the quality of the resulting graphite. Carbonization of the upgraded coal/coal waste precursors removes the volatile matter and concentrates the graphitic carbon content at 1000 °C. Additional heat treatment at 1600 °C prior to graphitization at 2800 °C helps to further strengthen the graphitic carbon domains which are ordered at graphitization temperatures to high quality, highly crystalline graphite.

The new graphite structure revealed by FESEM analysis of the graphitized materials shows oval or spherical morphologies and texture that looks like croissant, hence, the name croissant graphite. The fact that these structures were observed in graphite samples prepared from upgraded lignite, subbituminous, and bituminous coals, and not in anthracite, suggest that coal ranks lower than anthracite may have the possibility for structural rearrangement that is not available in anthracite. Although the mechanisms of formation of the croissant graphite structures are still under investigation, initial examination of several particle morphologies suggests the mode of formation might involve spiral-winding or folding of 2D graphene sheets into ribbon-like structures and to croissant graphite structures. X-ray diffraction (XRD) analysis shows that croissant graphite particles possess a high degree of crystallinity that is comparable to that of natural flake graphite. However, XRD results also show a lower order graphite phase that suggests that long-range ordering of the graphitic domains can be further improved to increase the quantity of high-quality graphite from coal-derived precursors.

For LIB applications, the graphite material used to fabricate battery anodes has stringent requirements such as a high carbon purity of about 99.95% and small, spherical particles. To satisfy these requirements, natural graphite from graphite mines often has to be purified and spheroidized to improve performance. Because of the texture and spheroidal shapes of croissant graphite particles, it is expected that these types of particles will be useful for the fabrication of efficient lithium-ion batteries for electric vehicle (EV) and energy storage applications. Additionally, such high-quality graphite will be a good precursor for solid high-value carbon products such as graphene.

### CONCLUSIONS

A method for preparing high-quality graphite from carbon ores and carbonaceous feedstocks has been developed. The carbon ores materials used as feedstocks in this study were primarily coal or coal wastes. This method includes four steps, including removal of ash and impurities, heteroatoms reduction reactions, carbonization, and graphitization. Analysis of the graphitized materials by field emission scanning electron microscopy (FESEM) revealed a new graphite structure currently ascribed the name "croissant graphite" based on the observed morphological texture and shape. These structures were observed in graphite samples prepared from upgraded lignite, subbituminous, and bituminous coals. Anthracite samples that underwent the same upgrading treatment did not show any particles that resemble croissant graphite particles morphologies. X-ray diffraction (XRD) analysis shows that croissant graphite particles possess a high degree of crystallinity that is comparable to that of natural flake graphite. Although the mechanisms of formation of the croissant graphite structures are still under investigation, initial examination of several particle morphologies suggests the mode of formation might involve spiral-winding or folding of 2D graphene sheets into ribbon-like structures and to croissant graphite structures. Because of the texture and spheroidal shapes of croissant graphite particles, it is expected that these types of particles will be useful for the fabrication of efficient lithium-ion batteries for electric vehicle (EV) and energy storage applications as well as preparation of high-value solid carbon products such as graphene.

### Part III. Graphite Microstructures From Coal And Coal Wastes And Conditions For Making Them.

### METHODS

The methods for preparing coal- or coal waste-derived graphite during which new graphite microstructures have been observed are like the methods that have been described in Parts I and II of the present Examples. Briefly, raw coal or coal waste was cleaned by physical and chemical methods. The clean coal residue was further upgraded by reaction with iron (II) chloride solution in an autoclave reactor to reduce the heteroatom content. The upgraded coal residue was carbonized and heat treated at temperatures up to 1600°C. The carbonized sample was then graphitized at 2800°C - 3,000°C for 6 to 12 hours under an inert atmosphere with flowing argon and ambient pressure. The graphite sample obtained was characterized using any suitable combination of analytical techniques such as Raman spectroscopy, scanning electron microscopy (SEM), ash determination analysis, trace elements analysis, and x-ray diffraction (XRD).

### RESULTS AND DISCUSSION

SEM analysis of the coal- or coal waste-derived graphite (synthetic graphite) samples revealed new graphite microstructures from coal or coal wastes of various ranks, including lignite, subbituminous coals, bituminous, and anthracite. The new microstructures include croissant graphite, graphulerenite, and 3D graphene stacks. As discussed below, the present study indicates a critical ash limit (CAL) of approximately 5.6 wt% (for particle size distributions of about 0 to about 44 microns) or 6.66 wt% (for particle size distributions of about 0 to about 30 microns) below which croissant graphite and 3D graphene stacks are formed and above which graphulerenite is formed. The present study indicates that bituminous coal, lignite, and anthracite coal can form croissant microstructures, 3D graphene stacks, or graphulerenite depending on the ash conditions used. The present study observed 3D graphene stacks and association of croissant graphite microstructures with graphene stack microstructures, offering insights into the potential mechanism for the formation of croissant graphite microstructures.

### Croissant Graphite Microstructures and 3D Graphene Stacks

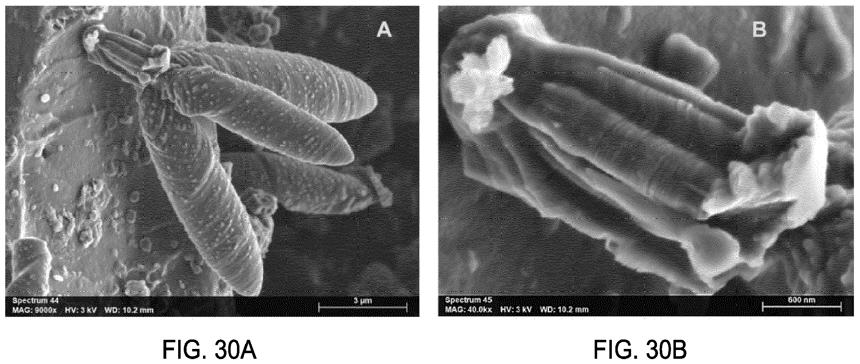

Croissant graphite microstructures have roughly wavy surface textures with dot-like speckles (FIG. 30A). These microstructures have been named croissant graphite because of the resemblance of the external morphology (shape and texture) to the surface morphology of croissant food items. The croissant graphite structures were not observed in the carbonized coal samples, which leads to the conclusion that the formation of croissant graphite microstructures occurs during graphitization.

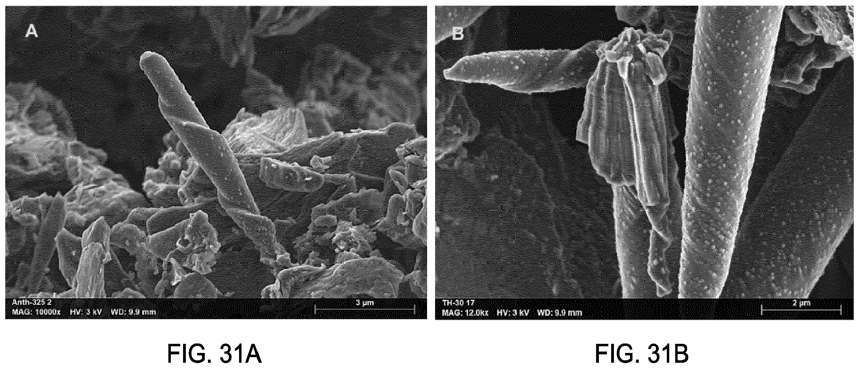

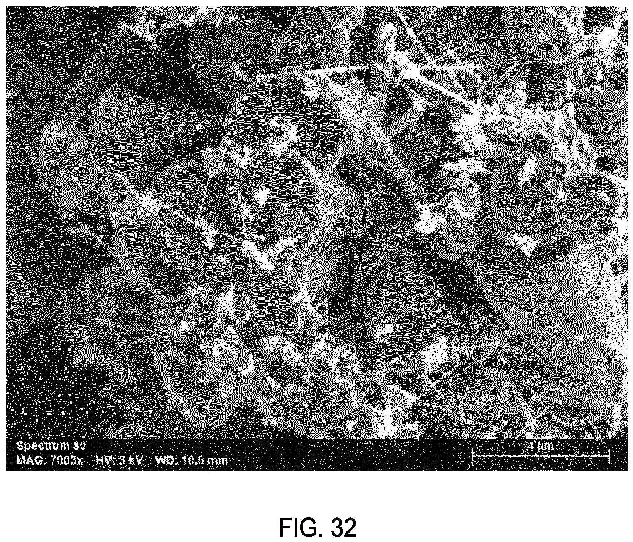

Detailed SEM examination of the coal-derived graphite samples also revealed the presence of 3D graphene stacks which had a honeycomb-like arrangement of internal channels. The layered microstructures were found to be associated in some cases with croissant graphite microstructures, e.g., see the "stem" in FIG. 30A and the corresponding higher magnification image (FIG. 30B). The images in FIGS. 30A-B suggest that the croissant microstructures grow from the layered microstructures. Thus, it is postulated that the mechanisms for the formation of croissant graphite microstructures involve folding of graphene sheets (nanolayers in the microstructures) into ribbon-like microstructures (FIG. 31A-B) initially, and continuous folding and densification leads to the croissant graphite microstructures. The internal surface of the croissant microstructures from a cross-section view (FIGS. 32) appears to be smooth with no other observable textural attributes.

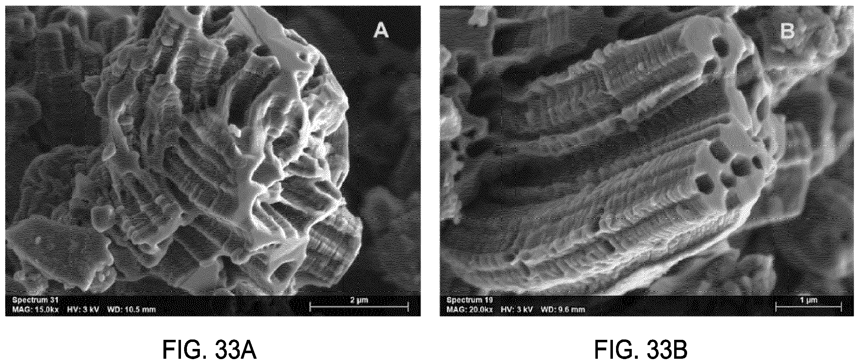

FIGS. 33A-B show detailed views at higher magnification of an example particle with layered carbon microstructures in a network that forms channels. The top surface of the stack (FIG. 33B) has a smooth texture and displays a honeycomb-like microstructure typical of graphene sheets with roughly hexagonal geometry of the channel openings. Additional image analysis using Image-J and Fiji on an image like the one in FIG. 33B shows that the average thickness of each layer is about 43 nm and the average spacing between them is about 33 nm. These spacings can vary depending on whether the layers are tightly packed or may have suffered mechanical loosening during sample handling and preparation.

### Graphulerenite Microstructures.

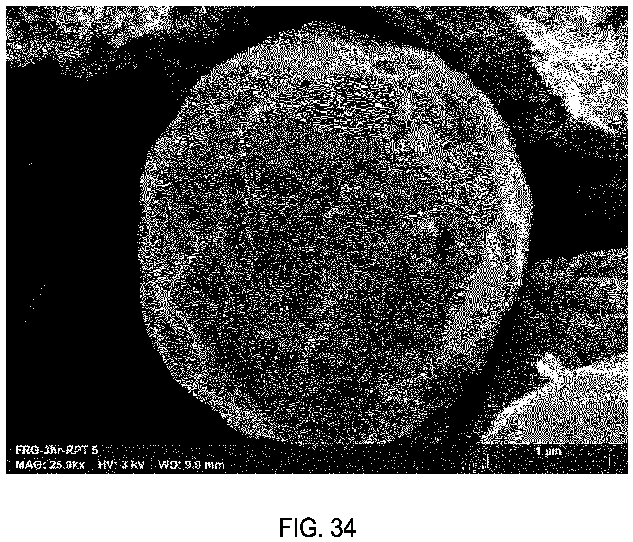

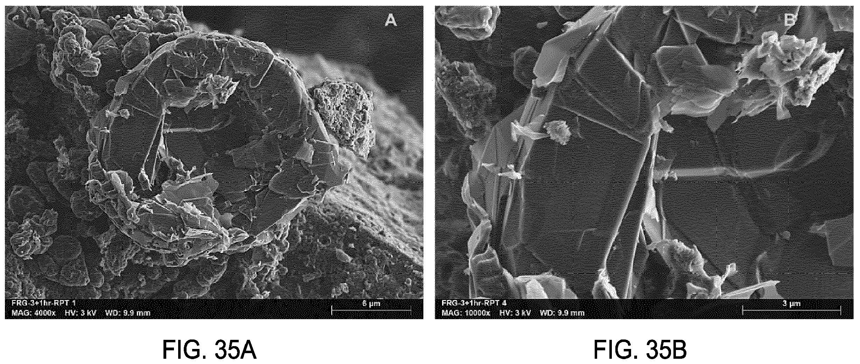

Graphulerenite microstructures are spherical particles (FIG. 34), which are named graphulerenite because they are graphite mineral particles and because of the spherical geometry, with regular shaped flat sides like bucky balls or fullerenes but with a solid fill. A cross-section SEM micrograph (FIG. 35A) of one of the particles shows graphite flake layers that are tightly packed to form a solid fill particle. The packing appears to be more dense than the stack shown in FIG. 33B. Higher magnification SEM images in FIG. 34 and FIG. 35B show more details to include laminations representing the individual graphene layers.

### Potential Applications.

The observation of layered particles that form channeled networks and spherical particles of graphulerenite microstructures suggests good progression of largely amorphous carbon in coal or coal wastes to graphene sheets in these new graphite microstructures. These characteristics are expected to enhance the quality of coal-derived graphite for various applications, such as lithium-ion batteries, manufacture of industrial electrodes, lubricants or formulated lubricant mixtures with base oils, manufacture of nuclear reactor components, and other applications that can benefit from the properties of graphite.

### Critical Ash Limit for Croissant Graphite and Graphulerenite Microstructures.

Additional experiments were performed to determine the critical ash limit (CAL) for turning on/off the formation of croissant graphite microstructures and graphulerenite based on the residual ash content of the coal residues. The results from these experiments (Table 17) show that a CAL of approximately 5.6 wt% (if the particle size distribution ("PSD") is about 0 to about 44 microns) or 6.7 wt% (if PSD is about 0 to about 30 microns) represents the cross-over point, where croissant graphite is formed at ash contents less than or equal to approximately 5.6 wt% (if PSD is about 0 to about 44 microns) or 6.7 wt% (if PSD is about 0 to about 30 microns) and graphurelenite is formed at ash content greater than approximately 5.6 wt%. The 3D graphene stacks were also formed at or below 5.6 wt% (if PSD is 0 to about 44 microns) or 6.7 wt% (if PSD is 0 to about 30 microns) and are often associated with (e.g., directly attached to) croissant microstructures.

The results in Table 17 show that the FR-325 (lignite coal) sample with residual ash of 5.58 wt% had a small amount of croissant particles, whereas a bituminous coal residue with residual ash or 5.83 wt% did not contain any croissant graphite particles when it was graphitized. A bituminous coal sample that was cleaned to a residual ash of 3.66 wt%, carbonized, and graphitized did contain some croissant graphite particles. Although the ash content of the carbonized residue for the Bituminous-clean sample was not taken at the time, it is expected that it would be <5.6 wt% based on experience from other samples that underwent the entire treatment process, i.e., raw - clean - autoclave - carbonized. All other samples that had a residual ash content greater than 5.6 wt% did not contain any croissant graphite particles when these samples were graphitized. Thus, it is estimated that a CAL of approximately 5.6 wt% represents the point at which croissant graphite and 3D graphene stack formation ceases and transitions to formation of graphulerenite.

Some samples have further demonstrated that there is a potential particle size distribution (PSD) dependence on the estimated CAL value. For example, the MS lignite PSD of the carbonized residue is in the range of 0 to about 30 microns and when this sample was graphitized, croissant graphite and graphene stack microstructures were observed. But the bituminous-1 sample with a PSD of 0 to about 44 microns did not show any croissant or graphene stack microstructures in the corresponding graphite sample. Thus, it is estimated that a CAL of approximately 5-7 wt% represents the point at which croissant graphite and 3D graphene stack formation ceases and transitions to formation of graphulerenite for carbonized samples with PSD of 0 to about 30 microns.

In some cases, if the PSD has a larger proportion of smaller particles of less than about 15 microns, there is still a possibility to form very few croissant microstructures and graphene stacks at ash content slightly higher than 5-7 wt%. For example, about 2 croissant microstructures and graphene stacks were observed in the FWW-30 sample with an ash content of about 11 wt% in the carbonized residue. However, there were significantly more graphulerenite microstructures, as expected, than the croissants/graphene stacks. Thus, the presence of croissants/graphene stacks in coal-derived graphite from carbonized upgraded coal with residual ash content higher than 5-7 wt% is rather rare and unexpected based on our results. The particle size distributions shown in Table 17 were determined by sieving the ground coal through standard mesh size sieves.

**Table 17. Residual ash content of treated coal or coal waste residues.**

| Sample ID | PSD (microns) | Raw (wt%) | Clean (wt%) | Autoclave (wt%) | Carbonized (wt%) | Croissants? |
|---|---|---|---|---|---|---|
| FR-325 | 1-44 | 9.79 | 4.38 | 4.98 | 5.58 | Yes, not a lot |
| FFW-30 | 1 - 30 | 13.66 | 6.53 | 8.09 | 11.04 | No |
| FWW-30 | 1 - 30 | 21.45 | 8.38 | 9.95 | 10.85 | No |
| FFW-60 | 1 - 250 | 13.66 | - | 8.53 | 10.15 | No |
| FR-60 | 1 - 250 | 9.79 | - | 6.38 | - | No |
| FR-60-to-325 | 1 - 44 | 9.79 | - | 6.38 | - | No |
| Lignite-1 | 1 - 44 | 4.13 | 2.84 | 4.27 | 3.69 | Yes, a lot |
| Lignite-2 | 1 - 44 | 4.13 | - | - | 1.97 | Yes, a lot |
| Subbituminous-325 | 1 - 44 | 3.02 | 2.28 | 2.89 | 3.08 | Yes, a lot |
| Subbituminous-60 | 1 - 250 | 3.02 | - | - | 2.86 | Yes, a lot |
| Bituminous-325 | 1 - 44 | 17.16 | 3.66 | 5.18 | 5.83 | No |
| Bituminous-325 | 1 - 44 | 17.16 | - | - | 3.06 | Yes |
| Bituminous-clean-325 | 1 - 44 | 17.16 | 3.66 | - | <5.6 | Yes, not a lot |
| Anthracite-325 | 1 - 44 | 12.48 | 6.81 | 9.33 | 9.85 | No |
| Anthracite-325 | 1 - 44 | 12.48 | - | - | 3.93 | Yes, not a lot |
| Anthracite-3 5 | 1 - 500 | 12.48 | - | - | 3.93 | Yes, very few |
| MS Lignite | 1 - 30 | 12.55 | - | - | 6.66 | Yes, a lot |
| FJR | 1 - 30 | 49 | - | - | 5.90 | Yes |
| FR-30 | 1 - 30 | 9.79 | - | - | 5.60 | Yes |
| FFW-30 | 1 - 30 | 13.66 | - | - | 11.67 | No |
| FWW-30 | 1 - 30 | 21.45 | - | - | 11.32 | No |

| | | | | | | |
|---|---|---|---|---|---|---|
| Note: FR = Freedom Regular coal, FFW = Freedom Fines Waste coal, FWW = Freedom Weathered Waste coal, FJR = Freedom jig reject coal waste. | | | | | | |

### XRD Analysis.

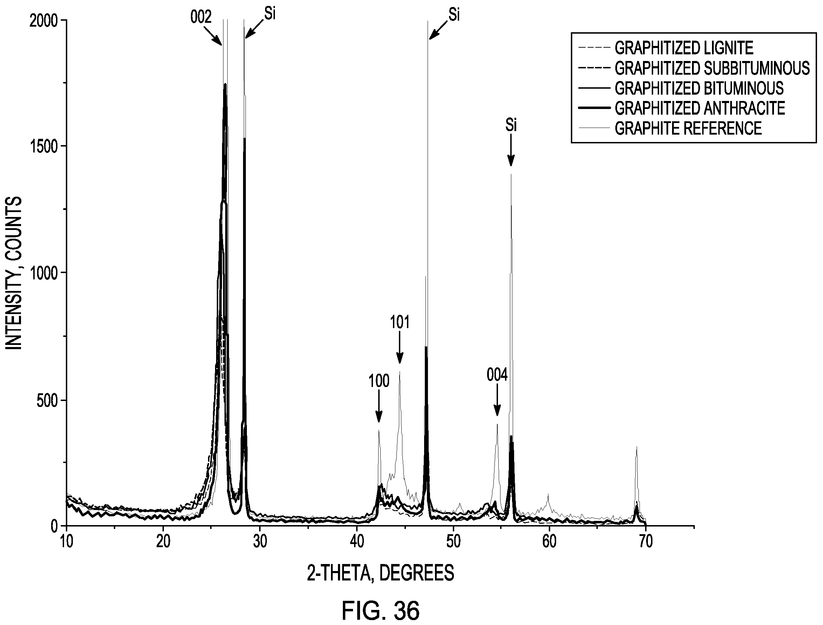

XRD patterns of coal-derived graphite samples were compared to that of a reference lithium-ion battery (LIB) grade graphite sample, as shown in FIG. 36. A silicon internal standard was used to correct for potential instrument-induced shifts on the peaks in the diffractograms. At least three major observations can be made from the diffractograms in FIG. 36: 1) the anthracite-derived graphite sample has the highest 002 peak intensity, followed by bituminous-, subbituminous-, and lignite-derived graphite samples; 2) the 2-theta angles of the coal-derived graphite 002 peaks are slightly smaller than that of the reference graphite; and 3) the base of the 002 peaks is broader for coal-derived graphite samples than that of the reference graphite. The broad base of the coal-derived graphite 002 peaks is an indication of residual disordered graphitic domains in the 3D stack. The broad 004 peaks also support the potential presence of disordered graphitic layers. The 100 and 101 peaks are also broad, which indicates the potential for relatively smaller sizes of the condensed aromatic sheets or graphene layers in the samples compared to the reference graphite.

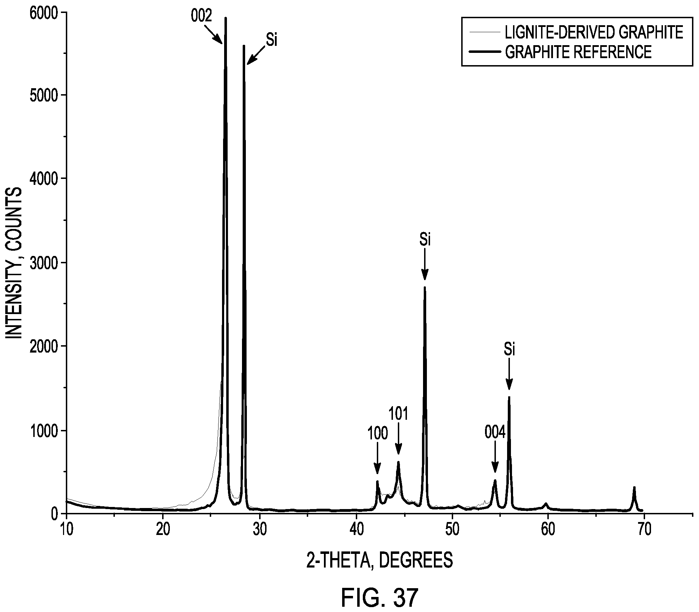

To further improve the quality of coal-derived graphite, additional experiments were conducted on North Dakota lignite to optimize the graphitization conditions. Since lignite is the least mature (lowest rank) among the four coals tested in this study, it is anticipated that the optimal conditions for graphitizing lignite will also work for the other coals that are more mature (higher rank). FIG. 37 shows an improved lignite-derived graphite XRD pattern compared with that of commercial reference LIB battery-grade graphite sample. Although there is still slight broadening at the base of the lignite-derived graphite 002 peak, the 2-theta angles are more similar in all regions, i.e., at the 002, 100, 101, and 004 peak positions. The broadness of the 100 and 101 peaks suggests that the graphene sheets in lignite-derived graphite have smaller lateral dimensions (sizes) than those in the reference graphite.

Quantitative graphitization parameters are presented in Table 18 for an initial sample set, with the corresponding diffraction patterns shown in FIG. 36 and an optimized lignite sample with diffraction pattern shown in FIG. 37. These are compared with a LIB-grade graphite as a reference. The reference sample shows a very good 2-theta angle, d-spacing, and 98% degree of graphitization (DoG). The coal-derived graphite samples initially graphitized at 2800°C for two hours show significant progress toward forming good quality graphite with relatively good quality diffraction patterns. However, the quantitative parameters show DoGs ranging from 12% to 80% and 2-theta and d-spacing parameters that deviate from those obtained for the reference sample. This indicates that optimization was needed. The optimization process was performed on lignite coal. The choice of lignite for optimization was strategic because lignite is the lowest coal rank, and any conditions that yield good quality graphite are also likely to yield good quality graphite for higher rank coals such as subbituminous, bituminous, and anthracite. The results presented in FIG. 37 and in Table 18 for the lignite-optimized sample are remarkable, with a DoG of 92% and 2-theta angle and d-spacing that are very close to those of the reference LIB-grade graphite.

**Table 18. Coal-Derived Graphite Parameters.**

| Sample | 2-Theta (degree) | d-spacing, Ǻ | DoG (%) |
|---|---|---|---|
| SAG-R Reference | 26.56 | 0.3356 | 97.71 |
| Anthracite | 26.44 | 0.3371 | 80.32 |
| Bituminous | 26.08 | 0.3417 | 27.17 |
| Subbituminous | 25.98 | 0.3430 | 12.14 |
| Lignite | 26.02 | 0.3424 | 18.16 |
| Lignite-Optimized | 26.52 | 0.3361 | 91.93 |

The terms and expressions that have been employed are used as terms of description and not of limitation, and there is no intention in the use of such terms and expressions of excluding any equivalents of the features shown and described or portions thereof, but it is recognized that various modifications are possible within the scope of the aspects of the present invention. Thus, it should be understood that although the present invention has been specifically disclosed by specific aspects and optional features, modification and variation of the concepts herein disclosed may be resorted to by those of ordinary skill in the art, and that such modifications and variations are considered to be within the scope of aspects of the present invention.

### Exemplary Aspects.

The following exemplary aspects are provided, the numbering of which is not to be construed as designating levels of importance:
Aspect 1 provides a method of carbonizing an upgraded coal, the method comprising:
   heating the upgraded coal in an inert environment, to form a carbonized upgraded coal.
Aspect 2 provides the method of Aspect 1, wherein the inert environment comprises argon, nitrogen, or a combination thereof.
Aspect 3 provides the method of any one of Aspects 1-2, wherein the heating comprises heating to a temperature of 500 °C to 2,000 °C for a duration of 10 min to 6 h.
Aspect 4 provides the method of any one of Aspects 1-3, wherein the heating comprises heating to a temperature of 550 °C to 1,650 °C for a duration of 20 min to 4 h.
Aspect 5 provides the method of any one of Aspects 1-4, wherein the heating comprises heating to a first temperature for a first duration, wherein the first temperature is in the range of 400 °C to 1,000 °C, and wherein the first duration is in the range of 10 min to 4 h.
Aspect 6 provides the method of Aspect 5, wherein the first temperature is in the range of 500 °C to 700 °C, and wherein the first duration is in the range of 15 min to 1 h.
Aspect 7 provides the method of any one of Aspects 5-6, wherein the heating comprises heating to the first temperature at a rate of 1 °C/min to 30 °C/min.
Aspect 8 provides the method of any one of Aspects 5-7, wherein the heating comprises heating to the first temperature at a rate of 5 °C/min to 15 °C/min.
Aspect 9 provides the method of any one of Aspects 5-8, wherein the heating further comprises heating to a second temperature higher than the first temperature for a second duration, wherein the second temperature is in the range of 600 °C to 1,500 °C, and wherein the second duration is in the range of 10 min to 4 h.
Aspect 10 provides the method of Aspect 9, wherein the second temperature is in the range of 900 °C to 1100 °C, and wherein the second duration is in the range of 15 min to 1 h.
Aspect 11 provides the method of any one of Aspects 9-10, wherein the heating comprises heating from the first temperature to the second temperature at a rate of 1 °C/min to 30 °C/min.
Aspect 12 provides the method of any one of Aspects 9-11, wherein the heating comprises heating from the first temperature to the second temperature at a rate of 5 °C/min to 15 °C/min.
Aspect 13 provides the method of any one of Aspects 9-12, wherein the method further comprises heating to a third temperature higher than the second temperature for a third duration, wherein the third temperature is in the range of 1,000 °C to 2,000 °C, and wherein the third duration is in the range of 30 min to 4 h.
Aspect 14 provides the method of Aspect 13, wherein the third temperature is in the range of 1,500 °C to 1,600 °C, and wherein the third duration is in the range of 1 h to 4 h.
Aspect 15 provides the method of any one of Aspects 13-14, wherein the heating comprises heating from the second temperature to the third temperature at a rate of 1 °C/min to 30 °C/min.
Aspect 16 provides the method of any one of Aspects 13-15, wherein the heating comprises heating from the second temperature to the third temperature at a rate of 5 °C/min to 15 °C/min.
Aspect 17 provides the method of any one of Aspects 1-16, wherein the carbonizing further comprises allowing the temperature to cool to 0 °C to 1000 °C.
Aspect 18 provides the method of any one of Aspects 1-17, wherein the carbonizing further comprises allowing the temperature to cool (e.g., under inert conditions) at a rate of 1 °C/min to 50 °C/min and/or for a duration of 1 h to 4 h or 1 h to 3 h. In various aspects, after the duration has expired, the application of heat can be ceased (e.g., the furnace can be shut off) to allow subsequent cooling to progress naturally.
Aspect 19 provides the method of any one of Aspects 1-18, wherein the carbonizing further comprises allowing the temperature to cool at a rate of 10 °C/min to 30 °C/min.
Aspect 20 provides the method of any one of Aspects 1-19, wherein the heating comprises:
   raising the temperature to 600 °C at 10 °C/min and holding at 600 °C for 30 min;
   ramping the temperature to 1000 °C at 10 °C/min and holding for 30 min; and
   ramping the temperature to 1600 °C at 6 °C/min and holding for 2 h.
Aspect 21 provides the method of any one of Aspects 1-20, wherein the upgraded coal is an upgraded lignite coal, and upgraded subbituminous coal, an upgraded bituminous coal, an upgraded anthracite coal, an upgraded coal waste, or a combination thereof.
Aspect 22 provides the method of any one of Aspects 1-21, wherein the upgraded coal is an upgraded lignite coal, an upgraded subbituminous coal, or a combination thereof.
Aspect 23 provides the method of any one of Aspects 1-22, wherein the yield of the carbonized upgraded coal from the upgraded coal is 30% to 99%.
Aspect 24 provides the method of any one of Aspects 1-23, wherein the yield of the carbonized upgraded coal from the upgraded coal is 40% to 60%.
Aspect 25 provides the method of any one of Aspects 1-24, wherein the carbonized upgraded coal has an ash content of 1 wt% to 20 wt%.
Aspect 26 provides the method of any one of Aspects 1-25, wherein the carbonized upgraded coal has an ash content of 2 wt% to 12 wt%.
Aspect 27 provides the method of any one of Aspects 1-26, wherein the carbonized upgraded coal has a fixed carbon (FC) content of 80 wt% to 99 wt%.
Aspect 28 provides the method of any one of Aspects 1-27, wherein the carbonized upgraded coal has a fixed carbon (FC) content of 85 wt% to 98 wt%.
Aspect 29 provides the method of any one of Aspects 1-28, wherein the carbonized upgraded coal comprises graphitic carbon and non-graphitic carbon.
Aspect 30 provides the method of any one of Aspects 1-29, wherein the upgraded coal comprises:
   an ash content of less than 5 wt%, or of 2 wt% to 12 wt%;
   an oxygen concentration of 10 wt% to 25 wt%; and
   a carbon concentration of 40 wt% to 75 wt%.
Aspect 31 provides the method of any one of Aspects 1-30, further comprising forming the upgraded coal.
Aspect 32 provides the method of Aspect 31, wherein forming the upgraded coal comprises
   cleaning coal to form a cleaned coal residue; and
   at least one of
   reacting the cleaned coal residue with an oxidizable inorganic metallic agent, and
   reacting the cleaned coal residue with a reducing agent,
   to form the upgraded coal.
Aspect 33 provides the method of Aspect 32, wherein the coal that is cleaned is a crushed coal, a particulate coal, a coal waste (e.g., weathered overburden, underburden, coal fines, and/or coal processing reject materials), or a combination thereof.
Aspect 34 provides the method of Aspect 33, wherein the crushed or particulate coal has a largest dimension of 25 mm or less.
Aspect 35 provides the method of any one of Aspects 33-34, wherein the crushed or particulate coal has a largest dimension of 1 micron to 25 mm.
Aspect 36 provides the method of any one of Aspects 33-35, wherein the crushed or particulate coal has a largest dimension of 1 micron to 10 mm.
Aspect 37 provides the method of any one of Aspects 32-36, wherein the cleaning of the coal comprises cleaning the coal with a mineral acid, cleaning the coal with a base, physically cleaning the coal, or a combination thereof.
Aspect 38 provides the method of any one of Aspects 32-37, wherein the cleaning of the coal comprises cleaning the coal with a base.
Aspect 39 provides the method of any one of Aspects 32-38, wherein the cleaning of the coal comprises physically cleaning the coal.
Aspect 40 provides the method of Aspect 39, wherein the physical cleaning comprises suspending the coal in an aqueous solution.
Aspect 41 provides the method of any one of Aspects 39-40, wherein the aqueous solution comprises a cesium chloride solution.
Aspect 42 provides the method of any one of Aspects 39-41, wherein the aqueous solution has a specific gravity of 1-2.
Aspect 43 provides the method of any one of Aspects 39-42, wherein the aqueous solution has a specific gravity of 1.4 to 1.6.
Aspect 44 provides the method of any one of Aspects 32-43, wherein the cleaning of the coal comprises cleaning the coal with a mineral acid.
Aspect 45 provides the method of Aspect 44, wherein the cleaning with the mineral acid removes one or more inorganic elements, thereby reducing the ash content of the coal.
Aspect 46 provides the method of any one of Aspects 44-45, wherein the mineral acid comprises phosphoric acid, sulfuric acid, boric acid, hydrofluoric acid, hydrobromic acid, perchloric acid, hydrochloric acid, nitric acid, or a combination thereof.
Aspect 47 provides the method of any one of Aspects 44-46, wherein the mineral acid comprises hydrochloric acid, nitric acid, or a combination thereof.
Aspect 48 provides the method of any one of Aspects 44-47, wherein the mineral acid comprises hydrochloric acid.
Aspect 49 provides the method of any one of Aspects 44-48, wherein the mineral acid comprises nitric acid.
Aspect 50 provides the method of any one of Aspects 44-49, wherein the mineral acid is 0.1 M to 10 M.
Aspect 51 provides the method of any one of Aspects 44-50, wherein the mineral acid is 1 M to 5 M.
Aspect 52 provides the method of any one of Aspects 44-51, wherein the mineral acid is 1 M to 1.5 M.
Aspect 53 provides the method of any one of Aspects 44-52, wherein a ratio of a volume of the mineral acid to a weight of the coal is 1:10 to 10:1.
Aspect 54 provides the method of any one of Aspects 44-53, wherein a ratio of a volume of the mineral acid to a weight of the coal is 2:1 to 4:1.
Aspect 55 provides the method of any one of Aspects 44-54, wherein the coal is cleaned with the mineral acid at a temperature of 30 °C to 100 °C.
Aspect 56 provides the method of any one of Aspects 44-55, wherein the coal is cleaned with the mineral acid at a temperature of 60 °C to 80 °C.
Aspect 57 provides the method of any one of Aspects 44-56, wherein the coal is cleaned with the mineral acid for a duration of 1 h to 72 h.
Aspect 58 provides the method of any one of Aspects 44-57, wherein the coal is cleaned with the mineral acid for a duration of 12 h to 36 h.
Aspect 59 provides the method of any one of Aspects 44-58, wherein the coal is cleaned with the mineral acid at atmospheric pressure.
Aspect 60 provides the method of any one of Aspects 44-59, wherein the method further comprises washing the cleaned coal residue with an aqueous liquid after the acid washing to wash the acid from the cleaned coal residue.
Aspect 61 provides the method of any one of Aspects 32-60, wherein the method further comprises drying the cleaned coal residue to remove water therefrom.
Aspect 62 provides the method of any one of Aspects 32-61, wherein the method further comprises crushing the cleaned coal residue to a smaller size than the coal prior to cleaning, wherein the smaller size comprises a largest dimension of 500 microns or less.
Aspect 63 provides the method of Aspect 62, wherein the smaller size comprises a largest dimension of 1 micron to 100 microns.
Aspect 64 provides the method of any one of Aspects 32-63, wherein the reacting of the cleaned coal residue with the oxidizable inorganic metallic agent is performed.
Aspect 65 provides the method of Aspect 64, wherein the reacting of the cleaned coal residue with the oxidizable inorganic metallic agent removes heteroatoms therefrom.
Aspect 66 provides the method of Aspect 65, wherein the heteroatoms comprise oxygen, sulfur, or a combination thereof.
Aspect 67 provides the method of any one of Aspects 64-66, wherein the reacting of the cleaned coal residue with the oxidizable inorganic metallic agent is performed in an autoclave.
Aspect 68 provides the method of any one of Aspects 64-67, wherein the oxidizable inorganic metallic agent comprises a salt comprising iron(II), cerium(III), manganese(II), cobalt(II), chromium(III), copper(I), tin(II), or a combination thereof.
Aspect 69 provides the method of any one of Aspects 64-68, wherein the oxidizable inorganic metallic agent comprises iron sulfate or a hydrate thereof.
Aspect 70 provides the method of any one of Aspects 64-69, wherein the oxidizable inorganic metallic agent comprises iron (II) sulfate heptahydrate (FeSO₄·7H₂O).
Aspect 71 provides the method of any one of Aspects 64-70, wherein the oxidizable inorganic metallic agent comprises iron chloride or a hydrate thereof.
Aspect 72 provides the method of any one of Aspects 64-71, wherein the oxidizable inorganic metallic agent comprises iron (II) chloride tetrahydrate (FeCl·4H₂O).
Aspect 73 provides the method of any one of Aspects 64-72, wherein the reaction of the cleaned coal residue with the oxidizable inorganic metallic agent is performed at 100 °C to 500 °C.
Aspect 74 provides the method of any one of Aspects 64-73, wherein the reaction of the cleaned coal residue with the oxidizable inorganic metallic agent is performed at 250 °C to 350 °C.
Aspect 75 provides the method of any one of Aspects 64-74, wherein the reaction of the cleaned coal residue with the oxidizable inorganic metallic agent is performed in an aqueous solvent.
Aspect 76 provides the method of any one of Aspects 64-75, wherein the reaction of the cleaned coal residue with the oxidizable inorganic metallic agent is performed under an inert gas.
Aspect 77 provides the method of any one of Aspects 64-76, wherein the reaction of the cleaned coal residue with the oxidizable inorganic metallic agent is performed under argon, nitrogen, or a combination thereof.
Aspect 78 provides the method of any one of Aspects 64-77, wherein the reaction of the cleaned coal residue with the oxidizable inorganic metallic agent is performed in an environment that has been evacuated and flushed with an inert gas one or more times.
Aspect 79 provides the method of any one of Aspects 64-78, wherein the reaction of the cleaned coal residue with the oxidizable inorganic metallic agent is performed in the substantial absence of oxygen.
Aspect 80 provides the method of any one of Aspects 64-79, wherein the reaction of the cleaned coal residue with the oxidizable inorganic metallic agent is performed for a duration of 30 min to 5 h.
Aspect 81 provides the method of any one of Aspects 64-80, wherein the reaction of the cleaned coal residue with the oxidizable inorganic metallic agent is performed for a duration of 1 h to 4 h.
Aspect 82 provides the method of any one of Aspects 64-81, wherein after the reaction of the cleaned coal residue with the oxidizable inorganic metallic agent, the reaction mixture is actively or passively cooled to room temperature.
Aspect 83 provides the method of any one of Aspects 64-82, wherein after the reaction of the cleaned coal residue with the oxidizable inorganic metallic agent, the cleaned coal residue is washed with water one or more times.
Aspect 84 provides the method of any one of Aspects 64-83, wherein after the reaction of the cleaned coal residue with the oxidizable inorganic metallic agent, the cleaned coal residue is dried to remove water therefrom.
Aspect 85 provides the method of any one of Aspects 32-84, wherein the reacting of the cleaned coal residue with the reducing agent is performed.
Aspect 86 provides the method of Aspect 85, wherein the reacting of the cleaned coal residue with the reducing agent removes organic functional groups from the cleaned coal residue.
Aspect 87 provides the method of Aspect 86, wherein the organic functional groups comprise carboxylic acids, carbonyl groups, ethers, aliphatic groups, or a combination thereof.
Aspect 88 provides the method of any one of Aspects 85-87, wherein the reacting of the cleaned coal residue with the reducing agent reduces C=O groups in the cleaned coal residue.
Aspect 89 provides the method of any one of Aspects 85-88, wherein the reducing agent comprises lithium aluminum hydride, sodium borohydride, diborane, 9-BBN, aluminum hydride, lithium borohydride, diisobutylaluminum hydride, or a combination thereof.
Aspect 90 provides the method of any one of Aspects 85-89, wherein the reducing agent comprises lithium aluminum hydride (LAH).
Aspect 91 provides the method of any one of Aspects 85-90, wherein the reacting of the cleaned coal residue with the reducing agent is conducted at 0 °C to 50 °C.
Aspect 92 provides the method of any one of Aspects 85-91, wherein the reacting of the cleaned coal residue with the reducing agent is conducted at room temperature.
Aspect 93 provides the method of any one of Aspects 85-92, wherein the reacting of the cleaned coal residue with the reducing agent is conducted for a duration of 1 min to 24 h.
Aspect 94 provides the method of any one of Aspects 85-93, wherein the reacting of the cleaned coal residue with the reducing agent is conducted for a duration of 10 min to 30 min.
Aspect 95 provides the method of any one of Aspects 85-94, wherein the reacting of the cleaned coal residue with the reducing agent is performed in an organic solvent.
Aspect 96 provides the method of any one of Aspects 85-95, wherein the reacting of the cleaned coal residue with the reducing agent is performed in diethylether.
Aspect 97 provides the method of any one of Aspects 85-96, further comprising working up the product of the reacting of the cleaned coal residue with the reducing agent with water.
Aspect 98 provides the method of any one of Aspects 85-97, further comprising drying the cleaned coal residue after performing the reacting of the cleaned coal residue with the reducing agent.
Aspect 99 provides the method of any one of Aspects 32-98, wherein both the reacting of the cleaned coal residue with the oxidizable inorganic metallic agent and the reacting of the cleaned coal residue with the reducing agent are performed.
Aspect 100 provides the method of Aspect 99, wherein the reacting of the cleaned coal residue with the oxidizable inorganic metallic agent is performed before the reacting of the cleaned coal residue with the reducing agent.
Aspect 101 provides the method of any one of Aspects 99-100, wherein the reacting of the cleaned coal residue with the oxidizable inorganic metallic agent is performed after the reacting of the cleaned coal residue with the reducing agent.
Aspect 102 provides the method of any one of Aspects 32-101, wherein the upgraded coal comprises an ash content of less than 5 wt%.
Aspect 103 provides the method of any one of Aspects 32-102, wherein the upgraded coal comprises an ash content of 0.5 to 2 wt%.
Aspect 104 provides the method of any one of Aspects 32-103, wherein the upgraded coal comprises an ash content that is 4 wt% to 15 wt% lower than an ash content of the coal prior to the cleaning.
Aspect 105 provides the method of any one of Aspects 32-104, wherein the upgraded coal comprises an oxygen content that is lower than an oxygen content of the coal prior to the cleaning.
Aspect 106 provides the method of any one of Aspects 32-105, wherein the upgraded coal comprises 1% to 50% less oxygen concentration than the coal prior to the cleaning.
Aspect 107 provides the method of any one of Aspects 32-106, wherein the upgraded coal comprises 15% to 25% less oxygen concentration than the coal prior to the cleaning.
Aspect 108 provides the method of any one of Aspects 32-107, wherein the upgraded coal comprises an oxygen concentration of 10 wt% to 25 wt%.
Aspect 109 provides the method of any one of Aspects 32-108, wherein the upgraded coal comprises 1% to 30% higher carbon concentration than the coal prior to the cleaning.
Aspect 110 provides the method of any one of Aspects 32-109, wherein the upgraded coal comprises 5% to 15% higher carbon concentration than the coal prior to the cleaning.
Aspect 111 provides the method of any one of Aspects 32-110, wherein the upgraded coal comprises a carbon concentration of 40 wt% to 75 wt%.
Aspect 112 provides the method of any one of Aspects 32-111, wherein the method comprises:
   cleaning coal having a largest dimension of 25 mm or less using a strong mineral acid at a temperature of 30 °C to 100 °C to form a cleaned coal residue; and
   at least one of
   reacting the cleaned coal residue at 100 °C to 500 °C under an inert gas with an oxidizable inorganic metallic agent comprising iron (II) sulfate heptahydrate (FeSO₄·7H₂O), iron (II) chloride tetrahydrate (FeCl·4H₂O), or a combination thereof, and
   reacting the cleaned coal residue at 0 °C to 50 °C in an organic solvent with a reducing agent comprising lithium aluminum hydride (LAH), sodium borohydride (NAH), or a combination thereof,
   to form the upgraded coal;
   wherein
   the upgraded coal has a lower ash content, as compared to the coal used to form the upgraded coal, and
   the upgraded coal has at least one of a lower oxygen concentration, a lower sulfur concentration, a lower nitrogen concentration, and a higher carbon concentration, as compared to the naturally-sourced coal used to form the upgraded coal.
Aspect 113 provides a method of carbonizing an upgraded coal, the method comprising:
   heating the upgraded coal in an inert environment, to form a carbonized upgraded coal;
   wherein the heating comprises
      heating to a first temperature for a first duration, wherein the first temperature is in the range of 500 °C to 700 °C, and wherein the first duration is in the range of 15 min to 1 h,
      heating to a second temperature higher than the first temperature for a second duration, wherein the second temperature is in the range of 900 °C to 1100 °C, and wherein the second duration is in the range of 15 min to 1 h,
      heating to a third temperature higher than the second temperature for a third duration, wherein the third temperature is in the range of 1,500 °C to 1,600 °C, and wherein the third duration is in the range of 1 h to 4 h, and
      allowing the temperature to cool to a temperature of 0 °C to 1000 °C at a rate of 1 °C/min to 50 °C/min and/or for a duration of 1 h to 4 h;
   wherein
      the carbonized upgraded coal has an ash content of 1 wt% to 20 wt%, and
      the carbonized upgraded coal has a fixed carbon (FC) content of 80 wt% to 99 wt%.
Aspect 114 provides a carbonized upgraded coal formed by the method of any one of Aspects 1-113.
Aspect 115 provides a carbonized upgraded coal comprising:
   a fixed carbon (FC) content of 85 wt% to 98 wt%, and
   an ash content of 2 wt% to 12 wt%.
Aspect 116 provides the method of any one of Aspects 1-113, wherein the method is a method of forming graphite, the method further comprising:
   graphitizing the carbonized upgraded coal, to form the graphite.
Aspect 117 provides the method of Aspect 116, wherein the graphitizing comprises heating the carbonized upgraded coal in an inert environment, to form the graphite.
Aspect 118 provides the method of Aspect 117, wherein the inert environment comprises argon, nitrogen, or a combination thereof.
Aspect 119 provides the method of any one of Aspects 117-118, wherein the heating comprises heating to a graphitization temperature in the range of 2500 °C to 3500 °C for a graphitization duration of 10 min to 10 h.
Aspect 120 provides the method of any one of Aspects 117-119, wherein the heating comprises heating to a graphitization temperature in the range of 2500 °C to 3000 °C for a duration of 30 min to 3 h.
Aspect 121 provides the method of any one of Aspects 119-120, wherein the heating comprises
   heating to the graphitization temperature for the graphitization duration a first time,
   allowing the temperature to cool to a temperature below the graphitization temperature, and
   heating to the graphitization temperature for the graphitization duration a second time.
Aspect 122 provides the method of Aspect 121, wherein the temperature below the graphitization temperature is 0 °C to 50 °C.
Aspect 123 provides the method of any one of Aspects 121-122, wherein the temperature below the graphitization temperature is 0 °C to 1000 °C.
Aspect 124 provides the method of any one of Aspects 117-123, wherein the heating comprises heating to a first graphitization temperature for a first graphitization duration, wherein the first graphitization temperature is in the range of 700 °C to 1700 °C, and wherein the first graphitization duration is in the range of 0.01 s to 4 h.
Aspect 125 provides the method of Aspect 124, wherein the first graphitization temperature is in the range of 1000 °C to 1500 °C, and wherein the first graphitization duration is in the range of 0.1 s to 20 min.
Aspect 126 provides the method of any one of Aspects 124-125, wherein the heating comprises heating to the first graphitization temperature at a rate of 5 °C/min to 100 °C/min.
Aspect 127 provides the method of any one of Aspects 124-126, wherein the heating comprises heating to the first graphitization temperature at a rate of 40 °C/min to 80 °C/min.
Aspect 128 provides the method of any one of Aspects 124-127, wherein the heating further comprises heating to a second graphitization temperature higher than the first graphitization temperature for a second graphitization duration, wherein the second graphitization temperature is in the range of 1250 °C to 2800 °C, and wherein the second graphitization duration is in the range of 0.01 s to 4 h.
Aspect 129 provides the method of Aspect 128, wherein the second graphitization temperature is in the range of 1500 °C to 2500 °C, and wherein the second graphitization duration is in the range of 0.1 s to 1 h.
Aspect 130 provides the method of any one of Aspects 128-129, wherein the heating comprises heating from the first graphitization temperature to the second graphitization temperature at a lower rate than heating to the first graphitization temperature.
Aspect 131 provides the method of any one of Aspects 128-130, wherein the heating comprises heating from the first graphitization temperature to the second graphitization temperature at a rate of 1 °C/min to 50 °C/min.
Aspect 132 provides the method of any one of Aspects 128-131, wherein the heating comprises heating from the first graphitization temperature to the second graphitization temperature at a rate of 10 °C/min to 30 °C/min.
Aspect 133 provides the method of any one of Aspects 128-132, wherein the heating further comprises heating to a third graphitization temperature higher than the second graphitization temperature for a third graphitization duration, wherein the third graphitization temperature is in the range of 2500 °C to 3500 °C, and wherein the third graphitization duration is in the range of 0.01 s to 4 h.
Aspect 134 provides the method of Aspect 133, wherein the third graphitization temperature is in the range of 2500 °C to 3000 °C, and wherein the third graphitization duration is in the range of 30 min to 3 h.
Aspect 135 provides the method of any one of Aspects 133-134, wherein the heating comprises heating from the second graphitization temperature to the third graphitization temperature at a lower rate than heating from the first graphitization temperature to the second graphitization temperature.
Aspect 136 provides the method of any one of Aspects 133-135, wherein the heating comprises heating from the second graphitization temperature to the third graphitization temperature at a rate of 1 °C/min to 30 °C/min.
Aspect 137 provides the method of any one of Aspects 133-136, wherein the heating comprises heating from the first graphitization temperature to the third graphitization temperature at a rate of 2 °C/min to 20 °C/min.
Aspect 138 provides the method of any one of Aspects 117-137, wherein the method further comprises allowing the graphite to cool to 0 °C to 1000 °C.
Aspect 139 provides the method of any one of Aspects 117-138, wherein the method further comprises allowing the graphite to cool (e.g., under inert conditions) at a rate of 1 °C/min to 50 °C/min and/or for a duration of 1 h to 4 h or 1 h to 3 h. In various aspects, after the duration has expired, the application of heat can be ceased (e.g., the furnace can be shut off) to allow subsequent cooling to progress naturally.
Aspect 140 provides the method of any one of Aspects 117-139, wherein the method further comprises allowing the graphite to cool at a rate of 10 °C/min to 30 °C/min.
Aspect 141 provides the method of any one of Aspects 117-140, wherein the heating comprises
   heating at about 60 °C/min to 1250 °C,
   heating at about 20 °C/min to 2500 °C, and
   heating at about 8 °C/min to 2800 °C.
Aspect 142 provides the method of any one of Aspects 116-141, wherein the graphite has a moisture content of about 0 wt%.
Aspect 143 provides the method of any one of Aspects 116-142, wherein the graphite has a moisture content of 0 wt% to 0.03 wt%.
Aspect 144 provides the method of any one of Aspects 116-143, wherein the graphite has an ash content of 0 wt% to 2 wt%.
Aspect 145 provides the method of any one of Aspects 116-144, wherein the graphite has an ash content of 0.0001 wt% to 0.03 wt%.
Aspect 146 provides the method of any one of Aspects 116-145, wherein the graphite has a carbon content of 98 wt% to 100 wt%.
Aspect 147 provides the method of any one of Aspects 116-146, wherein the graphite has a carbon content of 99 wt% to 99.9999 wt%.
Aspect 148 provides the method of any one of Aspects 116-147, wherein the graphite has a volatile matter (VM) content of 0.01 wt% to 2 wt%.
Aspect 149 provides the method of any one of Aspects 116-148, wherein the graphite has a volatile matter (VM) content of 0.1 wt% to 1.2 wt%.
Aspect 150 provides the method of any one of Aspects 116-149, wherein the graphite has an oxygen concentration of 0 wt% to 2 wt%.
Aspect 151 provides the method of any one of Aspects 116-150, wherein the graphite has an oxygen concentration of 0.001 wt% to 0.5 wt%.
Aspect 152 provides the method of any one of Aspects 116-151, wherein the graphite has a nitrogen concentration of 0 wt% to 2 wt%.
Aspect 153 provides the method of any one of Aspects 116-152, wherein the graphite has a nitrogen concentration of 0.001 wt% to 0.5 wt%.
Aspect 154 provides the method of any one of Aspects 116-153, wherein the graphite has a sulfur concentration of 0 wt% to 2 wt%.
Aspect 155 provides the method of any one of Aspects 116-154, wherein the graphite has a sulfur concentration of 0.001 wt% to 0.5 wt%.
Aspect 156 provides the method of any one of Aspects 116-155, wherein the graphite has a heteroatom content of 0 wt% to 2 wt%.
Aspect 157 provides the method of any one of Aspects 116-156, wherein the graphite comprises croissant graphite, needle-like graphite, isotropic blocky graphite, flake graphite, graphulerenite, 3D graphene stacks, or a combination thereof.
Aspect 158 provides the method of any one of Aspects 116-157, wherein the graphite comprises croissant graphite that comprises a croissant-like texture and shape.
Aspect 159 provides the method of any one of Aspects 116-158, wherein the graphite comprises croissant graphite that comprises 2D-graphene sheets spiral-wound or folded into ribbon-like structures.
Aspect 160 provides the method of any one of Aspects 116-159, wherein the croissant graphite comprises crystallinity comparable to that of natural flake graphite as measured by XRD.
Aspect 161 provides the method of any one of Aspects 116-160, wherein the graphite comprises 3D graphene stacks.
Aspect 162 provides the method of any one of Aspects 116-161, wherein the graphite comprises 3D graphene stacks that are directly attached to croissant graphite.
Aspect 163 provides the method of Aspect 162, wherein the 3D graphene stacks comprise internal hollow channels that run through the 3D graphene stacks longitudinally.
Aspect 164 provides the method of Aspect 162, wherein the internal channels are open on one or both longitudinal ends of the 3D graphene stack.
Aspect 165 provides the method of any one of 163-164, wherein the internal channels have a honeycomb arrangement when viewed from a longitudinal end of the 3D graphene stack.
Aspect 166 provides the method of any one of Aspects 116-165, wherein the graphite comprises graphulerenite.
Aspect 167 provides the method of Aspect 166, wherein the graphulerenite comprises graphite comprising a spherical external geometry, a plurality of approximately flat sides, and comprising a solid fill.
Aspect 168 provides the method of Aspect 167, wherein the solid fill comprises packed graphite flake layers.
Aspect 169 provides the method of any one of Aspects 116-168, wherein the method comprises controlling an ash content of the formed carbonized upgraded coal such that the ash content is within a first ash content range.
Aspect 170 provides the method of Aspect 169, wherein the first ash content range is 0 wt% to <5.6 wt%, or 0 wt% to <6.7 wt%, or 0 wt% to <7 wt%. If the carbonized upgraded coal has a particle size distribution that does not exceed 30 microns, the first ash content range can be 0 wt% to <7 wt% or 0 wt% to <6.7 wt%. If the carbonized upgraded coal has a particle size distribution that exceeds 30 microns, such as 0 to 44 microns or less, the first ash content range can be 0 wt% to <5.6 wt%.
Aspect 171 provides the method of any one of Aspects 169-170, wherein the graphite is substantially free of graphulerenite.
Aspect 172 provides the method of any one of Aspects 169-171, wherein graphulerenite is 0 wt% to 5 wt% of the graphite.
Aspect 173 provides the method of any one of Aspects 169-172, wherein graphulerenite is 0 wt% to 0.3 wt% of the graphite.
Aspect 174 provides the method of any one of Aspects 116-173, wherein the method comprises controlling an ash content of the formed carbonized upgraded coal such that the ash content is within a second ash content range.
Aspect 175 provides the method of Aspect 174, wherein the second ash content range is 5.6 wt% to 20 wt%, or 6.7 wt% to 20 wt%, or 7 wt% to 20 wt%. If the carbonized upgraded coal has a particle size distribution that does not exceed 30 microns, the second ash content range can be 7 wt% to 20 wt% or 6.7 wt% to 20 wt%. If the carbonized upgraded coal has a particle size distribution that exceeds 30 microns, such as 0 to 44 microns or less, the second ash content range can be 5.6 wt% to 20 wt%.
Aspect 176 provides the method of any one of Aspects 174-175, wherein the second ash content range is 5.6 wt% to 12 wt%, or 6.7 wt% to 12 wt%, or 7 wt% to 12 wt%.
Aspect 177 provides the method of any one of Aspects 174-176, wherein the graphite is substantially free of croissant graphite and/or 3D graphene stacks.
Aspect 178 provides the method of any one of Aspects 174-177, wherein croissant graphite and/or 3D graphene stacks are 0 wt% to 5 wt% of the graphite.
Aspect 179 provides the method of any one of Aspects 174-178, wherein croissant graphite and/or 3D graphene stacks are 0 wt% to 0.3 wt% of the graphite.
Aspect 180 provides the method of any one of Aspects 116-179, wherein the graphite has a degree of graphitization of 15% to 100%.
Aspect 181 provides the method of any one of Aspects 116-180, wherein the graphite has a degree of graphitization of 70% to 95%.
Aspect 182 provides a method of forming graphite, the method comprising:
   graphitizing carbonized upgraded coal, to form the graphite.
Aspect 183 provides a method of forming graphite, the method comprising:
   carbonizing upgraded coal, the carbonizing comprising heating the upgraded coal in an inert environment, to form a carbonized upgraded coal; and
   graphitizing the carbonized upgraded coal, to form the graphite, the graphitizing comprising heating the carbonized upgraded coal, the heating comprising
      heating to a first graphitization temperature for a first graphitization duration, wherein the first graphitization temperature is in the range of 1000 °C to 1500 °C, and wherein the first graphitization duration is in the range of 0.1 s to 20 min,
      heating to a second graphitization temperature higher than the first graphitization temperature for a second graphitization duration, wherein the second graphitization temperature is 1250 °C to 2800 °C, wherein the second graphitization duration is in the range of 0.1 s to 1 h,
      heating to a third graphitization temperature higher than the second graphitization temperature for a third graphitization duration, wherein the third graphitization temperature is in the range of 2500 °C to 3000 °C, and wherein the third graphitization duration is in the range of 30 min to 3 h, and
      allowing the graphite to cool to a temperature of 0 °C to 1000 °C at a rate of 1 °C/min to 50 °C/min and/or for a duration of 1 h to 4 h;
   wherein the graphite has a carbon content of 99 wt% to 100 wt%.
Aspect 184 provides a method of forming graphite, the method comprising:
   heating upgraded coal in an inert environment, to form a carbonized upgraded coal,
   wherein the heating comprises
   heating to a first temperature for a first duration, wherein the first temperature is in the range of 500 °C to 700 °C, and wherein the first duration is in the range of 15 min to 1 h,
   heating to a second temperature higher than the first temperature for a second duration, wherein the second temperature is in the range of 900 °C to 1100 °C, and wherein the second duration is in the range of 15 min to 1 h, and
   heating to a third temperature higher than the second temperature for a third duration, wherein the third temperature is in the range of 1,500 °C to 1,600 °C, and wherein the third duration is in the range of 1 h to 4 h,
   allowing the temperature to cool to 0 °C to 1000 °C at a rate of 1 °C/min to 50 °C/min and/or for a duration of 1 h to 4 h;
   wherein
   the carbonized upgraded coal has an ash content of 1 wt% to 20 wt%, and
   the carbonized upgraded coal has a fixed carbon (FC) content of 80 wt% to 99 wt%; and

   graphitizing the carbonized upgraded coal, to form the graphite, the graphitizing comprising heating the carbonized upgraded coal, the heating comprising
      heating to a first graphitization temperature for a first graphitization duration, wherein the first graphitization temperature is in the range of 1000 °C to 1500 °C, and wherein the first graphitization duration is in the range of 0.1 s to 20 min,
      heating to a second graphitization temperature higher than the first graphitization temperature for a second graphitization duration, wherein the second graphitization temperature is 1250 °C to 2800 °C, and wherein the second graphitization duration is in the range of 0.1 s to 1 h,
      heating to a third graphitization temperature higher than the second graphitization temperature for a third graphitization duration, wherein the third graphitization temperature is in the range of 2500 °C to 3000 °C, and wherein the third graphitization duration is in the range of 30 min to 3 h, and
      allowing the graphite to cool to a temperature of 0 °C to 1000 °C at a rate of 1 °C/min to 50 °C/min and/or for a duration of 1 h to 4 h;
   wherein the graphite has a carbon content of 99 wt% to 100 wt%.
Aspect 185 provides a method of forming graphite, the method comprising:
   cleaning coal to form a cleaned coal residue;
   at least one of
   reacting the cleaned coal residue with an oxidizable inorganic metallic agent, and reacting the cleaned coal residue with a reducing agent,
   to form an upgraded coal;
   heating the upgraded coal to a temperature of 500 °C to 2,000 °C in an inert environment, to form a carbonized upgraded coal; and
   heating the carbonized upgraded coal to a graphitization temperature in the range of 2500 °C to 3500 °C for a graphitization duration of 10 min to 10 h, to form the graphite.
Aspect 186 provides a method of forming graphite, the method comprising:
   cleaning coal having a largest dimension of 25 mm or less using a strong mineral acid at a temperature of 30 °C to 100 °C to form a cleaned coal residue; and
   at least one of
   reacting the cleaned coal residue at 100 °C to 500 °C under an inert gas with an oxidizable inorganic metallic agent comprising iron (II) sulfate heptahydrate (FeSO₄·7H₂O), iron (II) chloride tetrahydrate (FeCl·4H₂O), or a combination thereof, and
   reacting the cleaned coal residue at 0 °C to 50 °C in an organic solvent with a reducing agent comprising lithium aluminum hydride (LAH), sodium borohydride (NAH), or a combination thereof,
   to form an upgraded coal;
   wherein
   the upgraded coal has a lower ash content, as compared to the coal used to form the upgraded coal, and
   the upgraded coal has at least one of a lower oxygen concentration, a lower sulfur concentration, a lower nitrogen concentration, and a higher carbon concentration, as compared to the naturally-sourced coal used to form the upgraded coal;
   heating the upgraded coal to a temperature of 500 °C to 2,000 °C in an inert environment, to form a carbonized upgraded coal; and
   heating the carbonized upgraded coal to a graphitization temperature in the range of 2500 °C to 3500 °C for a graphitization duration of 10 min to 10 h, to form the graphite.
Aspect 187 provides a method of forming graphite, the method comprising:
   cleaning coal having a largest dimension of 25 mm or less using a strong mineral acid at a temperature of 30 °C to 100 °C to form a cleaned coal residue; and
   at least one of
   reacting the cleaned coal residue at 100 °C to 500 °C under an inert gas with an oxidizable inorganic metallic agent comprising iron (II) sulfate heptahydrate (FeSO₄·7H₂O), iron (II) chloride tetrahydrate (FeCl·4H₂O), or a combination thereof, and
   reacting the cleaned coal residue at 0 °C to 50 °C in an organic solvent with a reducing agent comprising lithium aluminum hydride (LAH), sodium borohydride (NAH), or a combination thereof,
   to form an upgraded coal;
      heating the upgraded coal in an inert environment, to form a carbonized upgraded coal, wherein the heating comprises
         heating to a first temperature for a first duration, wherein the first temperature is in the range of 500 °C to 700 °C, and wherein the first duration is in the range of 15 min to 1 h,
         heating to a second temperature higher than the first temperature for a second duration, wherein the second temperature is in the range of 900 °C to 1100 °C, and wherein the second duration is in the range of 15 min to 1 h,
         heating to a third temperature higher than the second temperature for a third duration, wherein the third temperature is in the range of 1,500 °C to 1,600 °C, and wherein the third duration is in the range of 1 h to 4 h, and
         allowing the temperature to cool to 0 °C to 1000 °C at a rate of 1 °C/min to 50 °C/min and/or for a duration of 1 h to 4 h;
      wherein
         the carbonized upgraded coal has an ash content of 1 wt% to 20 wt%, and
         the carbonized upgraded coal has a fixed carbon (FC) content of 80 wt% to 99 wt%; and
      graphitizing the carbonized upgraded coal, to form the graphite, the graphitizing comprising heating the carbonized upgraded coal, the heating comprising
         heating to a first graphitization temperature for a first graphitization duration, wherein the first graphitization temperature is in the range of 1000 °C to 1500 °C, and wherein the first graphitization duration is in the range of 0.1 s to 20 min,
         heating to a second graphitization temperature higher than the first graphitization temperature for a second graphitization duration, wherein the second graphitization temperature is 1250 °C to 2800 °C, and wherein the second graphitization duration is in the range of 0.1 s to 1 h,
         heating to a third graphitization temperature higher than the second graphitization temperature for a third graphitization duration, wherein the third graphitization temperature is in the range of 2500 °C to 3000 °C, and wherein the third graphitization duration is in the range of 30 min to 3 h, and
         allowing the graphite to cool to a temperature of 0 °C to 1000 °C at a rate of 1 °C/min to 50 °C/min and/or for a duration of 1 h to 4 h;
      wherein the graphite has a carbon content of 99 wt% to 100 wt%.
Aspect 188 provides a method of forming graphite, the method comprising:
   cleaning coal to form a cleaned coal residue;
   at least one of
      reacting the cleaned coal residue with an oxidizable inorganic metallic agent, and
      reacting the cleaned coal residue with a reducing agent,
   to form an upgraded coal;
   heating the upgraded coal to a temperature of 500 °C to 2,000 °C in an inert environment, to form a carbonized upgraded coal;
   controlling the cleaning and/or the reacting of the cleaned coal residue with the oxidizable inorganic metallic agent and/or the reacting of the cleaned coal residue with the reducing agent, such that the ash content of the carbonized upgraded coal is 0 wt% to <7 wt%; and
   heating the carbonized upgraded coal to a graphitization temperature in the range of 2500 °C to 3500 °C for a graphitization duration of 10 min to 10 h, to form the graphite, wherein
      graphulerenite is 0 wt% to 0.3 wt% of the graphite, or
      in the graphite a weight ratio of croissant graphite and/or 3D graphene stacks comprising internal longitudinal hollow channels to graphulerenite is equal to or greater than 100:1, or
      a combination thereof.
Aspect 189 provides a method of forming graphite, the method comprising:
   cleaning coal to form a cleaned coal residue;
   at least one of
      reacting the cleaned coal residue with an oxidizable inorganic metallic agent, and
      reacting the cleaned coal residue with a reducing agent,
   to form an upgraded coal;
   heating the upgraded coal to a temperature of 500 °C to 2,000 °C in an inert environment, to form a carbonized upgraded coal;
   controlling the cleaning and/or the reacting of the cleaned coal residue with the oxidizable inorganic metallic agent and/or the reacting of the cleaned coal residue with the reducing agent, such that the ash content of the carbonized upgraded coal is 5.6 wt% to 20 wt%; and
   heating the carbonized upgraded coal to a graphitization temperature in the range of 2500 °C to 3500 °C for a graphitization duration of 10 min to 10 h, to form the graphite, wherein
      croissant graphite and/or 3D graphene stacks comprising internal longitudinal hollow channels are 0 wt% to 0.3 wt% of the graphite, or
      in the graphite a weight ratio of graphulerenite to croissant graphite and/or 3D graphene stacks comprising internal longitudinal hollow channels is equal to or greater than 100:1, or
      a combination thereof.
Aspect 190 provides a graphite formed from the method of any one of Aspects 116-189.
Aspect 191 provides a graphite comprising:
   a carbonized and graphitized upgraded coal.
Aspect 192 provides a graphite comprising:
   croissant graphite that comprises a croissant-like texture and shape,
   graphulerenite that comprises a spherical external geometry, a plurality of approximately flat sides, and comprising a solid fill,
   3D graphene stacks comprising internal longitudinal hollow channels, or a combination thereof.
Aspect 193 provides an electrochemical cell comprising:
   an electrode that comprises the graphite of any one of Aspects 190-192.
Aspect 194 provides an electrochemical cell comprising:
   a cathode; and
   an anode comprising the graphite of any one of Aspects 190-192.
Aspect 195 provides a lithium-ion battery comprising the electrochemical cell of any one of Aspects 193-194.
Aspect 196 provides the method, carbonized upgraded coal, graphite, electrochemical cell, or lithium-ion battery of any one or any combination of Aspects 1-195 optionally configured such that all elements or options recited are available to use or select from.

## Claims

1. A method of carbonizing an upgraded coal, the method comprising:
heating the upgraded coal in an inert environment, to form a carbonized upgraded coal.

2. The method of claim 1, wherein the heating comprises heating to a temperature of 500 °C to 2,000 °C for a duration of 10 min to 6 h.

3. The method of claim 1, wherein a) the upgraded coal comprises an upgraded lignite coal, an upgraded subbituminous coal, an upgraded anthracite coal, an upgraded crushed coal, an upgraded particulate coal, an upgraded coal waste, or a combination thereof; or
b) the upgraded coal comprises:
an ash content of 2 wt% to 12 wt%;
an oxygen concentration of 10 wt% to 25 wt%; and
a carbon concentration of 40 wt% to 75 wt%.

4. The method of claim 1, wherein the method includes allowing the carbonized upgraded coal to cool to a temperature of 0 °C to 1000 °C over a duration of 1 h to 4 h.

5. The method of claim 1, wherein the carbonized upgraded coal has a fixed carbon (FC) content of 80 wt% to 99 wt%.

6. The method of claim 1, further comprising a) forming the upgraded coal, comprising cleaning coal to form a cleaned coal residue; and
at least one of
reacting the cleaned coal residue with an oxidizable inorganic metallic agent, and
reacting the cleaned coal residue with a reducing agent,
to form the upgraded coal; or
b) forming the upgraded coal, comprising
cleaning coal to form a cleaned coal residue; and
at least one of
reacting the cleaned coal residue with an oxidizable inorganic metallic agent, and
reacting the cleaned coal residue with a reducing agent,
to form the upgraded coal and wherein the method comprises:
cleaning coal having a largest dimension of 25 mm or less using a strong mineral acid at a temperature of 30 °C to 100 °C to form a cleaned coal residue; and
at least one of
reacting the cleaned coal residue at 100 °C to 500 °C under an inert gas with an oxidizable inorganic metallic agent comprising iron (II) sulfate heptahydrate (FeSO₄·7H₂O), iron (II) chloride tetrahydrate (FeCl·4H₂O), or a combination thereof, and
reacting the cleaned coal residue at 0 °C to 50 °C in an organic solvent with a reducing agent comprising lithium aluminum hydride (LAH), sodium borohydride (NAH), or a combination thereof,
to form the upgraded coal;
wherein
the upgraded coal has a lower ash content, as compared to the coal used to form the upgraded coal, and
the upgraded coal has at least one of a lower oxygen concentration, a lower sulfur concentration, a lower nitrogen concentration, and a higher carbon concentration, as compared to the naturally-sourced coal used to form the upgraded coal.

7. A carbonized upgraded coal formed by the method of any one of claims 1 to 6.

8. The method of claim 1, wherein the method is a method of forming graphite, the method further comprising:
graphitizing the carbonized upgraded coal, to form the graphite.

9. The method of claim 8, wherein the graphitizing comprises heating the carbonized upgraded coal in an inert environment to a graphitization temperature in the range of 2500 °C to 3500 °C for a graphitization duration of 10 min to 10 h, to form the graphite, and wherein the method further includes allowing the graphite to cool to 0 °C to 1000 °C over a duration of 1 h to 4 h.

10. The method of claim 8, wherein a) the graphite comprises croissant graphite that comprises a croissant-like texture and shape, the croissant graphite comprising 2D-graphene sheets spiral-wound or folded into ribbon-like structures; or
b) the graphite comprises
3D graphene stacks comprising internal longitudinal hollow channels,
graphulerenite that comprises a spherical external geometry, a plurality of approximately flat sides, and a solid fill, or
a combination thereof.

11. The method of claim 8, further comprising a) controlling the cleaning and/or the reacting of the cleaned coal residue with the oxidizable inorganic metallic agent and/or the reacting of the cleaned coal residue with the reducing agent, such that the ash content of the carbonized upgraded coal is 0 wt% to <7 wt%, wherein in the graphite a weight ratio of croissant graphite and/or 3D graphene stacks comprising internal longitudinal hollow channels to graphulerenite is equal to or greater than 100:1; or
b) controlling the cleaning and/or the reacting of the cleaned coal residue with the oxidizable inorganic metallic agent and/or the reacting of the cleaned coal residue with the reducing agent, such that the ash content of the carbonized upgraded coal is 5.6 wt% to 20 wt%, wherein in the graphite a weight ratio of graphulerenite to croissant graphite and/or 3D graphene stacks comprising internal longitudinal hollow channels is equal to or greater than 100:1.

12. The method of claim 8, wherein the graphite has a degree of graphitization of 70% to 95%.

13. A method of forming graphite, the method comprising:
cleaning coal to form a cleaned coal residue;
at least one of
reacting the cleaned coal residue with an oxidizable inorganic metallic agent, and reacting the cleaned coal residue with a reducing agent,
to form an upgraded coal;
heating the upgraded coal to a temperature of 500 °C to 2,000 °C in an inert environment, to form a carbonized upgraded coal;
controlling the cleaning and/or the reacting of the cleaned coal residue with the oxidizable inorganic metallic agent and/or the reacting of the cleaned coal residue with the reducing agent, such that the ash content of the carbonized upgraded coal is 0 wt% to <7 wt%; and
heating the carbonized upgraded coal to a graphitization temperature in the range of 2500 °C to 3500 °C for a graphitization duration of 10 min to 10 h, to form the graphite, wherein in the graphite a weight ratio of croissant graphite and/or 3D graphene stacks comprising internal longitudinal hollow channels to graphulerenite is equal to or greater than 100:1.

14. A method of forming graphite, the method comprising:
cleaning coal to form a cleaned coal residue;
at least one of
reacting the cleaned coal residue with an oxidizable inorganic metallic agent, and reacting the cleaned coal residue with a reducing agent,
to form an upgraded coal;
heating the upgraded coal to a temperature of 500 °C to 2,000 °C in an inert environment, to form a carbonized upgraded coal;
controlling the cleaning and/or the reacting of the cleaned coal residue with the oxidizable inorganic metallic agent and/or the reacting of the cleaned coal residue with the reducing agent, such that the ash content of the carbonized upgraded coal is 5.6 wt% to 20 wt%; and
heating the carbonized upgraded coal to a graphitization temperature in the range of 2500 °C to 3500 °C for a graphitization duration of 10 min to 10 h, to form the graphite, wherein in the graphite a weight ratio of graphulerenite to croissant graphite and/or 3D graphene stacks comprising internal longitudinal hollow channels is equal to or greater than 100:1.

15. A graphite formed from the method of any one of claims 8 to 14.

16. An electrochemical cell comprising:
a cathode; and
an anode comprising the graphite of claim 15.
